# EUROPÄISCHE PATENTSCHRIFT

(11) **EP 3 262 809 B1**
(45) Veröffentlichungstag und Bekanntmachung des Hinweises auf die Patenterteilung: **15.05.2019**
(21) Anmeldenummer: 16709684.1
(22) Anmeldetag: 18.02.2016
(51) Int. Cl.: H04W 4/10, H04W 76/45, H04W 84/08, H04L 29/06, G08G 5/00

(54) **KOMMUNIKATIONSSYSTEM ZUR SPRACHKOMMUNIKATION**
COMMUNICATIONS SYSTEM FOR SPEECH COMMUNICATION
SYSTÈME DE COMMUNICATION POUR COMMUNICATION VOCALE

(30) Priorität: 27.02.2015 AT 501582015
(43) Veröffentlichungstag der Anmeldung: 03.01.2018
(73) Patentinhaber: Frequentis AG, 1100 Wien (AT)
(72) Erfinder: SZABO, Ernst, 1140 Wien (AT); HAINDL, Bernhard, Schönberg 3562 (AT); MOHNL, Gerald, 3435 Zwentendorf (AT)
(74) Vertreter: Wildhack & Jellinek
(86) Internationale Anmeldenummer: PCT/AT2016/050031
(87) Internationale Veröffentlichungsnummer: WO 2016/134392

(56) Entgegenhaltungen:
- EP-A2- 1 460 870
- EP-A2- 2 767 451
- US-A- 5 365 590

## Beschreibung

Die Erfindung betrifft ein Kommunikationssystem zur Sprachkommunikation gemäß dem Oberbegriff der Patentansprüche 1 und 12 sowie ein Verfahren zur Sprachkommunikation gemäß dem Oberbegriff der Patentansprüche 23 und 36. Bei einem solchen Kommunikationssystem ist im Wesentlichen vorgesehen, dass Sprachsignale und Signalisierungsinformationen PTT/SQU von einem oder mehreren Arbeitsplätzen zu einem oder mehreren Funkeinrichtungen und umgekehrt übertragen werden können.

Die Patentschrift EP 1 460 870 A2 offenbart ein Verfahren und eine Vorrichtung zur Übertragung von Funksignalen zwischen einem Kommunikationssystem und Funksendern/-empfängern über ein Datennetzwerk. In der Flugsicherung können die Größe des Kommunikationssystems und auch die geografische Verteilung der einzelnen notwendigen Komponenten sehr unterschiedlich sein. Kleine Systeme, beispielsweise Tower-Systeme, können aus einigen wenigen Arbeitsplätzen und einigen wenigen Funksendeeinrichtungen und Funkempfangseinrichtungen bestehen, die unter Umständen sogar im selben Gebäude untergebracht sind. Größe Systeme, beispielsweise Flugsicherungszentralen, können aus vielen hunderten Arbeitsplätzen und entsprechend vielen Funksendeeinrichtungen und Funkempfangseinrichtungen an geografisch verteilten Standorten bestehen, wobei abhängig von der Konfiguration des Kommunikationssystems jeder Arbeitsplatz mit jeder Funkeinrichtung kommunizieren kann.

Für den Funkbetrieb kann der Fluglotse am Arbeitsplatz die für seinen Betrieb notwendigen Frequenzen, die er im TX-Betrieb besprechen und/oder im RX-Betrieb abhören will, auswählen. Für die Übermittlung von Sprachsignalen wird eine Bedieneinheit 113, 123, 133 betätigt, insbesondere PTT-Taste gedrückt, wobei daraufhin neben den am Arbeitsplatz aufgenommenen Sprachsignalen auch ein PTT-Signal zu einer Funksendeeinrichtung 51, 52, 53 übertragen wird. Aufgrund des PTT-Signals wird an der Funksendeeinrichtung 51, 52, 53 die HF-Aussendung mit dem aufmodulierten Sprachsignal vorgenommen. Wird von einer Funkempfangseinrichtung 61, 62, 63 ein HF-Signal empfangen, so wird das demodulierte Sprachsignal zusammen mit einem Empfangssignal SQU an die Arbeitsplätze 11, 12, 13 übertragen. Sprachsignale, die auf einer vom Arbeitsplatz ausgewählten Frequenz empfangen werden, werden am Lautsprecher oder im Headset dieses Arbeitsplatzes 11, 12, 13 ausgegeben und das zugehörige Empfangssignal SQU wird am Arbeitsplatz, z.B. am graphischen User-Interface, angezeigt.

Zusätzlich kann ein Fluglotse mindestens zwei oder mehrere Frequenzen miteinander verkoppeln, wobei dann alle Audiosignale, die von einer Funkempfangseinrichtung 61, 62, 63, die einer der verkoppelten Frequenzen zugeordnet ist, empfangen werden, auf den Funksendeeinrichtungen 51, 52, 53 der anderen Frequenzen ausgesendet werden. Welche Frequenzen ein Fluglotse tatsächlich auswählen kann, hängt von der Konfiguration des Arbeitsplatzes 11, 12, 13 ab, wobei diese Konfiguration auch getauscht werden kann.

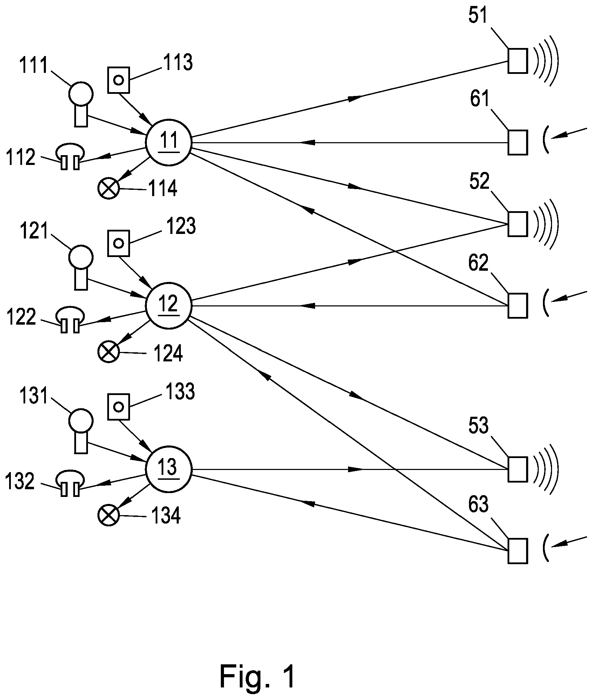

Ein aus dem Stand der Technik bekanntes Beispiel eines Kommunikationssystems ist in **Fig. 1** näher dargestellt. Ein üblicher aus dem Stand der Technik bekannter Funkarbeitsplatz 11, 12, 13 kann eine Elektronikeinheit oder einen PC aufweisen, die oder der mit einem Touch-Panel für die Bedienung, einem Mikrophon 111, 121, 131, einer Bedieneinheit 113, 123, 133 für die Auslösung des PTT-Signals, einem Headset 112, 122, 132 und einem optionalen Lautsprecher ausgerüstet ist. Sofern allgemein von einer Funkeinrichtung die Rede ist, wird hierunter eine Funksendeeinrichtung oder eine Funkempfangseinrichtung oder eine kombinierte Funksende- und Funkempfangseinrichtung verstanden.

Für den Fall, dass jeder Arbeitsplatz 11, 12, 13 mit einer Funksendeeinrichtung bzw. einer Funkempfangseinrichtung eine direkte Kommunikationsbeziehung aufbaut, führt die Funksendeeinrichtung 51, 52, 53 die Arbitrierung des auszusenden Sprachsignals durch und die Funkempfangseinrichtung 61, 62, 63 verteilt die empfangenen Sprachsignale an jene Arbeitsplätze 11, 12, 13, die diese Frequenz eingetastet haben. Jede Signalübertragung zwischen einem Arbeitsplatz 11, 12, 13 und einer Funkeinrichtung umfasst jeweils ein Sprachsignal und eine zugehörigen Signalisierungsinformation PTT oder SQU, die gleichzeitig mit dem Sprachsignal übertragen wird. Bei einer Signalübertragung von einem Arbeitsplatz 11, 12, 13 zu einer Funksendeeinrichtung wird das Vorhandensein des Sprachsignals durch ein Bediensignal PTT signalisiert. Die Signalübertragung zwischen der Funkempfangseinrichtung 61, 62, 63 zu einem Arbeitsplatz 11, 12, 13 umfasst nach dem Sprachsignal auch ein Empfangssignal SQU.

Ein Beispiel für mögliche Kommunikationsbeziehungen zwischen Arbeitsplätzen 11, 12, 13 und Funksendeeinrichtung 51, 52, 53 bzw. Funkempfangseinrichtung 61, 62, 63 ist in **Fig. 1** dargestellt, wobei jedem Arbeitsplatz 11, 12, 13 entsprechend seiner betrieblichen Konfiguration beliebig viele Funksendeeinrichtungen 51, 52, 53 und Funkempfangseinrichtungen 61, 62, 63 zugeteilt werden können. Im Extremfall ergibt sich damit eine *m*:*n* Kommunikationsbeziehungen zwischen *m* Arbeitsplätzen 11, 12, 13 und *n* Funksendeeinrichtungen 51, 52, 53 bzw. Funkempfangseinrichtungen 61, 62, 63. Damit ergibt sich das Problem, dass wenn ein Arbeitsplatz 11, 12, 13 auf *n* Funksendeeinrichtungen 51, 52, 53 gleichzeitig ein Sprachsignal aussendet, dass *n* Audioströme vom Arbeitsplatz ausgesendet werden müssen. Dadurch ist die notwendige Bandbreite für jeden einzelnen Arbeitsplatz 11, 12, 13 davon abhängig, an wie viele Funksendeeinrichtungen gleichzeitig das Sprachsignal des Arbeitsplatzes im Falle einer Funkaussendung übertragen wird, bzw. wie viele Funkempfangseinrichtungen von diesem Arbeitsplatz gleichzeitig abgehört werden. Für eine Funksendeeinrichtung ergibt sich andererseits das Problem, dass im Falle einer gleichzeitigen Aussendung von mehreren Arbeitsplätzen eine Vielzahl von Sprachsignalen zur Funksendeeinrichtung übertragen werden müssen, von denen eines zur tatsächlichen Aussendung ausgewählt wird. In Empfangsrichtung müssen Funkempfangseinrichtungen für jeden Arbeitsplatz, der diese Funkempfangseinrichtung abhört, ein Sprachsignal an den Arbeitsplatz übertragen. Die notwendige Bandbreite jeder Funkeinrichtung ist somit davon abhängig, wie viele Arbeitsplätze 11, 12, 13 gleichzeitig ein Sprachsignal an eine Funksendeeinrichtung 51, 52, 53 schicken bzw. wie viele Arbeitsplätze 11, 12, 13 das empfangene Audiosignal dieser Funkempfangseinrichtung 61, 62, 63 gleichzeitig abhören.

In modernen Funkkommunikationssystemen werden für lokale Anwendungen die Kommunikationsbeziehungen zwischen den Arbeitsplätzen 11, 12, 13 und den Funkeinrichtungen 51, 52, 53, 61, 62, 63 nicht direkt, sondern in einem Kommunikationssystem hergestellt und die Arbeitsplätze 11, 12, 13 bzw. die Funkeinrichtungen 51, 52, 53, 61, 62, 63 werden direkt an das Kommunikationssystem angebunden.

Ziel der Erfindung ist es, dass jeder Fluglotse, unabhängig davon, wo sich die Flugsicherungszentrale und damit sein Arbeitsplatz geographisch befinden, auf jede Funkfrequenz, egal wo sie sich geografisch befindet, zugreifen kann. Insbesondere ist es Ziel der Erfindung, dass mehrere Flugsicherungszentralen zu einer großen virtuellen Zentrale zusammengefasst werden, bzw. eine Zentrale die Aufgaben einer anderen übernehmen kann, ohne dass dabei die Struktur des Kommunikationssystems insgesamt geändert werden muss. Gleichzeitig soll bei der Übertragung der Sprachsignale über die notwendigen Netzwerke die benötigte Datenraten optimiert werden.

Die Erfindung überwindet die vorstehend genannten Probleme bei einem Kommunikationssystem der eingangs genannten Art mit den kennzeichnenden Merkmalen des Patentanspruchs 1.

Bei der Lösung dieser Aufgabe kann die Erfindung für die Übertragung von Sprach- und Signalisierungsinformationen über Weitverkehrsnetze WAN nutzen, wobei diese Datennetze so dimensioniert sind, dass in allen Betriebszuständen des Kommunikationssystems die geforderte Blockierungsfreiheit und die notwendige Qualität der Sprachübertragung gewährleistet sind.

Weiters hat die Erfindung das Ziel eine verbesserte Systemarchitektur zu schaffen, die die notwendige Bandbreite und die Qualitätsanforderungen an Übertragung an das vorhandene Netzwerk und an die Art der Anwendung, insbesondere für Tower-, Remote Tower-, ACC- oder Virtuelle ACC-Anwendungen, anpasst.

Gleichzeitig sollten die Hardware-Anforderungen an die Arbeitsplätze 11, 12, 13 reduziert werden und es sollte möglich sein, die Komponenten des Kommunikationssystems räumlich in Rechenzentren 8 zu konzentrieren, wobei die dynamische Verteilung von Audiosignalen entsprechend der *m*:*n* Kommunikationsmatrix zwischen den Arbeitsplätzen 11, 12, 13 und den Funkeinrichtungen 51, 52, 53, 61, 62, 63 in einem oder mehreren lokalen Netzwerken konzentriert wird. Der Bandbreitenbedarf in den zwischengeschalteten Weitverkehrsnetzwerken WAN soll möglichst verringert werden.

Für alle Komponenten des Kommunikationssystems, die über ein Netzwerk abgesetzt werden können, sollte der Bandbreitenbedarf deterministisch, minimiert und statisch und/oder konstant sein. Dies kann dann erreicht werden, wenn jede Komponente immer eine definierte Anzahl von Sprachsignalen über das Netzwerk schickt und die Verteilung dieser Sprachsignale zwischen den Komponenten im lokalen Netzwerk in einem Rechenzentrum 8 erfolgt.

Mit diesen Eigenschaften kann im Speziellen eine virtuelle ACC-Anwendung realisiert werden, wobei Arbeitsplätze 11, 12, 13, Rechenzentren 8, Kontrolleinheiten und Funkeinrichtungen geografisch verteilt an unterschiedlichen Orten betrieben werden und alle Arbeitsplätze unabhängig von ihrer geografischen Lokalisierung auf alle Funkeinrichtungen, die über ein Netzwerk erreicht werden können, zugreifen können. Dabei wird die notwendige Datenrate im Netzwerk minimiert und ist deterministisch und unabhängig davon, wie viele Funksendeeinrichtung bzw. Funkempfangseinrichtung ein Arbeitsplatz gleichzeitig bespricht oder abhört bzw. wie viele Arbeitsplätze einen Funksendeeinrichtung gleichzeitig besprechen bzw. von wie vielen Arbeitsplätzen eine Funkempfangseinrichtung abgehört wird.

Üblicherweise ist die Bandbreite der Netzwerksverbindungen zu den einzelnen Funkeinrichtungen begrenzt, wodurch es nicht möglich ist, beliebig viele Audiosignale zu einer Funkeinrichtungen zu übertragen und damit die Funksendeeinrichtung die Auswahl des auszusenden Sprachsignals treffen zu lassen. Des Weiteren sind Funkeinrichtungen oft nur in der Lage ein oder einige wenige Sprachsignale zu übertragen oder zu empfangen.

In Empfangsrichtung ist es ebenso nicht möglich, dass eine Funkempfangseinrichtung gleichzeitig das empfangene Sprachsignal an beliebig viele Arbeitsplätze 11, 12, 13, welche dieselbe Frequenz abhören möchten, überträgt.

Die Erfindung überwindet die vorstehend genannten Probleme und Nachteile bei einem Kommunikationssystem der eingangs genannten Art mit den kennzeichnenden Merkmalen des Patentanspruchs 1.

Bei einem Kommunikationssystem zur Sprachkommunikation mittels einer Anzahl von Arbeitsplätzen, insbesondere für Fluglotsen, sowie einer Anzahl von Funksendeeinrichtungen und Funkempfangseinrichtungen
- wobei jeder der Arbeitsplätze jeweils zumindest Folgendes aufweist:
   - zumindest eine Spracheingabeeinheit, insbesondere ein Mikrofon,
   - zumindest eine Sprachausgabeeinheit, insbesondere einen Lautsprecher oder Kopfhörer,
   - zumindest eine Bedieneinheit zum Erstellen eines Bediensignals, das angibt, dass vom jeweiligen Arbeitsplatz mittels einer Spracheingabeeinheit Sprachsignale an eine der Funksendeeinrichtungen übertragen werden sollen,
   - zumindest eine Anzeigeeinheit zur Anzeige eines Empfangssignals, das angibt, ob an der Sprachausgabeeinheit Sprachsignale von einer der Funkempfangseinrichtungen ausgegeben werden, sowie
   - zumindest eine Auswahleinheit zur Auswahl der Funksendeeinrichtungen und Funkempfangseinrichtungen, mit denen die Arbeitsplätze aufgrund von Steuersignalen eine Sprachverbindung aufbauen,
- wobei den Funksendeeinrichtungen die von den Spracheingabeeinheiten erstellten Sprachsignale sowie die von den Bedieneinheiten erstellten Bediensignale zugeführt sind und die Funksendeeinrichtung zur Abgabe der von einem Arbeitsplatz übertragenen Sprachsignale bei gleichzeitiger Übermittlung eines Bediensignals mittels Funk ausgebildet ist, und
- wobei die Funkempfangseinrichtungen zum Empfang von Sprachsignalen mittels Funk ausgebildet sind, die von den Funkempfangseinrichtungen empfangenen Sprachsignale den einzelnen Arbeitsplätzen zur Abgabe durch die Sprachausgabeeinheiten zugeführt sind, und die Funkempfangseinrichtungen während des Empfangs von Sprachsignalen sowie deren Weiterleitung jeweils ein Empfangssignal an die Arbeitsplätze übermitteln, ist vorgesehen,
dass im Signalweg zwischen den Arbeitsplätzen und den Funksendeeinrichtungen und zwischen den Arbeitsplätzen und den Funkempfangseinrichtungen eine Anzahl von Kontrolleinheiten vorgesehen ist, wobei jede Kontrolleinheit mit zumindest einer Funksendeeinrichtung und zumindest einer Funkempfangseinrichtung in Kommunikationsverbindung steht und dieser zugeordnet ist,
*wobei die derselben Kontrolleinheit zugeordneten Funksendeeinrichtungen und Funkempfangseinrichtungen, vorzugsweise dieselbe Funkfrequenz nutzen, und wobei insbesondere jede Funksendeeinrichtung und Funkempfangseinrichtung vorzugsweise nur einer einzigen Kontrolleinheit zugeordnet ist,*
dass mehrere Arbeitsplätze mit derselben Kontrolleinheit, insbesondere alle Arbeitsplätze mit allen Kontrolleinheiten, verbunden sind, dass die Kontrolleinheiten bei gleichzeitigem Vorliegen einer Vielzahl von Bediensignalen mehrerer Verteileinheiten die Sprachsignale einer der Verteileinheiten nach vorgegebenen oder vorgebbaren Kriterien auswählen oder die Sprachsignale mehrerer Arbeitsplätze nach vorgegebenen Kriterien überlagern und das so erhaltene ausgewählte oder überlagerte Sprachsignal zum Senden an die Funksendeeinrichtung übertragen, und dass die Kontrolleinheiten bei Vorliegen eines von der Funkempfangseinrichtung übermittelten Sprachsignals an die mit ihnen verbundenen Arbeitsplätze ein Empfangssignal übermitteln und die Sprachsignale an diese Arbeitsplätze übertragen.

Hierdurch wird insbesondere eine einfache Übertragung von Daten zu den Funkeinrichtungen mit deterministischer Datenrate erreicht. Weiters entfällt die Notwendigkeit, dass Funkeinrichtungen die ihr zugeführten Sprechfunkdaten arbitrieren.

Eine vorteilhafte Verknüpfung mehrerer Funksendeeinrichtungen bzw. Funkempfangseinrichtungen mit einer einzigen Kontrolleinheit kann erreicht werden, indem zumindest eine Kontrolleinheit mit einer Mehrzahl von Funksendeeinrichtungen verbunden ist, die Kontrolleinheit die bei ihr von einem Arbeitsplatz einlangenden Sprachsignale nur an eine der Funksendeeinrichtungen oder an alle mit ihr in Verbindung stehenden Funksendeeinrichtungen zur Übertragung übermittelt, und/oder die Kontrolleinheit die bei ihr von den Funkempfangseinrichtungen einlangenden Sprachsignale an die mit ihr in Sprachverbindung stehenden Arbeitsplätze übermittelt.

Um eine verbesserte Ausfallssicherheit von Funkeinrichtungen zu erreichen, kann vorgesehen sein, dass die Kontrolleinheit mit zumindest einer Funksendeeinrichtung und zumindest einer Backup-Funksendeeinrichtung verbunden ist und dass die Kontrolleinheit die Sprachsignale bei Funktionieren der Funksendeeinrichtung an diese überträgt und die Sprachsignale andernfalls an die Backup-Funksendeeinrichtung überträgt, und/oder dass die Kontrolleinheit mit zumindest einer Funkempfangseinrichtung und zumindest einer Backup-Funkempfangseinrichtung verbunden ist und dass die Kontrolleinheit bei Funktionieren der mit ihr verbundenen Funkempfangseinrichtung die ihr von der Funkempfangseinrichtung einlangenden Sprachsignale an die Arbeitsplätze verteilt und andernfalls die ihr von der Backup-Funkempfangseinrichtung einlangenden Sprachsignale an die Arbeitsplätze verteilt. Diese Ausfallsicherheit ist für jeden Arbeitsplatz gleich.

Eine verbesserte Integration mehrerer Rechenzentren, die gemeinsame Funkeinrichtungen nutzen, kann erreicht werden, indem im Signalweg zwischen einer Kontrolleinheit und der Funksendeeinrichtung zumindest eine übergeordnete Kontrolleinheit vorhanden ist, die übergeordnete Kontrolleinheit mit einer Anzahl von Kontrolleinheiten verbunden ist, wobei insbesondere jede dieser Kontrolleinheiten mit Gruppen von Arbeitsplätzen verbunden ist, der übergeordneten Kontrolleinheit die von den Kontrolleinheiten abgegebenen Sprachsignale und Bediensignale zugeführt sind, wobei die übergeordnete Kontrolleinheit bei gleichzeitiger Abgabe von Bediensignalen mehrerer mit ihr verbundener Kontrolleinheiten eine der Kontrolleinheiten nach vorgegebenen oder vorgebbaren Kriterien auswählt und die Sprachsignale der ausgewählten Kontrolleinheit an die Funksendeeinrichtung weiterleitet, und die übergeordnete Kontrolleinheit bei Empfang von Sprachsignale von der Funkempfangseinrichtung diese Sprachsignale an die mit der übergeordnete Kontrolleinheit verbundenen Kontrolleinheiten weiterleitet und ein Empfangssignal an diese Kontrolleinheiten überträgt.

Eine Weiterleitung von Funkdaten ausschließlich auf Anfrage der Arbeitsplätze kann erreicht werden, indem die Kontrolleinheiten oder die übergeordneten Kontrolleinheiten die bei ihnen einlangenden Sprachsignale sowie die jeweils zugehörigen Empfangssignale lediglich an eine Auswahl von Arbeitsplätzen oder Kontrolleinheiten übermitteln, wobei vorzugsweise die Kontrolleinheiten oder die übergeordneten Kontrolleinheiten diese Auswahl aufgrund von zuvor erfolgten Anforderungen durch die Arbeitsplätze oder die Kontrolleinheiten treffen.

Um bei einer Vielzahl von unterschiedlichen mit derselben Kontrolleinheit verbundenen Funksendeeinrichtungen dem jeweiligen Fluglotsen die Auswahl über die abgehörte Funksendeeinrichtung zu überlassen, kann vorgesehen sein, dass die unmittelbar mit den Funkempfangseinrichtungen verbundenen Kontrolleinheiten oder übergeordneten Kontrolleinheiten jeweils mit einer Mehrzahl von Funkempfangseinrichtungen der selben Frequenz verbunden sind und die bei ihnen von den Funkempfangseinrichtungen gleichzeitig einlangenden Sprachsignale bewerten und ein Bewertungssignal erstellen, das insbesondere
a) eine Reihung der einlangenden Sprachsignale nach der Signalqualität oder
b) das beste der einlangenden Sprachsignale
angibt, und die unmittelbar mit den Funkempfangseinrichtungen verbundenen Kontrolleinheiten oder übergeordneten Kontrolleinheiten das Bewertungssignal sowie die einzelnen Sprachsignale aller Funkempfangseinrichtungen oder das beste Sprachsignal an die Arbeitsplätze oder die Kontrolleinheiten weiterleiten.

Eine einfache und deterministische Art, eine gemeinsame Verkopplung von mehreren Frequenzen zu ermöglichen, sieht vor, dass eine Verkopplungseinheit vorhanden ist, die mit zwei oder mehreren Kontrolleinheiten und/oder übergeordneten Kontrolleinheiten verbunden ist, wobei die Verkopplungseinheit bei Einlangen von Sprachsignale sowie eines Empfangssignals von einer mit ihr verbundenen Kontrolleinheit oder übergeordneten Kontrolleinheit diese Sprachsignale sowie ein Bediensignal an die anderen mit ihr verbundenen Kontrolleinheiten und/oder übergeordneten Kontrolleinheiten weiterleitet.

Eine Arbitrierung kann mit der Verkopplungseinheit vorgenommen werden, indem die Verkopplungseinheit bei gleichzeitigem Einlangen von Sprachsignalen von zwei mit ihr verbundenen Kontrolleinheiten oder übergeordneten Kontrolleinheiten eine der Kontrolleinheiten oder übergeordneten Kontrolleinheiten nach vorgegebenen oder vorgebbaren Kriterien auswählt und nur die Sprachsignale der ausgewählten Kontrolleinheit oder übergeordneten Kontrolleinheit an die übrigen mit der Verkopplungseinheit verbundenen Kontrolleinheiten oder übergeordneten Kontrolleinheiten weiterleitet.

Um zu vermeiden, dass sensible Informationen aus geschützten Bereichen allgemein zugänglich gemacht werden, kann vorgesehen sein, dass in der Verkopplungseinheit Kriterien für die Weiterleitung von Daten einzelner Kontrolleinheiten oder übergeordneter Kontrolleinheiten an andere Kontrolleinheiten oder übergeordnete Kontrolleinheiten abgespeichert sind, und dass die Verkopplungseinheit die bei ihr einlangenden Sprachsignale nach diesen Kriterien an die mit ihr verbundenen Kontrolleinheiten oder übergeordneten Kontrolleinheiten überträgt.

Um eine einfache Übertragung von Sprachsignalen zwischen den Arbeitsplätzen und den Kontrolleinheiten mit deterministischer Datenrate zu erreichen, kann vorgesehen sein, dass das Kommunikationssystem eine Anzahl von Verteileinheiten umfasst, die jeweils einem Arbeitsplatz zugeordnet sind, wobei jedem Arbeitsplatz zumindest eine Verteileinheit zugeordnet ist, dass zwischen jeder der Verteileinheiten und dem dieser Verteileinheit zugeordneten Arbeitsplatz jeweils eine logische oder physische Datenverbindung mit einer vorgegebenen Bandbreite besteht, mit der Sprachsignale von jeder Spracheingabeeinheit und Sprachsignale zu jeder Sprachausgabeeinheit des Arbeitsplatzes sowie auch Bediensignale und Empfangssignale übertragbar sind, dass die Verteileinheit die ihr von Funkempfangseinrichtungen, insbesondere mittels der Kontrolleinheiten, zugehenden Sprachsignale nach einer aufgrund von Steuersignalen vorgegebenen Vorschrift konferiert oder überlagert und die daraus ermittelten Sprachsignale an den Arbeitsplatz übermittelt oder die von einer ausgewählten Funkempfangseinrichtung, insbesondere mittels einer der Kontrolleinheiten, einlangenden Sprachsignale an den Arbeitsplatz weiterleitet und für den Fall, dass überhaupt Sprachsignale vorliegen, ein Empfangssignal an den Arbeitsplatz weiterleitet, und dass die Verteileinheit ihr vom Arbeitsplatz übermittelte Sprachsignale und Bediensignale an vorab mittels Steuersignalen ausgewählte Funksendeeinrichtungen, insbesondere mittels einer der Kontrolleinheiten, übermittelt.

Eine netzwerktechnisch einfach zu realisierende Variante, mit der die Übermittlung großer Datenmengen über weite Strecke vermieden wird, sieht vor, dass die Verteileinheiten als Proxy-Rechner in einem Rechenzentrum angeordnet sind und auch die Kontrolleinheiten in diesem Rechenzentrum angeordnet sind, wobei die Kontrolleinheiten und die Verteileinheiten jeweils über ein lokales Netzwerk miteinander verbunden sind.

Um über einen Arbeitsplatz voneinander getrennte Kommunikationskanäle zu betreiben, kann vorgesehen sein, dass ein Arbeitsplatz mehrere Spracheingabeeinheiten und/oder mehrere Sprachausgabeeinheiten aufweist, wobei das Kommunikationssystem für jede Spracheingabeeinheit jeweils eine gesonderte Datenverbindung zu einer dem Arbeitsplatz zugeordneten Verteileinheit aufweist, und wobei das Kommunikationssystem für jede Sprachausgabeeinheit jeweils eine gesonderte Datenverbindung zu einer dem Arbeitsplatz zugeordneten Verteileinheit aufweist.

Um bei einer Vielzahl von unterschiedlichen mit derselben Kontrolleinheit verbundenen Funksendeeinrichtungen dem jeweiligen Fluglotsen die Auswahl über die abgehörte Funksendeeinrichtung zu überlassen und gleichzeitig die über einen weiten Weg zu übertragende Datenmenge gering zu halten, kann vorgesehen sein, dass die Kontrolleinheit das Bewertungssignal an die Verteileinheit übermittelt und die Verteileinheit aufgrund des Bewertungssignals eines der von der jeweiligen Kontrolleinheit übermittelten Sprachsignale auswählt oder aufgrund des Bewertungssignals mehrere der von der jeweiligen Kontrolleinheit übermittelten Sprachsignale miteinander überlagert und das ausgewählte oder überlagerte Signal an den Arbeitsplatz übermittelt.

Weiters betrifft die Erfindung ein Kommunikationssystem zur Sprachkommunikation mittels einer Anzahl von Arbeitsplätzen, insbesondere für Fluglotsen, sowie einer Anzahl von Funksendeeinrichtungen und Funkempfangseinrichtungen
- wobei jeder der Arbeitsplätze jeweils zumindest Folgendes aufweist:
   - zumindest eine Spracheingabeeinheit, insbesondere ein Mikrofon,
   - zumindest eine Sprachausgabeeinheit, insbesondere einen Lautsprecher,
   - zumindest eine Bedieneinheit zum Erstellen eines Bediensignals, das angibt, dass vom jeweiligen Arbeitsplatz mittels einer Spracheingabeeinheit Sprachsignale an eine der Funksendeeinrichtungen übertragen werden sollen,
   - zumindest eine Anzeigeeinheit zum Empfang eines Empfangssignals, das angibt, ob an der Sprachausgabeeinheit Sprachsignale von einer der Funkempfangseinrichtungen ausgegeben werden, sowie
   - zumindest eine Auswahleinheit zur Auswahl der Funksendeeinrichtungen und Funkempfangseinrichtungen, mit denen die Arbeitsplätze aufgrund von Steuersignalen eine Sprachverbindung aufbauen,
- wobei den Funksendeeinrichtungen die von den Spracheingabeeinheiten erstellten Sprachsignale sowie die von den Bedieneinheiten erstellten Bediensignale zugeführt sind und die Funksendeeinrichtung zur Abgabe der von einem Arbeitsplatz übertragenen Sprachsignale bei gleichzeitiger Übermittlung eines Bediensignals mittels Funk ausgebildet ist, und
- wobei die Funkempfangseinrichtungen zum Empfang von Sprachsignalen mittels Funk ausgebildet sind, die von den Funkempfangseinrichtungen empfangenen Sprachsignale den einzelnen Arbeitsplätzen zur Abgabe durch die Sprachausgabeeinheiten zugeführt sind, und die Funkempfangseinrichtungen während des Empfangs von Sprachsignalen sowie deren Weiterleitung jeweils ein Empfangssignal an die Arbeitsplätze übermitteln. Bei diesem ist vorgesehen, dass das Kommunikationssystem eine Anzahl von Verteileinheiten umfasst, die jeweils einem Arbeitsplatz zugeordnet sind, wobei jedem Arbeitsplatz zumindest eine Verteileinheit zugeordnet ist, dass zwischen jeder der Verteileinheiten und dem dieser Verteileinheit zugeordneten Arbeitsplatz jeweils eine logische oder physische Datenverbindung mit einer vorgegebenen Bandbreite besteht, mit der Sprachsignale von jeder Spracheingabeeinheit und Sprachsignale zu jeder Sprachausgabeeinheit des Arbeitsplatzes sowie auch Bediensignale und Empfangssignale übertragbar sind, dass die Verteileinheit die ihr von Funkempfangseinrichtungen, insbesondere mittels der Kontrolleinheiten, zugehenden Sprachsignale nach einer aufgrund von Steuersignalen vorgegebenen Vorschrift konferiert oder überlagert und die daraus ermittelten Sprachsignale an den Arbeitsplatz übermittelt oder die von einer ausgewählten Funkempfangseinrichtung, insbesondere mittels einer der Kontrolleinheiten, einlangenden Sprachsignale an den Arbeitsplatz weiterleitet und für den Fall, dass überhaupt Sprachsignale vorliegen, ein Empfangssignal an den Arbeitsplatz weiterleitet, und dass die Verteileinheit ihr vom Arbeitsplatz übermittelte Sprachsignale und Bediensignale an vorab mittels Steuersignalen ausgewählte Funksendeeinrichtungen, insbesondere mittels einer der Kontrolleinheiten, übermittelt. Hierdurch wird insbesondere eine einfache Übertragung von Sprachsignalen zwischen den Arbeitsplätzen und den Kontrolleinheiten mit deterministischer Bandbreite erreicht.

Weiters kann vorteilhaft vorgesehen sein,
- dass im Signalweg zwischen den Verteileinheiten und den Funksendeeinrichtungen und zwischen den Arbeitsplätzen und den Funkempfangseinrichtungen eine Anzahl von Kontrolleinheiten vorgesehen ist, wobei jede Kontrolleinheit mit zumindest einer Funksendeeinrichtung und zumindest eine Funkempfangseinrichtung in Verbindung steht und dieser zugeordnet ist,
*wobei die derselben Kontrolleinheit zugeordneten Funksendeeinrichtungen und Funkempfangseinrichtungen, vorzugsweise dieselbe Funkfrequenz nutzen, und wobei insbesondere jede Funksendeeinrichtung und Funkempfangseinrichtung nur einer einzigen Kontrolleinheit zugeordnet ist,*
dass mehrere Verteileinheiten mit derselben Kontrolleinheit, insbesondere alle Verteileinheiten mit allen Kontrolleinheiten, verbunden sind, dass die Kontrolleinheiten bei gleichzeitigem Vorliegen einer Vielzahl von Bediensignalen mehrerer Verteileinheiten die Sprachsignale einer der Verteileinheiten nach vorgegebenen oder vorgebbaren Kriterien auswählen oder die Sprachsignale mehrerer Arbeitsplätze nach vorgegebenen Kriterien überlagern und das so erhaltene ausgewählte oder überlagerte Sprachsignal zum Senden an die Funksendeeinrichtung übertragen, und dass die Kontrolleinheiten bei Vorliegen eines von der Funkempfangseinrichtung übermittelten Sprachsignals an die mit ihr verbundenen Verteileinheiten ein Empfangssignal übermitteln und die Sprachsignale an diese Verteileinheiten übertragen. Hierdurch wird insbesondere eine einfache Übertragung von Daten zu den Funkeinrichtungen mit deterministischer Datenrate erreicht. Weiters entfällt die Notwendigkeit, dass Funkeinrichtungen die ihr zugeführten Sprechfunkdaten arbitrieren.

Eine vorteilhafte Verknüpfung mehrerer Funksendeeinrichtungen bzw. Funkempfangseinrichtungen mit einer einzigen Kontrolleinheit kann erreicht werden, indem zumindest eine Kontrolleinheit mit einer Mehrzahl von Funksendeeinrichtungen verbunden ist, die Kontrolleinheit die bei ihr von einer Verteileinheit einlangenden Sprachsignale nur an eine der Funksendeeinrichtungen oder an alle mit ihr in Verbindung stehenden Funksendeeinrichtungen zur Übertragung übermittelt, und die Kontrolleinheit die bei ihr von den Funkempfangseinrichtungen einlangenden Sprachsignale an die mit ihr in Sprachverbindung stehenden Verteileinheiten übermittelt.

Um eine verbesserte Ausfallssicherheit von Funkeinrichtungen zu erreichen, kann vorgesehen sein, dass die Kontrolleinheit mit zumindest einer Funksendeeinrichtung und zumindest einer Backup-Funksendeeinrichtung verbunden ist und dass die Kontrolleinheit die Sprachsignale bei Funktionieren der Funksendeeinrichtung an diese überträgt und die Sprachsignale andernfalls an die Backup-Funksendeeinrichtung überträgt, und/oder dass die Kontrolleinheit mit zumindest einer Backup-Funkempfangseinrichtung verbunden ist und dass die Kontrolleinheit bei Funktionieren der mit ihr verbundenen Funkempfangseinrichtung die ihr von der Funkempfangseinrichtung einlangenden Sprachsignale an die Verteileinheiten verteilt und andernfalls die ihr von der Backup-Funkempfangseinrichtung einlangenden Sprachsignale an die Verteileinheiten verteilt. Diese Ausfallsicherheit ist für jeden Arbeitsplatz gleich.

Eine verbesserte Integration mehrerer Rechenzentren, die gemeinsame Funkeinrichtungen nutzen, kann erreicht werden, indem im Signalweg zwischen einer Kontrolleinheit und der Funksendeeinrichtung zumindest eine übergeordnete Kontrolleinheit vorhanden ist, die übergeordnete Kontrolleinheit mit einer Anzahl von Kontrolleinheiten verbunden ist, wobei insbesondere jede dieser Kontrolleinheiten mit Gruppen jeweils voneinander verschiedener Verteileinheiten sowie Arbeitsplätzen verbunden ist, der übergeordneten Kontrolleinheit die von den Kontrolleinheiten abgegebenen Sprachsignale und Bediensignale zugeführt sind, wobei die übergeordnete Kontrolleinheit bei gleichzeitiger Abgabe von Bediensignalen mehrerer mit ihr verbundener Kontrolleinheiten eine der Kontrolleinheiten nach vorgegebenen oder vorgebbaren Kriterien auswählt und die Sprachsignale der ausgewählten Kontrolleinheit an die Funksendeeinrichtung weiterleitet, und die übergeordnete Kontrolleinheit bei Empfang von Sprachsignale von der Funkempfangseinrichtung diese Sprachsignale an die mit der übergeordnete Kontrolleinheit verbundenen Kontrolleinheiten weiterleitet und ein Empfangssignal an diese Kontrolleinheiten überträgt.

Eine Weiterleitung von Funkdaten ausschließlich auf Anfrage der Arbeitsplätze kann erreicht werden, indem die Kontrolleinheiten oder die übergeordneten Kontrolleinheiten die bei ihnen einlangenden Sprachsignale sowie das jeweils zugehörige Empfangssignal lediglich an eine Auswahl von Verteileinheiten oder Kontrolleinheiten übermitteln, wobei vorzugsweise die Kontrolleinheiten oder die übergeordneten Kontrolleinheiten diese Auswahl aufgrund von zuvor erfolgten Anforderungen durch die Arbeitsplätze oder die Kontrolleinheiten treffen.

Um bei einer Vielzahl von unterschiedlichen mit derselben Kontrolleinheit verbundenen Funksendeeinrichtungen dem jeweiligen Fluglotsen die Auswahl über die abgehörte Funksendeeinrichtung zu überlassen, kann vorgesehen sein, dass die unmittelbar mit den Funkempfangseinrichtungen verbundenen Kontrolleinheiten oder übergeordneten Kontrolleinheiten jeweils mit einer Mehrzahl von Funkempfangseinrichtungen verbunden sind und die bei ihnen von den Funkempfangseinrichtungen einlangenden Sprachsignale bewerten und ein Bewertungssignal erstellen,
das insbesondere
a) eine Reihung der einlangenden Sprachsignale nach der Signalqualität oder
b) das beste der einlangenden Sprachsignale
angibt,
und die unmittelbar mit den Funkempfangseinrichtungen verbundenen Kontrolleinheiten oder übergeordneten Kontrolleinheiten das Bewertungssignal sowie die einzelnen Sprachsignale aller Funkempfangseinrichtungen an die Verteileinheit oder die Kontrolleinheiten weiterleiten.

Um bei einer Vielzahl von unterschiedlichen mit derselben Kontrolleinheit verbundenen Funksendeeinrichtungen dem jeweiligen Fluglotsen die Auswahl über die abgehörte Funksendeeinrichtung zu überlassen und gleichzeitig die über einen weiten Weg zu übertragende Datenmenge gering zu halten, kann vorgesehen sein, dass die Kontrolleinheit das Bewertungssignal an die Verteileinheit übermittelt und die Verteileinheit aufgrund des Bewertungssignals eines der von der jeweiligen Kontrolleinheit übermittelten Sprachsignale auswählt oder aufgrund des Bewertungssignals mehrere der von der jeweiligen Kontrolleinheit übermittelten Sprachsignale miteinander überlagert und das ausgewählte oder überlagerte Signal an den jeweiligen mit der Verteileinheit verbundenen Arbeitsplatz übermittelt.

Eine einfache und deterministische Art, eine gemeinsame Verkopplung vonmehreren Frequenzen zu ermöglichen, sieht vor, dass eine Verkopplungseinheit vorhanden ist, die mit zwei oder mehreren Kontrolleinheiten und/oder übergeordneten Kontrolleinheiten verbunden ist, wobei die Verkopplungseinheit bei Einlangen von Sprachsignale sowie eines Empfangssignals von einer mit ihr verbundenen Kontrolleinheit oder übergeordneten Kontrolleinheit diese Sprachsignale sowie ein Bediensignal an die anderen mit ihr verbundenen Kontrolleinheiten und/oder übergeordneten Kontrolleinheiten weiterleitet.

Eine Arbitrierung kann mit der Verkopplungseinheit vorgenommen werden, indem die Verkopplungseinheit bei gleichzeitigem Empfang von Sprachsignalen von zwei mit ihr verbundenen Kontrolleinheiten oder übergeordneten Kontrolleinheiten eine der Kontrolleinheiten oder übergeordneten Kontrolleinheiten nach vorgegebenen oder vorgebbaren Kriterien auswählt und nur die Sprachsignale der ausgewählten Kontrolleinheit oder übergeordneten Kontrolleinheit an die übrigen mit der Verkopplungseinheit verbundenen Kontrolleinheiten oder übergeordneten Kontrolleinheiten weiterleitet.

Um zu vermeiden, dass sensible Informationen aus geschützten Bereichen allgemein zugänglich gemacht werden, kann vorgesehen sein, dass in der Verkopplungseinheit Kriterien für die Weiterleitung von Daten einzelner Kontrolleinheiten oder übergeordneter Kontrolleinheiten an andere Kontrolleinheiten oder übergeordnete Kontrolleinheiten abgespeichert sind, und die Verkopplungseinheit die bei ihr einlangenden Sprachsignale nach diesen Kriterien an die mit ihr verbundenen Kontrolleinheiten oder übergeordneten Kontrolleinheiten überträgt.

Eine netzwerktechnisch einfach zu realisierende Variante, mit der die Übermittlung großer Datenmengen über weite Strecke vermieden wird, sieht vor, dass die Verteileinheiten als Proxy-Rechner in einem Rechenzentrum angeordnet sind und auch die Kontrolleinheiten in diesem Rechenzentrum angeordnet sind, wobei die Kontrolleinheiten und die Verteileinheiten jeweils über ein lokales Netzwerk miteinander verbunden sind.

Um über einen Arbeitsplatz voneinander getrennte Kommunikationskanäle zu betreiben, kann vorgesehen sein, dass ein Arbeitsplatz mehrere Spracheingabeeinheiten und/oder mehrere Sprachausgabeeinheiten aufweist, wobei das Kommunikationssystem für jede Spracheingabeeinheit jeweils eine gesonderte Datenverbindung zu einer dem Arbeitsplatz zugeordneten Verteileinheit aufweist, und wobei das Kommunikationssystem für jede Sprachausgabeeinheit jeweils eine gesonderte Datenverbindung zu einer dem Arbeitsplatz zugeordneten Verteileinheit aufweist.

Bei einem Verfahren zur Übertragung von Sprachdaten von einer Anzahl von Arbeitsplätzen, insbesondere für Fluglotsen, umfassend jeweils:
- zumindest eine Spracheingabeeinheit, insbesondere ein Mikrofon,
- zumindest eine Sprachausgabeeinheit, insbesondere einen Lautsprecher oder Kopfhörer,
- zumindest eine Bedieneinheit zum Erstellen eines Bediensignals, das angibt, dass vom jeweiligen Arbeitsplatz mittels einer Spracheingabeeinheit Sprachsignale an eine der Funksendeeinrichtungen übertragen werden sollen,
- zumindest eine Anzeigeeinheit zur Anzeige eines Empfangssignals, das angibt, ob an der Sprachausgabeeinheit Sprachsignale von einer der Funkempfangseinrichtungen ausgegeben werden, sowie
- zumindest eine Auswahleinheit zur Auswahl der Funksendeeinrichtungen und Funkempfangseinrichtungen, mit denen die Arbeitsplätze aufgrund von Steuersignalen eine Sprachverbindung aufbauen,
mittels einer Anzahl von Funksendeeinrichtungen und Funkempfangseinrichtungen,
- wobei die von den Spracheingabeeinheiten erstellten Sprachsignale sowie die von den Bedieneinheiten erstellten Bediensignale an die Funksendeeinrichtungen übertragen werden, und die von einem Arbeitsplatz abgegebenen Sprachsignale an die Funksendeeinrichtung weitergeleitet werden und bei gleichzeitiger Übermittlung eines Bediensignals vom Arbeitsplatz von dieser mittels Funk abgesendet werden,
- wobei die Funkempfangseinrichtungen Sprachsignale mittels Funk empfangen und diese Sprachsignale an die Arbeitsplätze weitergeleitet werden und mit den Sprachausgabeeinheiten ausgegeben werden, wobei während des Empfangs von Sprachsignale sowie während der Weiterleitung der Sprachsignale an die Arbeitsplätze jeweils ein Empfangssignal an jeweiligen den Arbeitsplatz übermittelt wird und von der Anzeigeeinheit angezeigt wird,
ist vorgesehen, dass Sprachdaten von den Arbeitsplätzen zu den Funksendeeinrichtungen und Funkempfangseinrichtungen über Kontrolleinrichtungen übertragen werden, dass die Kontrolleinheiten bei gleichzeitigem Vorliegen einer Vielzahl von Bediensignalen mehrerer Arbeitsplätze die Sprachsignale eines der Arbeitsplätze nach vorgegebenen oder vorgebbaren Kriterien auswählen oder die Sprachsignale mehrerer Arbeitsplätze nach vorgegebenen Kriterien überlagern und das so erhaltene ausgewählte oder an die Funksendeeinrichtung überlagerte Sprachsignal zum Senden übertragen, und dass die Kontrolleinheiten bei Vorliegen eines von der Funkempfangseinrichtung übermittelten Sprachsignals an die mit ihnen verbundenen Arbeitsplätze ein Empfangssignal übermitteln und die Sprachsignale an diese Arbeitsplätze übertragen. Hierdurch wird insbesondere eine einfache Übertragung von Daten zu den Funkeinrichtungen mit deterministischer Datenrate erreicht. Weiters entfällt die Notwendigkeit, dass Funkeinrichtungen die ihr zugeführten Sprechfunkdaten arbitrieren.

Weiters betrifft die Erfindung ein Verfahren zur Übertragung von Sprachdaten von einer Anzahl von Arbeitsplätzen, insbesondere für Fluglotsen, umfassend jeweils:
- zumindest eine Spracheingabeeinheit, insbesondere ein Mikrofon,
- zumindest eine Sprachausgabeeinheit, insbesondere einen Lautsprecher oder Kopfhörer,
- zumindest eine Bedieneinheit zum Erstellen eines Bediensignals, das angibt, dass vom jeweiligen Arbeitsplatz mittels der Spracheingabeeinheit Sprachsignale an eine der Funksendeeinrichtungen übertragen werden sollen,
- zumindest eine Anzeigeeinheit zur Anzeige eines Empfangssignals, das angibt, ob an der Sprachausgabeeinheit Sprachsignale von einer der Funkempfangseinrichtungen ausgegeben werden, sowie
- zumindest eine Auswahleinheit zur Auswahl der Funksendeeinrichtungen und Funkempfangseinrichtungen, mit denen die Arbeitsplätze aufgrund von Steuersignalen eine Sprachverbindung aufbauen,
mittels einer Anzahl von Funksendeeinrichtungen und Funkempfangseinrichtungen
- wobei die von den Spracheingabeeinheiten erstellten Sprachsignale sowie die von den Bedieneinheiten erstellten Bediensignale an die Funksendeeinrichtungen übertragen werden, und die von einem Arbeitsplatz abgegebenen Sprachsignale an die Funksendeeinrichtung weitergeleitet werden und bei gleichzeitiger Übermittlung eines Bediensignals vom Arbeitsplatz von dieser mittels Funk abgesendet werden,
- wobei die Funkempfangseinrichtungen Sprachsignale mittels Funk empfangen und diese Sprachsignale an die Arbeitsplätze weitergeleitet werden und mit den Sprachausgabeeinheiten ausgegeben werden, wobei während des Empfangs von Sprachsignale sowie während der Weiterleitung der Sprachsignale an die Arbeitsplätze jeweils ein Empfangssignal an jeweiligen den Arbeitsplatz übermittelt wird und von der Anzeigeeinheit angezeigt wird. Bei diesem ist vorgesehen, dass für die Arbeitsplätze auf von den Arbeitsplätzen entfernt angeordneten Rechnern, insbesondere auf einer Verteileinheit, jeweils ein Arbeitsplatz-Service ausgeführt wird, wobei jedem Arbeitsplatz zumindest ein Arbeitsplatz-Service zugeordnet wird, dass zwischen dem Arbeitsplatz-Service und dem diesem Arbeitsplatz-Service zugeordneten Arbeitsplatz jeweils eine logische oder physische Datenverbindung mit einer vorgegebenen Bandbreite erstellt wird, über die Sprachsignale von der Spracheingabeeinheit und Sprachsignale zu der Sprachausgabeeinheit des Arbeitsplatzes sowie auch Bediensignale und Empfangssignale übertragen werden, dass das Arbeitsplatz-Service die ihm von Funkempfangseinrichtungen, insbesondere mittels der Kontrolleinheiten, zugehenden Sprachsignale nach einer aufgrund von Steuersignalen vorgegebenen Vorschrift konferiert oder überlagert und die daraus ermittelten Sprachsignale an den Arbeitsplatz übermittelt oder die von einer ausgewählten Funkempfangseinrichtung, insbesondere mittels einer der Kontrolleinheiten, einlangenden Sprachsignale an den Arbeitsplatz weiterleitet und für den Fall, dass überhaupt Sprachsignale vorliegen, ein Empfangssignal an den Arbeitsplatz weiterleitet, und dass das Arbeitsplatz-Service die Sprachsignale und Bediensignale, die ihm vom Arbeitsplatz übermittelt wurden, an Funksendeeinrichtungen, insbesondere mittels einer der Kontrolleinheiten, übermittelt, die vorab mittels Steuersignalen ausgewählt wurden. Hierdurch wird insbesondere eine einfache Übertragung von Sprachsignalen zwischen den Arbeitsplätzen und den Kontrolleinheiten mit deterministischer Bandbreite erreicht.

Ein weiterer Aspekt der Erfindung sieht vor, dass die Auswahl des zu sendenden Sprachsignals bzw. die Verteilung eines empfangenen Sprachsignals an einem Ort getroffen wird, der aus Netzwerkssicht mit größerer Bandbreite über ein Netzwerk an die Arbeitsplätze angebunden ist, um gleichzeitig die Sprachsignale von mehreren Arbeitsplätzen empfangen bzw. gleichzeitig Sprachsignale an mehrere Arbeitsplätze senden zu können und dann auch die Entscheidung des zu sendenden Signals treffen zu können. Damit braucht nur ein Sprachsignal an die Funksendeeinrichtung bzw. nur ein Sprachsignal von der Funkempfangseinrichtung übertragen werden. Diese Funktion, die die Anbindung von Funksendeeinrichtungen und Funkempfangseinrichtungen realisiert, wird insgesamt als Frequenz-Service bezeichnet und wird durch eine Kontrolleinheit realisiert.

Durch die Einführung von Kontrolleinrichtungen, auf denen Frequenz-Services implementiert sind, werden die Funkeinrichtungen direkt an das Frequenz-Service bzw. die Kontrolleinheit angebunden und es erfolgt nur die Übertragung des vom Frequenz-Service ausgewählten Sprachsignals an eine oder mehrere Funksendeeinrichtung bzw. die Kontrolleinheit übernimmt die Verteilung des von einer oder mehreren Funkempfangseinrichtungen empfangenen Sprachsignals an die Arbeitsplätze. Damit entfällt auch die Notwendigkeit, Sprachsignale von und zu den Funkeinrichtungen komprimiert zu übertragen um dadurch Bandbreite zu sparen bzw. die benötigte Bandbreite zu minimieren bzw. bei der Übertragung von Audiosignalen zwischen den Arbeitsplätzen und den Funkeinrichtungen Netzwerksmechanismen wie Multicast zu verwenden, deren Einsatz über Weitverkehrsnetzwerke WANs problematisch ist.

Gleichzeitig können auch mehrere Funkeinrichtungen, die sich auf unterschiedlichen Funkstandorten befinden und mit der gleichen physikalischen Frequenz betrieben werden, in einem Frequenz-Service durch eine gemeinsame Kontrolleinheit zusammengefasst werden, wobei die Auswahl des auszusendenden Signals und die Auswahl des Funkstandorts das Frequenz-Service übernimmt. Das Frequenz-Service bzw. die Kontrolleinheit kann auch weitere Funktionen übernehmen und die damit realisierten Funktionen allen Benutzern zur Verfügung stellen. Diese umfassen zum Beispiel:
- die Bewertung der Empfängersignale bei gleichzeitigen Empfang von mehreren dem Frequenz-Service zugeordneten Funkempfangseinrichtungen auf Grund von unterschiedlichen Qualitätskennwerten des empfangenen Signals sowie gegebenenfalls eine zusätzliche optionale Signalauswahl,
- die dynamische Auswahl einer oder mehrerer Funksendeeinrichtungen einer Frequenz im CLIMAX-Betrieb für eine Funkaussendung. Diese Funktion kann auch abhängig von einem vorhergehenden Empfang sein, welche als "transmitter follows receiver" bezeichnet wird,
- eine Umschaltung auf eine Ersatzfunkeinrichtung Main/Standby-Umschaltungen für den Fall, dass die aktive Funkeinrichtung fehlerhaft ist,
- dynamische Verzögerungszeitkompensation der Laufzeit eines Audiosignals zwischen Arbeitsplatz und mehrerer Funksendeeinrichtungen einer Frequenz im CLIMAX-Betrieb etc.
Wenn in einem Kommunikationssystem m Arbeitsplätze und n Frequenz-Services vorhanden sind, wobei jedes Frequenz-Service wiederum mehrere Funkeinrichtungen kombinieren kann, so ist es möglich, dass jeder Arbeitsplatz auf einer beliebige Anzahl von Frequenz-Services gleichzeitig aussenden bzw. diese abhören kann. Daraus ergibt sich eine *m*:*n* Kommunikationsmatrix zwischen den Arbeitsplätzen und den Frequenz-Services bzw. Kontrolleinheit. Auf welche Frequenz-Services bzw. Kontrolleinheit ein Arbeitsplatz tatsächlich zugreifen darf, wird durch die Konfiguration der Arbeitsplätze festgelegt, welche entsprechend den betrieblichen Erfordernissen geändert werden kann. Die tatsächliche Nutzung eines Frequenz-Services bzw. Kontrolleinheit hängt von den Tastungen des Benutzers ab.

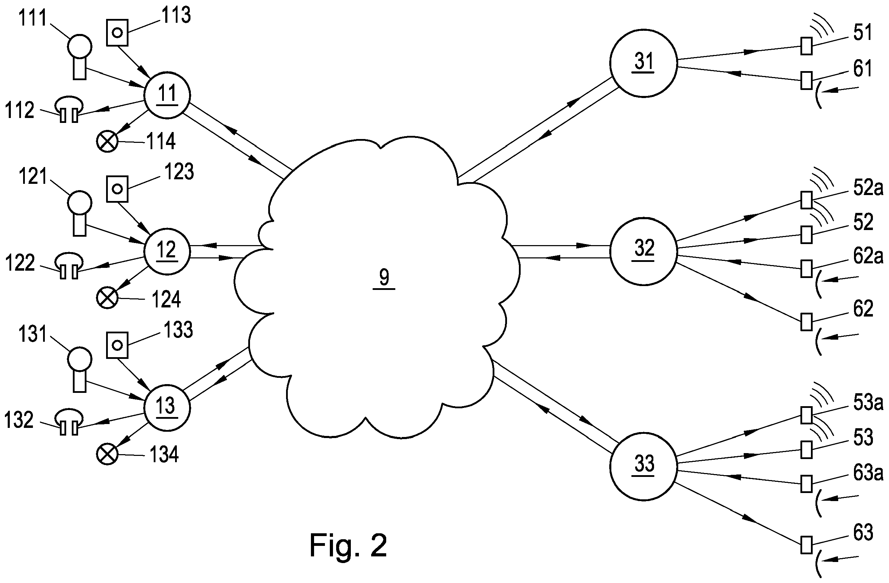

Einige mögliche Realisierungen erfindungsgemäßer Kommunikationssysteme sind in den **Fig. 2 bis 6** näher dargestellt.

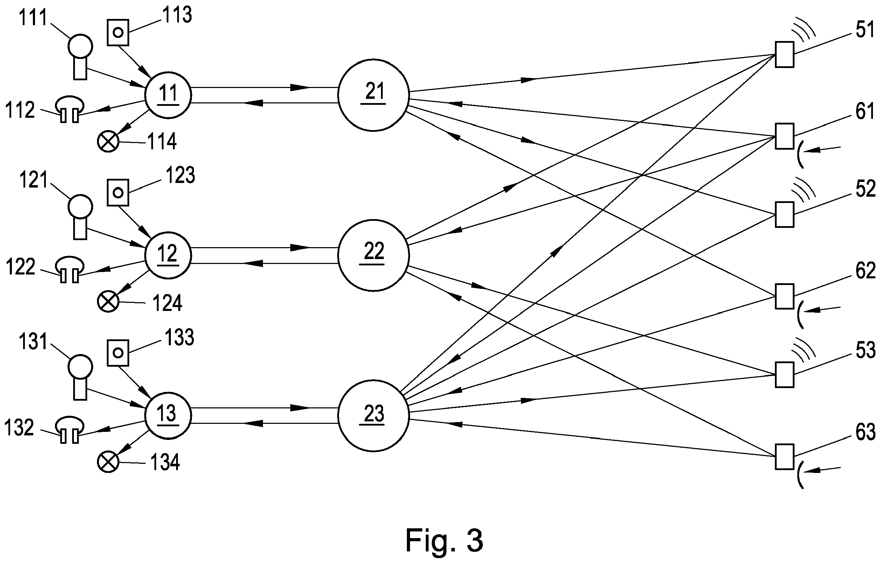

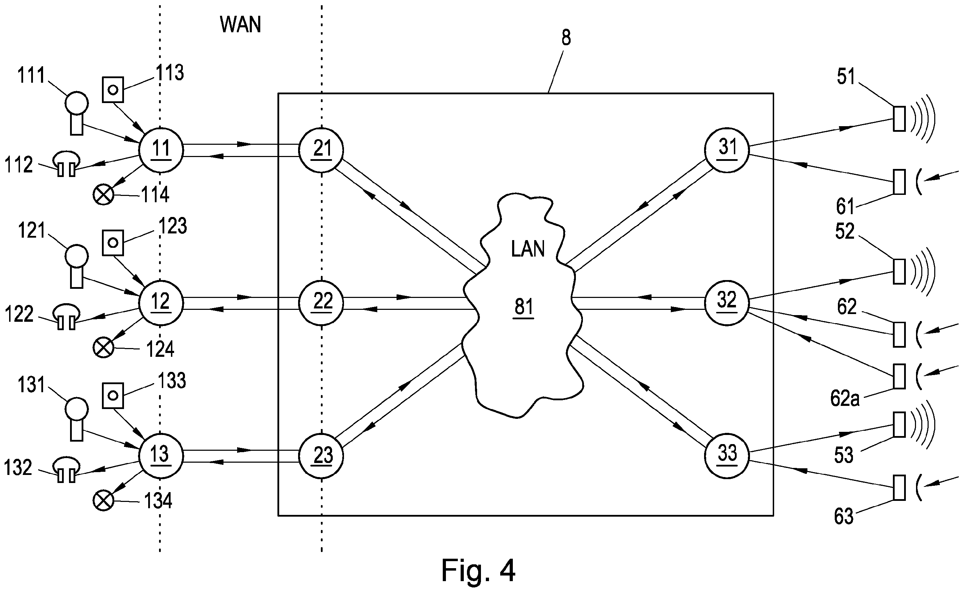

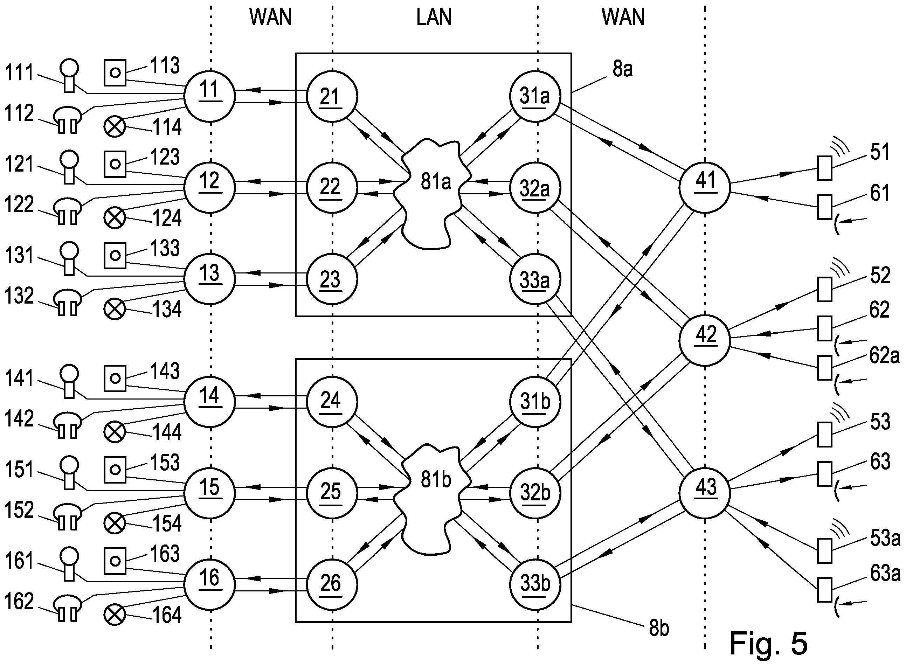

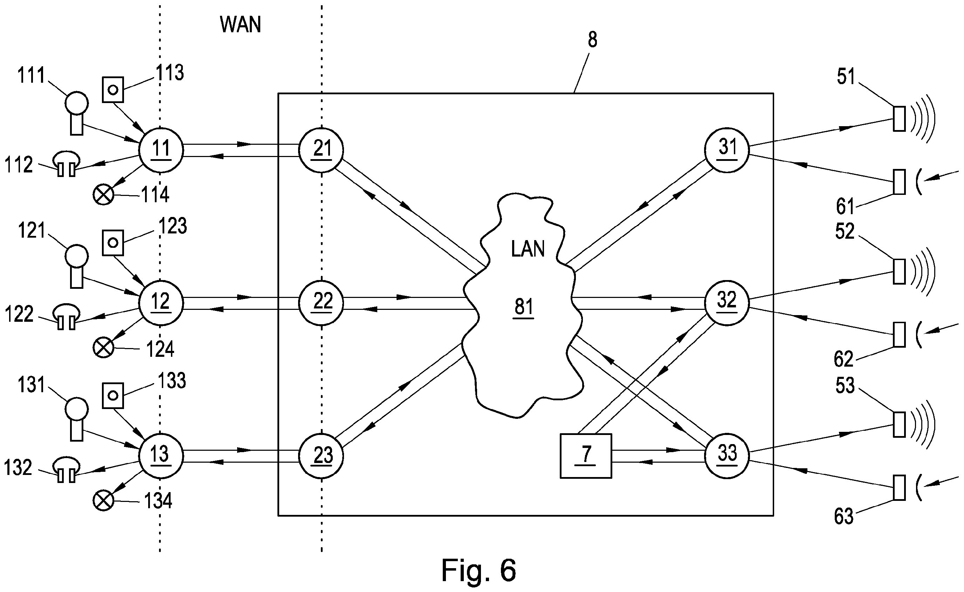

**Fig. 2** zeigt schematisch den Aufbau einer ersten Ausführungsform eines erfindungsgemäßen Kommunikationssystems, wobei Kontrolleinheiten mit Frequenz-Services vorgesehen sind. **Fig. 3** zeigt schematisch den Aufbau eines zweiten erfindungsgemäßen Kommunikationssystems, wobei Verteileinheiten vorgesehen sind, die als Arbeitsplatz-Proxy-Rechner fungieren. **Fig. 4** zeigt eine dritte Ausführungsform der Erfindung mit einer Kombination der in **Fig. 2** **und** **3** dargestellten Merkmale. **Fig. 5** zeigt eine vierte Ausführungsform der Erfindung, wobei mehrere voneinander unabhängige Rechenzentren sowie übergeordnete Kontrolleinheiten vorgesehen sind. **Fig. 6** zeigt eine Alternative zur dritten Ausführungsform der Erfindung, wobei zwei Kontrolleinheiten miteinander verkoppelt sind.

Zwischen dem Frequenz-Service und jeder einzelnen Funksendeeinrichtung bzw. Funkempfangseinrichtung besteht eine logische 1:1 Kommunikationsbeziehung, wodurch die notwendige Datenrate zwischen dem Frequenz-Service und den Funkeinrichtungen begrenzt und deterministisch bleibt unabhängig davon, wie viele Arbeitsplätze 11, 12, 13 eine Frequenz bzw. eine Verteileinheit 31, 32, 33 tatsächlich benutzen. Damit ist die notwendige Datenrate zwischen dem Funkeinrichtungen und dem Frequenz-Service minimiert, wodurch auch eine Audiokompression der Sprachsignale auf dieser Übertragungsstrecke nicht zwingend notwendig ist.
Das in der Kontrolleinheit 31, 32, 33 implementierte Frequenz-Service wird für den Aufbau und die Überwachung der Audioverbindungen zu den dem Frequenz-Service zugeteilten Funksendeeinrichtung und Funkempfangseinrichtung genutzt, wobei jedes Frequenz-Service eine vorgegebene Funkfrequenz verwaltet.

Die in **Fig. 2** dargestellte **erste Ausführungsform** der Erfindung umfasst eine Anzahl von Arbeitsplätzen 11, 12, 13, die über ein Weitverkehrsnetzwerk mit Kontrolleinheiten 31, 32, 33 verbunden sind. Jeder der Arbeitsplätze verfügt jeweils über zumindest eine Spracheingabeeinheit 111, 121, 131, im vorliegenden Fall handelt es sich dabei um ein Mikrofon. Weiters verfügt jeder Arbeitsplatz jeweils zumindest über eine Sprachausgabeeinheit 112, 122, 132, die im vorliegenden Fall als Lautsprecher oder Kopfhörer ausgebildet sind. Weiters weisen die einzelnen Arbeitsplätze 11, 12, 13 eine Bedieneinheit 113, 123, 133 auf, mit denen jeweils ein Bediensignal PTT erstellt und übermittelt werden kann. Dieses Bediensignal gibt an, dass vom jeweiligen Arbeitsplatz 11, 12, 13 mittels der Spracheingabeeinheit 111, 121, 131 Sprachsignale an eine der Funksendeeinrichtung 51, 52, 53 übertragen werden soll. Weiters weist jeder der Arbeitsplätze eine Anzeigeeinheit 114, 124, 134 zur Anzeige eines Empfangsignals SQU auf. Weiters weisen die Arbeitsplätze eine nicht dargestellte Auswahleinheit zur Auswahl derjenigen Funksendeeinrichtung 51, 52, 53 sowie Funkempfangseinrichtung 61, 62, 63 aus, an die der jeweilige Arbeitsplatz Sprachsignale senden möchte bzw. von denen der jeweilige Arbeitsplatz 11, 12, 13 Sprachsignale empfangen möchte. Die Kontrolleinheiten 31, 32, 33, die mit den Arbeitsplätzen 11, 12, 13 über das Weitverkehrsnetzwerk WAN verbunden sind, sind ihrerseits mit Funksendeeinrichtung 51, 52, 52a, 53, 53a sowie mit Funkempfangseinrichtung 61, 62, 62a, 63, 63a verbunden. Dies bedeutet, dass die Kontrolleinheiten 31, 32, 33 im Signalweg zwischen den Arbeitsplätzen 11, 12, 13 und den Funksendeeinrichtung 51, 52, 53 bzw. den Funkempfangseinrichtung 61, 62, 63 liegen.

Wie bereits im Stand der Technik bekannt, sind den Funksendeeinrichtungen 51, 52, 53, die von den Spracheingabeeinheiten 111, 121, 131 erstellten Sprachsignale sowie die von den Bedieneinheiten 113, 123, 133 erstellten Bediensignale mittelbar über die Kontrolleinheiten 31, 32, 33 zugeführt. Die Funksendeeinrichtung 51, 52, 53 ist zur Abgabe der von einem Arbeitsplatz 11, 12, 13 übertragenen Sprachsignale bei gleichzeitiger Übermittlung eines Bediensignals PTT mittels Funk ausgebildet. Ebenso übermitteln die Funkempfangseinrichtungen 61, 62, 63 während des Empfangs von Sprachsignale sowie während deren Weiterleitung an die Arbeitsplätze 11, 12, 13 jeweils ein Empfangssignal SQU. Die Funkempfangseinrichtungen 61, 62, 33 sind zum Empfang von Sprachsignalen mittels Funk ausgebildet, wobei die von den Funkempfangseinrichtungen 61, 62, 63 empfangenen Sprachsignale von einzelnen Arbeitsplätzen 11, 12, 13 zur Abgabe auf den Sprachausgabeeinheiten 112, 122, 132 zugeführt sind.

Wie aus dem vorliegenden ersten Ausführungsbeispiel ersichtlich, steht jede Kontrolleinheit 31, 32, 33 mit zumindest einer Funksendeeinrichtung 51, 52, 53 sowie mit mindestens einer Funkempfangseinrichtung 61, 62, 63 in Kommunikationsverbindung. Bei dieser vorteilhaften Ausführungsform der Erfindung nutzen die der Kontrolleinheit 31 zugeordneten Funkeinrichtungen 51, 61 dieselbe Frequenz. Ebenso nutzen die der zweiten Kontrolleinheit 32 zugeordneten Funkeinrichtungen 52, 52a, 62, 62a eine gemeinsame Frequenz und die der Kontrolleinheit 33 zugeordneten Funkeinrichtungen 53, 53a, 63, 63a nutzen ebenso eine gemeinsame Frequenz. Durch diese Maßnahme wird erreicht, dass die in den Kontrolleinheiten 31, 32, 33 ablaufenden Frequenz-Services jeweils zur Verwaltung einer Funkfrequenz in einem bestimmten Gebiet verwendet werden. Die Kontrolleinheiten 31, 32, 33 erlauben eine gleichzeitige Verbindung mit einem oder mehreren der Arbeitsplätze 11, 12, 13 über das Weitverkehrsnetzwerk. Insbesondere können alle der Arbeitsplätze 11, 12, 13 mit allen Kontrolleinheiten 31, 32, 33 über das Weitverkehrsnetzwerk verbunden sein.

Die Kontrolleinheiten 31, 32, 33 übernehmen bei der in **Fig. 2** dargestellten ersten Ausführungsform der Erfindung die Aufgabe, die von den Arbeitsplätzen übermittelnden ausgehenden Sprachsignale zu arbitrieren und die von den Funkempfangseinrichtungen 61, 62, 62a, 63, 63a einlangenden Sprachsignale an die Arbeitsplätze zu verteilen. Bei gleichzeitigen Vorliegen einer Anzahl von Bediensignalen PTT von mehreren Arbeitsplätzen 11, 12, 13 wählen die Kontrolleinheiten 31, 32, 33 die Sprachsignale eines der Arbeitsplätze 11, 12, 13 nach vorgegebenen oder vorgebbaren Kriterien aus. Alternativ besteht die Möglichkeit, dass die Sprachsignale der einzelnen Arbeitsplätze 11, 12, 13 nach vorgegebenen Kriterien überlagert werden. Das derartige ausgewählte oder durch Überlagerung gewonnene Sprachsignal wird an die Funksendeeinrichtung 51, 52, 53, übermittelt und von dieser Funksendeeinrichtung ausgesandt. Zur Weiterleitung der bei der jeweiligen Funkempfangsanlage 61, 62, 63 einlangenden Sprachsignale übermitteln die Kontrolleinheiten, die an sie übermittelten Sprachsignale an die mit ihnen verbundenen Arbeitsplätzen 11, 12, 13 ein Empfangssignal SQU sowie die empfangenden Sprachsignale.

In der praktischen Realisierung besteht ein Frequenz-Service und auch die im späteren Teil des Textes beschriebenen zusätzlichen Services aus zumindest einer Software-Komponente, in der die Steuer- und Kommunikationsfunktionen des Frequenz-Services realisiert sind und zumindest einer Software-Komponente, in der die Verarbeitung und Verteilung der Audiosignale zusammen mit den Signalisierungsinformationen PTT und SQU realisiert sind. Diese Software-Komponenten können gemeinsam in einem PC-Server bzw. in einer speziellen Hardware-Komponente exekutiert werden. Es ist aber genauso möglich, diese Software-Komponenten auf unterschiedlichen PC-Servern, in unterschiedlichen virtuellen Maschinen oder auf speziellen Hardware-Komponenten zu exekutieren oder auch zum Beispiel die Software-Komponente der Audioübertragung und -verteilung mehrfach zu betreiben, um eine redundante Übertragung der Audiosignale realisieren zu können.

Die Realisierung der Übertragung von Sprach- und Signalisierungsinformationen erfolgt zunehmend über flugsicherungsspezifischer Datenverteilnetze, wodurch die Lotsenarbeitsplätze von den Frequenz-Services, die mit den Funkeinrichtungen verbunden sind, räumlich über größere Entfernungen getrennt werden können. Die Übertragung der Sprach- und Signalisierungsinformationen zwischen den Arbeitsplätzen 11, 12, 13 und den Kontrolleinheiten 31, 32, 33 erfolgt über Weitverkehrsnetzwerke WANs und die einzelnen Funkeinrichtungen sind häufig über Leitungen mit niedriger Bandbreite an die Kontrolleinheit angeschlossen.

Mit der ersten Ausführungsform der Erfindung können Sprachsignale blockierungsfrei übertragen werden. Wenn bei der ersten Ausführungsform der Erfindung ein Arbeitsplatz 11, 12, 13 Sprachsignale an mehrere Frequenz-Services bzw. Kontrolleinheiten 31, 32, 33 senden will, so wird an jedes Frequenz-Service, das von diesem Arbeitsplatz 11, 12, 13 ausgewählt wurde, das gleiche Sprachsignal übertragen. Insgesamt wird dadurch das gleiche Sprachsignal mehrfach im Datennetzwerk übertragen. Wenn andererseits ein Frequenz-Service von mehreren Arbeitsplätzen 11, 12, 13 abgehört wird, so wird dieses an jeden Arbeitsplatz 11, 12, 13 das gleiche Sprachsignal übermittelt. Damit wird dieses Sprachsignal ebenfalls mehrfach im Netzwerk übertragen.

In **Fig. 3** ist eine **zweite Ausführungsform** der Erfindung näher dargestellt. Diese zeigt ein Kommunikationssystem zur Sprachkommunikation mittels einer Anzahl von Arbeitsplätzen 11, 12, 13 für Fluglotsen. Das Kommunikationssystem umfasst eine Anzahl von Funksendeeinrichtungen 51, 52, 53 und Funkempfangseinrichtungen 61, 62, 63. Wie auch beim ersten Ausführungsbeispiel der Erfindung weist jeder der Arbeitsplätze 11, 12, 13 jeweils zumindest Folgendes auf:
- zumindest eine Spracheingabeeinheit 111, 121, 131, insbesondere ein Mikrofon,
- zumindest eine Sprachausgabeeinheit 112, 122, 132, insbesondere einen Lautsprecher,
- zumindest eine Bedieneinheit 113, 123, 133 zum Erstellen eines Bediensignals PTT, das angibt, dass vom jeweiligen Arbeitsplatz 11, 12, 13 mittels der Spracheingabeeinheit 111, 121, 131 Sprachsignale an eine der Funksendeeinrichtungen 51, 52, 53 übertragen werden sollen,
- zumindest eine Anzeigeeinheit 114, 124, 134 zum Anzeigen eines Empfangssignals SQU, das angibt, ob an der Sprachausgabeeinheit 112, 122, 132 Sprachsignale von einer der Funkempfangseinrichtungen 61, 62, 63 ausgegeben werden, sowie
- zumindest eine Auswahleinheit zur Auswahl der Funksendeeinrichtungen 51, 52, 53 und Funkempfangseinrichtungen 61, 62, 63, mit denen die Arbeitsplätze aufgrund von Steuersignalen eine Sprachverbindung aufbauen.

Die Arbeitsplätze 11, 12, 13 übermitteln die von den Spracheingabeeinheiten 111, 121, 131 erstellten Sprachsignale sowie die von den Bedieneinheiten 113, 123, 133 erstellten Bediensignale PTT an die Verteileinheiten 21, 22, 23, die die Sprachsignale an die Funksendeeinrichtungen 51, 52, 53 weiterleiten. Diese geben die von einem Arbeitsplatz 11, 12, 13 übertragenen Sprachsignale bei gleichzeitiger Übermittlung eines Bediensignals PTT ab. Die Funkempfangseinrichtungen 61, 62, 63 empfangen Sprachsignale mittels Funk. Die von den Funkempfangseinrichtungen 61, 62, 63 empfangenen Sprachsignale werden den einzelnen Verteileinheiten 21, 22, 23, zugeführt, die die Sprachsignale an die Arbeitsplätze 11, 12, 13 weiterleiten. Die Sprachsignale werden von den Arbeitsplätzen 11, 12, 13 auf den jeweiligen Sprachausgabeeinheiten 112, 122, 132 abgegeben. Die Funkempfangseinrichtungen 61, 62, 63 übermitteln während des Empfangs von Sprachsignalen sowie deren Weiterleitung jeweils ein Empfangssignal SQU über die Verteileinheiten 21, 22, 23, an die Arbeitsplätze 11, 12, 13.

Das Kommunikationssystem weist zudem eine Anzahl von Verteileinheiten 21, 22, 23 auf, die jeweils einem Arbeitsplatz 11, 12, 13 zugeordnet sind, wobei jedem Arbeitsplatz 11, 12, 13 zumindest eine, im vorliegenden Fall genau eine, Verteileinheit 21, 22, 23 zugeordnet ist. Zwischen jeder der Verteileinheiten 21, 22, 23 und dem dieser Verteileinheit 21, 22, 23 zugeordneten Arbeitsplatz 11, 12, 13 besteht jeweils eine logische oder physische Datenverbindung mit einer vorgegebenen Bandbreite, mit der Sprachsignale von jeder Spracheingabeeinheit 111, 121, 131 und Sprachsignale zu jeder Sprachausgabeeinheit 112, 122, 132 des Arbeitsplatzes 11, 12, 13 sowie auch Bediensignale PTT und Empfangssignale SQU übertragbar sind.
Die Verteileinheit 21, 22, 23 konferiert oder überlagert die ihr von Funkempfangseinrichtungen 61, 62, 63 zugehenden Sprachsignale nach einer aufgrund von Steuersignalen vorgegebenen Vorschrift. Die daraus ermittelten Sprachsignale übermittelt sie an den Arbeitsplatz 11, 12, 13. Für den Fall, dass überhaupt Sprachsignale vorliegen leitet sie ein Empfangssignal SQU an den Arbeitsplatz 11, 12, 13 weiter. Die jeweilige Verteileinheit 21, 22, 23 übermittelt ihr vom Arbeitsplatz 11, 12, 13 übermittelte Sprachsignale an vorab mittels Steuersignalen ausgewählten Funksendeeinrichtungen 51, 52, 53.

Bei der zweiten Ausführungsform der Erfindung ist für die Übertragung der Sprachsignale von den Arbeitsplätzen zu den Verteileinheiten die erforderlichen Bandbreite bzw. Datenrate konstant und unabhängig von der Anzahl der besprochenen und abgehörten Frequenzen bzw. Funkeinrichtungen.

Mit der nachfolgend beschriebenen **dritten Ausführungsform** der Erfindung, dargestellt in **Fig. 4**, sollen die Nachteile einer ineffizienten Ausnutzung der im Netzwerk verfügbaren Bandbreite sowie der Nachteil eines nichtdeterministischen Bandbreitenbedarfs der einzelnen Komponenten vermieden werden. Die dritte Ausführungsform der Erfindung wird ausgehend von der ersten Ausführungsform der Erfindung dargestellt und weist im Wesentlichen die Merkmale der ersten beiden Ausführungsformen der Erfindung auf.
- Gleiche Sprachsignale sollen über das Netzwerk nur mehr einmal übertragen werden, was zu einer effizienteren Ausnutzung der verfügbaren Bandbreite führt bzw. eine unnötige Überdimensionierung des Netzwerks vermeidet.
- Aus Sicht der einzelnen Komponenten Arbeitsplätze 11, 12, 13, Kontrolleinheit 31, 32, 33 ist deren Bandbreitenbedarf beim Zugang auf das Netzwerk nach oben begrenzt und für jeden Arbeitsplatz 11, 12, 13 von der Anzahl der Kontrolleinheiten 31, 32, 33, die ein Arbeitsplatz 11, 12, 13 gleichzeitig verwendet abhört und/oder bespricht. bzw. für jede Kontrolleinheit 31, 32, 33 von der Anzahl der Arbeitsplätze, die es gleichzeitig abhören, unabhängig.
- Zusätzlich zu der in **Fig. 2** dargestellten Kommunikationsstruktur wird zur Verbesserung der Systemarchitektur noch für jeden Arbeitsplatz 11, 12, 13 ein zusätzliches Arbeitsplatz-Service eingeführt, das in einer Verteileinheit 21, 22, 23 implementiert ist.
- Damit ergibt sich eine Struktur, bei der die Arbeitsplätze 11, 12, 13 über beliebig große Entfernungen über ein Weitverkehrsnetzwerk WAN von den Kontrolleinheiten 31, 32, 33 entfernt angeordnet werden können.

Das auf der Verteileinheit 21, 22, 23 ablaufende Arbeitsplatz-Service realisiert alle Funkfunktionen eines Arbeitsplatzes 11, 12, 13 und erlaubt die abgesetzte Anbindung der Bediengeräte und der Audio-Ein/Ausgabeeinheiten. Es überträgt einerseits die Sprachsignale eines Arbeitsplatzes 11, 12, 13 zu allen verwendeten Kontrolleinheiten 31, 32, 33 bzw. Frequenz-Services und andererseits empfängt es alle Sprachsignale von den Kontrolleinheiten 31, 32, 33 bzw. Frequenz-Services und leitet diese an den Arbeitsplatz 11, 12, 13 weiter, wobei diese Sprachsignale entsprechend ihrer Zuteilung zu Audioausgabeeinheiten des Arbeitsplatzes 11, 12, 13, wie z.B. Kopfhörer, Lautsprecher, ..., konferiert werden.

Hierbei ist es möglich, dass die möglichen *m*:*n* Kommunikationsbeziehungen zwischen den Arbeitsplatz-Services in der Verteileinheit 21, 22, 23 und den Frequenz-Services in den Kontrolleinheiten 31, 32, 33 im lokalen Netzwerk 81 eines Rechenzentrums 8 realisiert werden. Im Vergleich zu einem Weitverkehrsnetzwerk **Fig. 2** spielt in einem lokalen Netzwerk 81 der Bandbreitenbedarf eine untergeordnete Rolle bei den Kosten und bei der Dimensionierung der Netzwerkskomponenten. Ebenso lassen sich in einem lokalen Netzwerk 81 verschieden Verteilmechanismen z.B. Multicast-Gruppen einfacher realisieren.

Jeder Arbeitsplatz 11, 12, 13 ist somit über ein Weitverkehrsnetzwerk jeweils an ein Arbeitsplatz-Service bzw. eine Verteileinheit 21, 22, 23 angebunden, wodurch die dafür notwendige Bandbreite gering und deterministisch ist, keine Signale mehrfach übertragen werden brauchen und sich während des Betriebs auch bei einer Änderung der vom Arbeitsplatz 11, 12, 13 verwendeten Frequenz-Services keine zusätzlichen Sprachsignale übertragen werden müssen. Zwischen dem Arbeitsplatz und dem Arbeitsplatz-Service bzw. der Verteileinheit 21, 22, 23 existiert somit eine strikte logische 1:1 Kommunikationsbeziehung, wodurch die pro Arbeitsplatz 11, 12, 13 notwendige Datenrate im Weitverkehrsnetzwerk minimiert, deterministisch und auch begrenzt ist.

Das in der Kontrolleinheit 31, 32, 33 implementierte Frequenz-Service wird für den Aufbau und die Überwachung der Audioverbindungen zu den dem Frequenz-Service zugeteilten Funksendeeinrichtung und Funkempfangseinrichtung Betrieb mit Überdeckungsketten bzw. CLIMAX-Betrieb genutzt, wobei jedes Frequenz-Service eine vorgegebene Funkfrequenz verwaltet.

Zwischen dem Frequenz-Service und den Funksendern und Funkempfängern besteht eine logische 1:1 Kommunikationsbeziehung, wodurch die notwendige Bandbreite zwischen dem Frequenz-Service und den Funkeinrichtungen begrenzt und deterministisch bleibt unabhängig davon, wie viele Arbeitsplätze 11, 12, 13 eine Frequenz bzw. eine Verteileinheit 31, 32, 33 tatsächlich benutzen. Damit ist die notwendige Bandbreite zwischen dem Funkeinrichtungen und dem Frequenz-Service minimiert, wodurch auch eine Audiokompression der Sprachsignale zur Bandbreitenminimierung auf dieser Übertragungsstrecke nicht zwingend notwendig ist.

Damit einem Frequenz-Service bzw. einer Kontrolleinheit 31, 32, 33 mehrere Funkempfangseinrichtungen 61, 62, 63 zugeordnet sind und jeder Benutzer einen spezifischen Standort auswählen kann bzw. im Falle eines Betriebs mit Best-Signal-Selection die Auswahl des Frequenz-Services von jedem Benutzer individuell überstimmt werden kann, werden die Sprachsignale aller Funkempfangseinrichtungen 62a, 62 einer Kontrolleinheit 31, 32, 33 an die Verteileinheit 21, 22, 23 übertragen, um dort die entsprechende Auswahl durchführen zu können. Die Bewertung der Qualität der empfangenen Signale erfolgt in der Kontrolleinheit 31, 32, 33, diese Information wird an die jeweiligen Verteileinheiten 21, 22, 23 übertragen und die tatsächliche Auswahl des an den Arbeitsplatz zu sendenden Sprachsignals erfolgt erst durch das Arbeitsplatz-Service in der Verteileinheit. Damit ist es möglich, eine systemweit einheitliche Bewertung und Reihung der empfangenen Sprachsignale zu realisieren und trotzdem jedem Operator die Möglichkeit zu geben, aus den Sprachsignale jedes Frequenz-Services eine individuelle Auswahl treffen zu können.

In einer **vierten Ausführungsform** der Erfindung können mehrere Funkkommunikationssysteme zu virtuellen Zentren zusammengeschaltet werden. **Fig. 5** zeigt beispielhaft die Kommunikationsstrukturen eines solchen Kommunikationssystems, wobei in den einzelnen Rechenzentren 8a, 8b über übergeordnete Kontrolleinheiten 41, 42, 43 an die Funkeinrichtungen angeschlossen sind.

Die einzelnen in den Rechnerzentren 8a, 8b angeordneten Kontrolleinheiten 31a-33a, 31b-33b haben gegenüber den Frequenz-Services der vorherigen Ausführungsform der Erfindung einen reduzierten Funktionsumfang. Sie arbitrieren in Senderichtung die Sprachsignale von den Arbeitsplatz-Services eines Rechnerzentrums 8a, 8b für eine übergeordnete Kontrolleinheit 41, 42, 43 und verteilt andererseits in Empfangsrichtung die Sprachsignale der Kontrolleinheit an die Arbeitsplatz-Services der Verteileinheit 21, 22, 23 eines Rechenzentrums 8a, 8b, z.B. für alle Benutzer, die diese Frequenz abhören wollen.

Für jede Frequenz ist in einem Rechenzentrum genau eine Kontrolleinheit 31a-33a, 31b-33b verfügbar. Eine übergeordnete Kontrolleinheit 41, 42, 43, die geografisch an einem anderen Ort als ein Rechenzentrum betrieben werden kann, bedient die Kontrolleinheiten 31a-33a, 31b-33b von unterschiedlichen Rechenzentren 8a, 8b, wodurch auf der Verbindung zwischen einer Kontrolleinheit 31a-33a, 31b-33b und einer übergeordneten Kontrolleinheit keine Sprachsignale mehrfach übertragen werden und damit die benötigte Bandbreite über das WAN statisch und deterministisch ist. Zusätzlich ist eine aktive Verbindung zwischen einer Kontrolleinheit 31a-33a, 31b-33b und einer übergeordneten Kontrolleinheit 41, 42, 43 in einem Rechenzentrum 8a, 8b nur dann notwendig, wenn in diesem Rechenzentrum 8a, 8b zumindest ein Arbeitsplatz 11, 12, 13 diese Frequenz eingetastet hat.

Für die Realisierung einer virtuellen Zentrale ist es nicht zwingend notwendig, dass sich die Arbeitsplätze 11-16 immer mit dem gleichen Rechenzentrum 8a, 8b verbinden. Es können zum Beispiel Strukturen realisiert werden, die die folgenden Betriebsfälle ermöglichen:
Für den Fall eines Ausfalls eines Rechenzentrums 8a, 8b verbinden sich Arbeitsplätze 11-16 und übergeordnete Kontrolleinheiten 41, 42, 43 mit einem Backup-Rechenzentrum, um den Betrieb aufrecht zu erhalten.

Bei kleinen Flughäfen kann es zum Beispiel sinnvoll sein, dass in den Nachtstunden der Betrieb von anderen Arbeitsplätzen einer größeren Arbeitsplatzzentrale übernommen werden soll.

Bei sehr kleinen Flughäfen kann es zum Beispiel sinnvoll sein, die Rechenzentren mit den Verteileinheiten nicht auszubilden, und die Arbeitsplätze 11-16 direkt mit den übergeordneten Kontrolleinheiten 41, 42, 43 kommunizieren zu lassen.

Bei der ersten, dritten und vierten Ausführungsform der Erfindung besteht die Möglichkeit, eine Verkopplung zwischen zwei oder mehreren Frequenzen zu realisieren. Exemplarisch wird anhand der dritten Ausführungsform der Erfindung in **Fig. 6** eine Erweiterung dargestellt, bei der Frequenzen miteinander verkoppelt werden. Hierfür werden in dem Rechenzentrum 8 zusätzliche Verkopplungs-Services 7 realisiert. Wenn ein Operator zwei oder mehrere jeweils von Kontrolleinheiten 31, 32, 33 verwaltete Frequenzen miteinander verkoppeln will, wird diese Verkopplung einem Verkopplungs-Service 7 zugewiesen, welches die Signale, die von einem Frequenz-Service bzw. einer Kontrolleinheit 31, 32, 33 empfangen werden, an die anderen ausgewählten Kontrolleinheiten - man spricht auch von einer Verkopplungsgruppe - weiterleitet, um das Signal auf allen ausgewählten Frequenzen auszusenden. Der Vorteil dieser Lösung liegt darin, dass im Gegensatz zu einer Verkopplung direkt am Arbeitsplatz, die Verzögerungszeiten in der Verkoppelungsschleife reduziert werden, da die Sprachsignale nicht zweimal über das Weitverkehrsnetzwerk übertragen werden müssen.

Ein weiterer Vorteil dieser Lösung besteht in der zentralen Verwaltung einer Verkopplungsgruppe, wodurch Verkopplungen derselben Frequenzen durch mehrere Benutzer, einmal zentral im Verkopplungs-Service 7 geregelt werden und nicht verteilt in den beteiligten Arbeitsplätzen 11, 12, 13 und Kontrolleinheiten. Damit lassen sich Laufzeiteffekte und gegenseitige Blockierungen vermeiden.

## Patentansprüche

1. Kommunikationssystem zur Sprachkommunikation mittels einer Anzahl von Arbeitsplätzen (11, 12, 13), insbesondere für Fluglotsen, sowie einer Anzahl von Funksendeeinrichtungen (51, 52, 53) und Funkempfangseinrichtungen (61, 62, 63)
- wobei jeder der Arbeitsplätze (11, 12, 13) jeweils zumindest Folgendes aufweist:
- zumindest eine Spracheingabeeinheit (111, 121, 131), insbesondere ein Mikrofon,
- zumindest eine Sprachausgabeeinheit (112, 122, 132), insbesondere einen Lautsprecher oder Kopfhörer,
- zumindest eine Bedieneinheit (113, 123, 133) zum Erstellen eines Bediensignals, PTT, das angibt, dass vom jeweiligen Arbeitsplatz (11, 12, 13) mittels einer Spracheingabeeinheit (111, 121, 131) Sprachsignale an eine der Funksendeeinrichtungen (51, 52, 53) übertragen werden sollen,
- zumindest eine Anzeigeeinheit (114, 124, 134) zur Anzeige eines Empfangssignals, SQU, das angibt, ob an der Sprachausgabeeinheit (112, 122, 132) Sprachsignale von einer der Funkempfangseinrichtungen (61, 62, 63) ausgegeben werden, sowie
- zumindest eine Auswahleinheit zur Auswahl der Funksendeeinrichtungen (51, 52, 53) und Funkempfangseinrichtungen (61, 62, 63), mit denen die Arbeitsplätze aufgrund von Steuersignalen eine Sprachverbindung aufbauen,
- wobei den Funksendeeinrichtungen (51, 52, 53) die von den Spracheingabeeinheiten (111, 121, 131) erstellten Sprachsignale sowie die von den Bedieneinheiten (113, 123, 133) erstellten Bediensignale, PTT, zugeführt sind und die Funksendeeinrichtung (51, 52, 53) zur Abgabe der von einem Arbeitsplatz (11, 12, 13) übertragenen Sprachsignale bei gleichzeitiger Übermittlung eines Bediensignals, PTT, mittels Funk ausgebildet ist, und
- wobei die Funkempfangseinrichtungen (61, 62, 63) zum Empfang von Sprachsignalen mittels Funk ausgebildet sind, die von den Funkempfangseinrichtungen (61, 62, 63) empfangenen Sprachsignale den einzelnen Arbeitsplätzen (11, 12, 13) zur Abgabe durch die Sprachausgabeeinheiten (112, 122, 132) zugeführt sind, und die Funkempfangseinrichtungen (61, 62, 63) während des Empfangs von Sprachsignalen sowie deren Weiterleitung jeweils ein Empfangssignal, SQU, an die Arbeitsplätze (11, 12, 13) übermitteln,
- wobei im Signalweg zwischen den Arbeitsplätzen (11, 12, 13) und den Funksendeeinrichtungen (51, 52, 53) und zwischen den Arbeitsplätzen (11, 12, 13) und den Funkempfangseinrichtungen (61, 62, 63) eine Anzahl von Kontrolleinheiten (31, 32, 33) vorgesehen ist, wobei jede Kontrolleinheit (31, 32, 33) mit zumindest einer Funksendeeinrichtung und zumindest einer Funkempfangseinrichtung (61, 62, 63) in Kommunikationsverbindung steht und dieser zugeordnet ist,
wobei die derselben Kontrolleinheit (31, 32, 33) zugeordneten Funksendeeinrichtungen (51, 52, 53) und Funkempfangseinrichtungen (61, 62, 63), vorzugsweise dieselbe Funkfrequenz nutzen, und wobei insbesondere jede Funksendeeinrichtung (51, 52, 53) und Funkempfangseinrichtung (61, 62, 63) vorzugsweise nur einer einzigen Kontrolleinheit (31, 32, 33) zugeordnet ist,
- wobei mehrere Arbeitsplätze (11, 12, 13) mit derselben Kontrolleinheit (31, 32, 33), insbesondere alle Arbeitsplätze (11, 12, 13) mit allen Kontrolleinheiten (31, 32, 33), verbunden sind,
- wobei die Kontrolleinheiten (31, 32, 33) bei gleichzeitigem Vorliegen einer Vielzahl von Bediensignalen, PTT, mehrerer Verteileinheiten (21, 22, 23) die Sprachsignale einer der Verteileinheiten (21, 22, 23) nach vorgegebenen oder vorgebbaren Kriterien auswählen oder die Sprachsignale mehrerer Arbeitsplätze nach vorgegebenen Kriterien überlagern und das so erhaltene ausgewählte oder überlagerte Sprachsignal zum Senden an die Funksendeeinrichtung übertragen, und
- wobei die Kontrolleinheiten (31, 32, 33) bei Vorliegen eines von der Funkempfangseinrichtung (61, 62, 63) übermittelten Sprachsignals an die mit ihnen verbundenen Arbeitsplätze (11, 12, 13) ein Empfangssignal, SQU, übermitteln und die Sprachsignale an diese Arbeitsplätze (11, 12, 13) übertragen.

2. Kommunikationssystem nach Anspruch 1, **dadurch gekennzeichnet,**
- **dass** zumindest eine Kontrolleinheit (31, 32, 33) mit einer Mehrzahl von Funksendeeinrichtungen (51, 52, 53) verbunden ist,
- **dass** die Kontrolleinheit (31, 32, 33) die bei ihr von einem Arbeitsplatz (11, 12, 13) einlangenden Sprachsignale nur an eine der Funksendeeinrichtungen (51, 52, 53) oder an alle mit ihr in Verbindung stehenden Funksendeeinrichtungen (51, 52, 53) zur Übertragung übermittelt, und/oder
- **dass** die Kontrolleinheit (31, 32, 33) die bei ihr von den Funkempfangseinrichtungen (61, 62, 63) einlangenden Sprachsignale an die mit ihr in Sprachverbindung stehenden Arbeitsplätze (11, 12, 13) übermittelt.

3. Kommunikationssystem nach Anspruch 1 oder 2, **dadurch gekennzeichnet,**
- **dass** die Kontrolleinheit (31, 32, 33) mit zumindest einer Funksendeeinrichtung (51, 52, 53) und zumindest einer Backup-Funksendeeinrichtung (52a, 53a) verbunden ist und dass die Kontrolleinheit (31, 32, 33) die Sprachsignale bei Funktionieren der Funksendeeinrichtung (51, 52, 53) an diese überträgt und die Sprachsignale andernfalls an die Backup-Funksendeeinrichtung (52a, 53a) überträgt, und/oder
- **dass** die Kontrolleinheit (31, 32, 33) mit zumindest einer Funkempfangseinrichtung (61, 62, 63) und zumindest einer Backup-Funkempfangseinrichtung (62a, 63a) verbunden ist und dass die Kontrolleinheit (31, 32, 33) bei Funktionieren der mit ihr verbundenen Funkempfangseinrichtung (61, 62, 63) die ihr von der Funkempfangseinrichtung (61, 62, 63) einlangenden Sprachsignale an die Arbeitsplätze (11, 12, 13) verteilt und andernfalls die ihr von der Backup-Funkempfangseinrichtung (62a, 63a) einlangenden Sprachsignale an die Arbeitsplätze (11, 12, 13) verteilt.

4. Kommunikationssystem nach einem der vorangehenden Ansprüche, **dadurch gekennzeichnet,**
- **dass** im Signalweg zwischen einer Kontrolleinheit (31, 32, 33) und der Funksendeeinrichtung (51, 52, 53) zumindest eine übergeordnete Kontrolleinheit (41, 42, 43) vorhanden ist,
- **dass** die übergeordnete Kontrolleinheit (41, 42, 43) mit einer Anzahl von Kontrolleinheiten (31a-33a, 31b-33b) verbunden ist, wobei insbesondere jede dieser Kontrolleinheiten (31a-33a, 31b-33b) mit Gruppen von Arbeitsplätzen (11-16) verbunden ist,
- **dass** der übergeordneten Kontrolleinheit (41, 42, 43) die von den Kontrolleinheiten (31a-33a, 31b-33b) abgegebenen Sprachsignale und Bediensignale, PTT, zugeführt sind,
wobei die übergeordnete Kontrolleinheit (41, 42, 43) bei gleichzeitiger Abgabe von Bediensignalen, PTT, mehrerer mit ihr verbundener Kontrolleinheiten (31a-33a, 31b-33b) eine der Kontrolleinheiten (31a-33a, 31b-33b) nach vorgegebenen oder vorgebbaren Kriterien auswählt und die Sprachsignale der ausgewählten Kontrolleinheit an die Funksendeeinrichtung (51, 52, 53) weiterleitet, und
- **dass** die übergeordnete Kontrolleinheit (41, 42, 43) bei Empfang von Sprachsignale von der Funkempfangseinrichtung (61, 62, 63) diese Sprachsignale an die mit der übergeordnete Kontrolleinheit (41, 42, 43) verbundenen Kontrolleinheiten (31a-33a, 31b-33b) weiterleitet und ein Empfangssignal, SQU, an diese Kontrolleinheiten (31a-33a, 31b-33b) überträgt.

5. Kommunikationssystem nach einem der vorangehenden Ansprüche, **dadurch gekennzeichnet, dass** die Kontrolleinheiten (31, 32, 33) oder die übergeordneten Kontrolleinheiten (41, 42, 43) die bei ihnen einlangenden Sprachsignale sowie die jeweils zugehörigen Empfangssignale, SQU, lediglich an eine Auswahl von Arbeitsplätzen (11, 12, 13) oder Kontrolleinheiten (31, 32, 33) übermitteln, wobei vorzugsweise die Kontrolleinheiten (31, 32, 33) oder die übergeordneten Kontrolleinheiten (41, 42, 43) diese Auswahl aufgrund von zuvor erfolgten Anforderungen durch die Arbeitsplätze (11, 12, 13) oder die Kontrolleinheiten (31, 32, 33) treffen.

6. Kommunikationssystem nach einem der vorangehenden Ansprüche, **dadurch gekennzeichnet, dass** die unmittelbar mit den Funkempfangseinrichtungen (61, 62, 63) verbundenen Kontrolleinheiten (31, 32, 33) oder übergeordneten Kontrolleinheiten (41, 42, 43) jeweils mit einer Mehrzahl von Funkempfangseinrichtungen (61, 62, 63) der selben Frequenz verbunden sind und die bei ihnen von den Funkempfangseinrichtungen (61, 62, 63) gleichzeitig einlangenden Sprachsignale bewerten und ein Bewertungssignal (B) erstellen,
das insbesondere
a) eine Reihung der einlangenden Sprachsignale nach der Signalqualität oder
b) das beste der einlangenden Sprachsignale
angibt,
und die unmittelbar mit den Funkempfangseinrichtungen (61, 62, 63) verbundenen Kontrolleinheiten (31, 32, 33) oder übergeordneten Kontrolleinheiten (41, 42, 43) das Bewertungssignal (B) sowie die einzelnen Sprachsignale aller Funkempfangseinrichtungen (61, 62, 63) oder das beste Sprachsignal an die Arbeitsplätze (11, 12, 13) oder die Kontrolleinheiten (31, 32, 33) weiterleiten.

7. Kommunikationssystem nach einem der vorangehenden Ansprüche, **dadurch gekennzeichnet, dass** eine Verkopplungseinheit (7) vorhanden ist, die mit zwei oder mehreren Kontrolleinheiten (31, 32, 33) und/oder übergeordneten Kontrolleinheiten (41, 42, 43) verbunden ist,
wobei die Verkopplungseinheit (7) bei Einlangen von Sprachsignale sowie eines Empfangssignals, SQU, von einer mit ihr verbundenen Kontrolleinheit (31, 32, 33) oder übergeordneten Kontrolleinheit (41, 42, 43) diese Sprachsignale sowie ein Bediensignal, PTT, an die anderen mit ihr verbundenen Kontrolleinheiten (31, 32, 33) und/oder übergeordneten Kontrolleinheiten (41, 42, 43) weiterleitet, wobei insbesondere die Verkopplungseinheit (7) bei gleichzeitigem Einlangen von Sprachsignalen von zwei mit ihr verbundenen Kontrolleinheiten (31, 32, 33) oder übergeordneten Kontrolleinheiten (41, 42, 43) eine der Kontrolleinheiten (31, 32, 33) oder übergeordneten Kontrolleinheiten (41, 42, 43) nach vorgegebenen oder vorgebbaren Kriterien auswählt und nur die Sprachsignale der ausgewählten Kontrolleinheit (31, 32, 33) oder übergeordneten Kontrolleinheit (41, 42, 43) an die übrigen mit der Verkopplungseinheit (7) verbundenen Kontrolleinheiten (31, 32, 33) oder übergeordneten Kontrolleinheiten (41, 42, 43) weiterleitet.

8. Kommunikationssystem nach Anspruch 7, **dadurch gekennzeichnet,**
- **dass** in der Verkopplungseinheit (7) Kriterien für die Weiterleitung von Daten einzelner Kontrolleinheiten (31, 32, 33) oder übergeordneter Kontrolleinheiten (41, 42, 43) an andere Kontrolleinheiten (31, 32, 33) oder übergeordnete Kontrolleinheiten (41, 42, 43) abgespeichert sind, und
- **dass** die Verkopplungseinheit (7) die bei ihr einlangenden Sprachsignale nach diesen Kriterien an die mit ihr verbundenen Kontrolleinheiten (31, 32, 33) oder übergeordneten Kontrolleinheiten (41, 42, 43) überträgt.

9. Kommunikationssystem nach einem der vorangehenden Ansprüche, **dadurch gekennzeichnet,**
- **dass** das Kommunikationssystem eine Anzahl von Verteileinheiten (21, 22, 23) umfasst, die jeweils einem Arbeitsplatz (11, 12, 13) zugeordnet sind, wobei jedem Arbeitsplatz (11, 12, 13) zumindest eine Verteileinheit (21, 22, 23) zugeordnet ist,
- **dass** zwischen jeder der Verteileinheiten (21, 22, 23) und dem dieser Verteileinheit (21, 22, 23) zugeordneten Arbeitsplatz (11, 12, 13) jeweils eine logische oder physische Datenverbindung mit einer vorgegebenen Bandbreite besteht, mit der Sprachsignale von jeder Spracheingabeeinheit (111, 121, 131) und Sprachsignale zu jeder Sprachausgabeeinheit (112, 122, 132) des Arbeitsplatzes (11, 12, 13) sowie auch Bediensignale, PTT, und Empfangssignale, SQU, übertragbar sind,
- **dass** die Verteileinheit (21, 22, 23) die ihr von Funkempfangseinrichtungen (61, 62, 63), insbesondere mittels der Kontrolleinheiten (31, 32, 33), zugehenden Sprachsignale nach einer aufgrund von Steuersignalen vorgegebenen Vorschrift konferiert oder überlagert und die daraus ermittelten Sprachsignale an den Arbeitsplatz (11, 12, 13) übermittelt oder die von einer ausgewählten Funkempfangseinrichtung (61, 62, 63), insbesondere mittels einer der Kontrolleinheiten (31, 32, 33), einlangenden Sprachsignale an den Arbeitsplatz (11, 12, 13) weiterleitet und für den Fall, dass überhaupt Sprachsignale vorliegen, ein Empfangssignal (SQU) an den Arbeitsplatz (11, 12, 13) weiterleitet, und
- **dass** die Verteileinheit (21, 22, 23) ihr vom Arbeitsplatz (11, 12, 13) übermittelte Sprachsignale und Bediensignale, PTT, an vorab mittels Steuersignalen ausgewählte Funksendeeinrichtungen (51, 52, 53), insbesondere mittels einer der Kontrolleinheiten (31, 32, 33), übermittelt, wobei insbesondere die Verteileinheiten (21, 22, 23) als Proxy-Rechner in einem Rechenzentrum (8; 8a, 8b) angeordnet sind und auch die Kontrolleinheiten (31, 32, 33) in diesem Rechenzentrum (8; 8a, 8b) angeordnet sind, wobei die Kontrolleinheiten (31, 32, 33) und die Verteileinheiten (21, 22, 23) jeweils über ein lokales Netzwerk (81; 81a, 81b) miteinander verbunden sind.

10. Kommunikationssystem nach Anspruch 9, **dadurch gekennzeichnet,**
- **dass** ein Arbeitsplatz (11, 12, 13) mehrere Spracheingabeeinheiten (111, 121, 131) und/oder mehrere Sprachausgabeeinheiten (112, 122, 132) aufweist,
- wobei das Kommunikationssystem für jede Spracheingabeeinheit (111, 121, 131) jeweils eine gesonderte Datenverbindung zu einer dem Arbeitsplatz (11, 12, 13) zugeordneten Verteileinheit (21, 22, 23) aufweist, und
- wobei das Kommunikationssystem für jede Sprachausgabeeinheit (112, 122, 132) jeweils eine gesonderte Datenverbindung zu einer dem Arbeitsplatz (11, 12, 13) zugeordneten Verteileinheit (21, 22, 23) aufweist.

11. Kommunikationssystem nach einem der Ansprüche 6 sowie 9 oder 10, **dadurch gekennzeichnet, dass** die Kontrolleinheit (31, 32, 33) das Bewertungssignal (B) an die Verteileinheit (21, 22, 23) übermittelt und die Verteileinheit (21, 22, 23) aufgrund des Bewertungssignals (B) eines der von der jeweiligen Kontrolleinheit (31, 32, 33) übermittelten Sprachsignale auswählt oder aufgrund des Bewertungssignals (B) mehrere der von der jeweiligen Kontrolleinheit (31, 32, 33) übermittelten Sprachsignale miteinander überlagert und das ausgewählte oder überlagerte Signal an den Arbeitsplatz (11, 12, 13) übermittelt.

12. Kommunikationssystem zur Sprachkommunikation mittels einer Anzahl von Arbeitsplätzen (11, 12, 13), insbesondere für Fluglotsen, sowie einer Anzahl von Funksendeeinrichtungen (51, 52, 13) und Funkempfangseinrichtungen (61, 64, 63)
- wobei jeder der Arbeitsplätze (11, 12, 13) jeweils zumindest Folgendes aufweist:
- zumindest eine Spracheingabeeinheit (111, 121, 131), insbesondere ein Mikrofon,
- zumindest eine Sprachausgabeeinheit (112, 122, 132), insbesondere einen Lautsprecher,
- zumindest eine Bedieneinheit (113, 123, 133) zum Erstellen eines Bediensignals, PTT, das angibt, dass vom jeweiligen Arbeitsplatz (11, 12, 13) mittels einer Spracheingabeeinheit (111, 121, 131) Sprachsignale an eine der Funksendeeinrichtungen (51, 52, 53) übertragen werden sollen,
- zumindest eine Anzeigeeinheit (114, 124, 134) zum Empfang eines Empfangssignals, SQU, das angibt, ob an der Sprachausgabeeinheit (112, 122, 132) Sprachsignale von einer der Funkempfangseinrichtungen (61, 62, 63) ausgegeben werden, sowie
- zumindest eine Auswahleinheit zur Auswahl der Funksendeeinrichtungen (51, 52, 53) und Funkempfangseinrichtungen (61, 62, 63), mit denen die Arbeitsplätze aufgrund von Steuersignalen eine Sprachverbindung aufbauen,
- wobei den Funksendeeinrichtungen (51, 52, 53) die von den Spracheingabeeinheiten (111, 121, 131) erstellten Sprachsignale sowie die von den Bedieneinheiten (113, 123, 133) erstellten Bediensignale, PTT, zugeführt sind und die Funksendeeinrichtung (51, 52, 53) zur Abgabe der von einem Arbeitsplatz (11, 12, 13) übertragenen Sprachsignale bei gleichzeitiger Übermittlung eines Bediensignals, PTT, mittels Funk ausgebildet ist, und
- wobei die Funkempfangseinrichtungen (61, 62, 63) zum Empfang von Sprachsignalen mittels Funk ausgebildet sind, die von den Funkempfangseinrichtungen (61, 62, 63) empfangenen Sprachsignale den einzelnen Arbeitsplätzen (11, 12, 13) zur Abgabe durch die Sprachausgabeeinheiten (112, 122, 132) zugeführt sind, und die Funkempfangseinrichtungen (61, 62, 63) während des Empfangs von Sprachsignalen sowie deren Weiterleitung jeweils ein Empfangssignal (SQU) an die Arbeitsplätze (11, 12, 13) übermitteln,
- wobei das Kommunikationssystem eine Anzahl von Verteileinheiten (21, 22, 23) umfasst, die jeweils einem Arbeitsplatz (11, 12, 13) zugeordnet sind, wobei jedem Arbeitsplatz (11, 12, 13) zumindest eine Verteileinheit (21, 22, 23) zugeordnet ist,
- dass zwischen jeder der Verteileinheiten (21, 22, 23) und dem dieser Verteileinheit (21, 22, 23) zugeordneten Arbeitsplatz (11, 12, 13) jeweils eine logische oder physische Datenverbindung mit einer vorgegebenen Bandbreite besteht, mit der Sprachsignale von jeder Spracheingabeeinheit (111, 121, 131) und Sprachsignale zu jeder Sprachausgabeeinheit (112, 122, 132) des Arbeitsplatzes (11, 12, 13) sowie auch Bediensignale, PTT, und Empfangssignale, SQU, übertragbar sind,
- wobei die Verteileinheit (21, 22, 23) die ihr von Funkempfangseinrichtungen (61, 62, 63), insbesondere mittels der Kontrolleinheiten (31, 32, 33), zugehenden Sprachsignale nach einer aufgrund von Steuersignalen vorgegebenen Vorschrift konferiert oder überlagert und die daraus ermittelten Sprachsignale an den Arbeitsplatz (11, 12, 13) übermittelt oder die von einer ausgewählten Funkempfangseinrichtung (61, 62, 63), insbesondere mittels einer der Kontrolleinheiten (31, 32, 33), einlangenden Sprachsignale an den Arbeitsplatz (11, 12, 13) weiterleitet und für den Fall, dass überhaupt Sprachsignale vorliegen, ein Empfangssignal (SQU) an den Arbeitsplatz (11, 12, 13) weiterleitet, und
- wobei die Verteileinheit (21, 22, 23) ihr vom Arbeitsplatz (11, 12, 13) übermittelte Sprachsignale und Bediensignale, PTT, an vorab mittels Steuersignalen ausgewählte Funksendeeinrichtungen (51, 52, 53), insbesondere mittels einer der Kontrolleinheiten (31, 32, 33), übermittelt.

13. Kommunikationssystem nach Anspruch 12, **dadurch gekennzeichnet,**
- **dass** im Signalweg zwischen den Verteileinheiten (21, 22, 23) und den Funksendeeinrichtungen (51, 52, 53) und zwischen den Arbeitsplätzen (11, 12, 13) und den Funkempfangseinrichtungen (61, 62, 63) eine Anzahl von Kontrolleinheiten (31, 32, 33) vorgesehen ist, wobei jede Kontrolleinheit (31, 32, 33) mit zumindest einer Funksendeeinrichtung (51, 52, 53) und zumindest eine Funkempfangseinrichtung (61, 62, 63) in Verbindung steht und dieser zugeordnet ist,
wobei die derselben Kontrolleinheit (31, 32, 33) zugeordneten Funksendeeinrichtungen (51, 52, 53) und Funkempfangseinrichtungen (61, 62, 63), vorzugsweise dieselbe Funkfrequenz nutzen, und wobei insbesondere jede Funksendeeinrichtung (51, 52, 53) und Funkempfangseinrichtung (61, 62, 63) nur einer einzigen Kontrolleinheit (31, 32, 33) zugeordnet ist,
- **dass** mehrere Verteileinheiten (21, 22, 23) mit derselben Kontrolleinheit (31, 32, 33), insbesondere alle Verteileinheiten (21, 22, 23) mit allen Kontrolleinheiten (31, 32, 33), verbunden sind,
- **dass** die Kontrolleinheiten (31, 32, 33) bei gleichzeitigem Vorliegen einer Vielzahl von Bediensignalen, PTT, mehrerer Verteileinheiten (21, 22, 23) die Sprachsignale einer der Verteileinheiten (21, 22, 23) nach vorgegebenen oder vorgebbaren Kriterien auswählen oder die Sprachsignale mehrerer Arbeitsplätze nach vorgegebenen Kriterien überlagern und das so erhaltene ausgewählte oder überlagerte Sprachsignal zum Senden an die Funksendeeinrichtung übertragen, und
- **dass** die Kontrolleinheiten (31, 32, 33) bei Vorliegen eines von der Funkempfangseinrichtung (61, 62, 63) übermittelten Sprachsignals an die mit ihr verbundenen Verteileinheiten (21, 22, 23) ein Empfangssignal, SQU, übermitteln und die Sprachsignale an diese Verteileinheiten (21, 22, 23) übertragen.

14. Kommunikationssystem nach Anspruch 13, **dadurch gekennzeichnet,**
- **dass** zumindest eine Kontrolleinheit (31, 32, 33) mit einer Mehrzahl von Funksendeeinrichtungen (51, 52, 53) verbunden ist,
- **dass** die Kontrolleinheit (21, 22, 23) die bei ihr von einer Verteileinheit (21, 22, 23) einlangenden Sprachsignale nur an eine der Funksendeeinrichtungen (51, 52, 53) oder an alle mit ihr in Verbindung stehenden Funksendeeinrichtungen (51, 52, 53) zur Übertragung übermittelt, und
- **dass** die Kontrolleinheit (31, 32, 33) die bei ihr von den Funkempfangseinrichtungen (61, 62, 63) einlangenden Sprachsignale an die mit ihr in Sprachverbindung stehenden Verteileinheiten (21, 22, 23) übermittelt.

15. Kommunikationssystem nach Anspruch 13 oder 14, **dadurch gekennzeichnet,**
- **dass** die Kontrolleinheit (31, 32, 33) mit zumindest einer Funksendeeinrichtung (51, 52, 53) und zumindest einer Backup-Funksendeeinrichtung (52a, 53a) verbunden ist und dass die Kontrolleinheit (31, 32, 33) die Sprachsignale bei Funktionieren der Funksendeeinrichtung (51, 52, 53) an diese überträgt und die Sprachsignale andernfalls an die Backup-Funksendeeinrichtung (51b, 51c) überträgt, und/oder
- **dass** die Kontrolleinheit (31, 32, 33) mit zumindest einer Backup-Funkempfangseinrichtung (62a, 63a) verbunden ist und dass die Kontrolleinheit (31, 32, 33) bei Funktionieren der mit ihr verbundenen Funkempfangseinrichtung (61, 62, 63) die ihr von der Funkempfangseinrichtung (61, 62, 63) einlangenden Sprachsignale an die Verteileinheiten (21, 22, 23) verteilt und andernfalls die ihr von der Backup-Funkempfangseinrichtung (61, 62, 63) einlangenden Sprachsignale an die Verteileinheiten (21, 22, 23) verteilt.

16. Kommunikationssystem nach einem der Ansprüche 13bis 15, **dadurch gekennzeichnet,**
- **dass** im Signalweg zwischen einer Kontrolleinheit (31, 32, 33) und der Funksendeeinrichtung (51, 52, 53) zumindest eine übergeordnete Kontrolleinheit (41, 42, 43) vorhanden ist,
- **dass** die übergeordnete Kontrolleinheit (41, 42, 43) mit einer Anzahl von Kontrolleinheiten (31a-33a, 31b-33b) verbunden ist, wobei insbesondere jede dieser Kontrolleinheiten (31a-33a, 31b-33b) mit Gruppen jeweils voneinander verschiedener Verteileinheiten (21-26) sowie Arbeitsplätzen (11-16) verbunden ist,
- **dass** der übergeordneten Kontrolleinheit (41, 42, 43) die von den Kontrolleinheiten (31a-33a, 31b-33b) abgegebenen Sprachsignale und Bediensignale, PTT, zugeführt sind,
wobei die übergeordnete Kontrolleinheit (41, 42, 43) bei gleichzeitiger Abgabe von Bediensignalen, PTT, mehrerer mit ihr verbundener Kontrolleinheiten (31a-33a, 31b-33b) eine der Kontrolleinheiten (31a-33a, 31b-33b) nach vorgegebenen oder vorgebbaren Kriterien auswählt und die Sprachsignale der ausgewählten Kontrolleinheit an die Funksendeeinrichtung (51, 52, 53) weiterleitet, und
- **dass** die übergeordnete Kontrolleinheit (41, 42, 43) bei Empfang von Sprachsignale von der Funkempfangseinrichtung (61, 62, 63) diese Sprachsignale an die mit der übergeordnete Kontrolleinheit (41, 42, 43) verbundenen Kontrolleinheiten (31a-33a, 31b-33b) weiterleitet und ein Empfangssignal, SQU, an diese Kontrolleinheiten (31a-33a, 31b-33b) überträgt.

17. Kommunikationssystem nach einem der Ansprüche 13 bis 16, **dadurch gekennzeichnet, dass** die Kontrolleinheiten (31, 32, 33) oder die übergeordneten Kontrolleinheiten (41, 42, 43) die bei ihnen einlangenden Sprachsignale sowie das jeweils zugehörige Empfangssignal, SQU, lediglich an eine Auswahl von Verteileinheiten (21, 22, 23) oder Kontrolleinheiten (31, 32, 33) übermitteln, wobei vorzugsweise die Kontrolleinheiten (31, 32, 33) oder die übergeordneten Kontrolleinheiten (41, 42, 43) diese Auswahl aufgrund von zuvor erfolgten Anforderungen durch die Arbeitsplätze (11, 12, 13) oder die Kontrolleinheiten (31, 32, 33) treffen.

18. Kommunikationssystem nach einem der Ansprüche 13 bis 17, **dadurch gekennzeichnet, dass** die unmittelbar mit den Funkempfangseinrichtungen (61, 62, 63) verbundenen Kontrolleinheiten (31, 32, 33) oder übergeordneten Kontrolleinheiten (41, 42, 43) jeweils mit einer Mehrzahl von Funkempfangseinrichtungen (61, 62, 63) verbunden sind und die bei ihnen von den Funkempfangseinrichtungen (61, 62, 63) einlangenden Sprachsignale bewerten und ein Bewertungssignal (B) erstellen,
das insbesondere
a) eine Reihung der einlangenden Sprachsignale nach der Signalqualität oder
b) das beste der einlangenden Sprachsignale
angibt,
und die unmittelbar mit den Funkempfangseinrichtungen (61, 62, 63) verbundenen Kontrolleinheiten (31, 32, 33) oder übergeordneten Kontrolleinheiten (41, 42, 43) das Bewertungssignal (B) sowie die einzelnen Sprachsignale aller Funkempfangseinrichtungen an die Verteileinheit (21, 22, 23) oder die Kontrolleinheiten (31, 32, 33) weiterleiten, wobei insbesondere
- die Kontrolleinheit (31, 32, 33) das Bewertungssignal (B) an die Verteileinheit (21, 22, 23) übermittelt und die Verteileinheit (21, 22, 23) aufgrund des Bewertungssignals (B) eines der von der jeweiligen Kontrolleinheit (31, 32, 33) übermittelten Sprachsignale auswählt oder aufgrund des Bewertungssignals (B) mehrere der von der jeweiligen Kontrolleinheit (31, 32, 33) übermittelten Sprachsignale miteinander überlagert und das ausgewählte oder überlagerte Signal an den jeweiligen mit der Verteileinheit (21, 22, 23) verbundenen Arbeitsplatz (11, 12, 13) übermittelt.

19. Kommunikationssystem nach einem der Ansprüche 13 bis 18, **dadurch gekennzeichnet, dass** eine Verkopplungseinheit (7) vorhanden ist, die mit zwei oder mehreren Kontrolleinheiten (31, 32, 33) und/oder übergeordneten Kontrolleinheiten (41, 42, 43) verbunden ist,
wobei die Verkopplungseinheit (7) bei Einlangen von Sprachsignale sowie eines Empfangssignals, SQU, von einer mit ihr verbundenen Kontrolleinheit (31, 32, 33) oder übergeordneten Kontrolleinheit (41, 42, 43) diese Sprachsignale sowie ein Bediensignal, PTT, an die anderen mit ihr verbundenen Kontrolleinheiten (31, 32, 33) und/oder übergeordneten Kontrolleinheiten (41, 42, 43) weiterleitet, wobei insbesondere die Verkopplungseinheit (7) bei gleichzeitigem Empfang von Sprachsignalen von zwei mit ihr verbundenen Kontrolleinheiten (31, 32, 33) oder übergeordneten Kontrolleinheiten (41, 42, 43) eine der Kontrolleinheiten (31, 32, 33) oder übergeordneten Kontrolleinheiten (41, 42, 43) nach vorgegebenen oder vorgebbaren Kriterien auswählt und nur die Sprachsignale der ausgewählten Kontrolleinheit (31, 32, 33) oder übergeordneten Kontrolleinheit (41, 42, 43) an die übrigen mit der Verkopplungseinheit (7) verbundenen Kontrolleinheiten (31, 32, 33) oder übergeordneten Kontrolleinheiten (41, 42, 43) weiterleitet.

20. Kommunikationssystem nach Anspruch 19, **dadurch gekennzeichnet,**
- **dass** in der Verkopplungseinheit (7) Kriterien für die Weiterleitung von Daten einzelner Kontrolleinheiten (31, 32, 33) oder übergeordneter Kontrolleinheiten (41, 42, 43) an andere Kontrolleinheiten (31, 32, 33) oder übergeordnete Kontrolleinheiten (41, 42, 43) abgespeichert sind, und
- **dass** die Verkopplungseinheit (7) die bei ihr einlangenden Sprachsignale nach diesen Kriterien an die mit ihr verbundenen Kontrolleinheiten (31, 32, 33) oder übergeordneten Kontrolleinheiten (41, 42, 43) überträgt.

21. Kommunikationssystem nach einem der Ansprüche 12 bis 20, **dadurch gekennzeichnet, dass** die Verteileinheiten (21, 22, 23) als Proxy-Rechner in einem Rechenzentrum (8; 8a, 8b) angeordnet sind und auch die Kontrolleinheiten (31, 32, 33) in diesem Rechenzentrum (8; 8a, 8b) angeordnet sind, wobei die Kontrolleinheiten (31, 32, 33) und die Verteileinheiten (21, 22, 23) jeweils über ein lokales Netzwerk (81; 81a, 81b) miteinander verbunden sind.

22. Kommunikationssystem nach einem der Ansprüche 12 bis 21, **dadurch gekennzeichnet, dass** ein Arbeitsplatz (11, 12, 13) mehrere Spracheingabeeinheiten (111, 121, 131) und/oder mehrere Sprachausgabeeinheiten (112, 122, 132) aufweist,
- wobei das Kommunikationssystem für jede Spracheingabeeinheit (111, 121, 131) jeweils eine gesonderte Datenverbindung zu einer dem Arbeitsplatz (11, 12, 13) zugeordneten Verteileinheit (21, 22, 23) aufweist, und
- wobei das Kommunikationssystem für jede Sprachausgabeeinheit (112, 122, 132) jeweils eine gesonderte Datenverbindung zu einer dem Arbeitsplatz (11, 12, 13) zugeordneten Verteileinheit (21, 22, 23) aufweist.

23. Verfahren zur Übertragung von Sprachdaten von einer Anzahl von Arbeitsplätzen (11, 12, 13), insbesondere für Fluglotsen, umfassend jeweils:
- zumindest eine Spracheingabeeinheit (111, 121, 131), insbesondere ein Mikrofon,
- zumindest eine Sprachausgabeeinheit (112, 122, 132), insbesondere einen Lautsprecher oder Kopfhörer,
- zumindest eine Bedieneinheit (113, 123, 133) zum Erstellen eines Bediensignals, PTT, das angibt, dass vom jeweiligen Arbeitsplatz (11, 12, 13) mittels einer Spracheingabeeinheit (111, 121, 131) Sprachsignale an eine Funksendeeinrichtung einer Anzahl von Funksendeeinrichtungen (51, 52, 53) übertragen werden sollen,
- zumindest eine Anzeigeeinheit (114, 124, 134) zur Anzeige eines Empfangssignals, SQU, das angibt, ob an der Sprachausgabeeinheit (112, 122, 132) Sprachsignale von einer Funkempfangseinrichtung einer Anzahl von Funkempfangseinrichtungen (61, 62, 63) ausgegeben werden, sowie
- zumindest eine Auswahleinheit zur Auswahl der Funksendeeinrichtungen (51, 52, 53) und Funkempfangseinrichtungen (61, 62, 63), mit denen die Arbeitsplätze aufgrund von Steuersignalen eine Sprachverbindung aufbauen,
mittels einer Anzahl von Funksendeeinrichtungen (51, 52, 53) und Funkempfangseinrichtungen (61, 62, 63),
- wobei die von den Spracheingabeeinheiten (111, 121, 131) erstellten Sprachsignale sowie die von den Bedieneinheiten (113, 123, 133) erstellten Bediensignale, PTT, an die Funksendeeinrichtungen (51, 52, 53) übertragen werden, und die von einem Arbeitsplatz (11, 12, 13) abgegebenen Sprachsignale an die Funksendeeinrichtung (51, 52, 53) weitergeleitet werden und bei gleichzeitiger Übermittlung eines Bediensignals, PTT, vom Arbeitsplatz (11, 12, 13) von dieser mittels Funk abgesendet werden,
- wobei die Funkempfangseinrichtungen (61, 62, 63) Sprachsignale mittels Funk empfangen und diese Sprachsignale an die Arbeitsplätze weitergeleitet werden und mit den Sprachausgabeeinheiten (112, 122, 132) ausgegeben werden, wobei während des Empfangs von Sprachsignale sowie während der Weiterleitung der Sprachsignale an die Arbeitsplätze (11, 12, 13) jeweils ein Empfangssignal, SQU, an den jeweiligen Arbeitsplatz (11, 12, 13) übermittelt wird und von der Anzeigeeinheit angezeigt wird,
- wobei Sprachdaten von den Arbeitsplätzen (11, 12, 13) zu den Funksendeeinrichtungen (51, 52, 53) und Funkempfangseinrichtungen (61, 62, 63) über Kontrolleinheiten (31, 32, 33) übertragen werden,
- wobei Kontrolleinheiten (31, 32, 33) bei gleichzeitigem Vorliegen einer Vielzahl von Bediensignalen, PTT, mehrerer Arbeitsplätze (11, 12, 13) die Sprachsignale eines der Arbeitsplätze (11, 12, 13) nach vorgegebenen oder vorgebbaren Kriterien auswählen oder die Sprachsignale mehrerer Arbeitsplätze nach vorgegebenen Kriterien überlagern und das so erhaltene ausgewählte oder an die Funksendeeinrichtung überlagerte Sprachsignal zum Senden übertragen, und
- wobei die Kontrolleinheiten (31, 32, 33) bei Vorliegen eines von der Funkempfangseinrichtung (61, 62, 63) übermittelten Sprachsignals an die mit ihnen verbundenen Arbeitsplätze (11, 12, 13) ein Empfangssignal, SQU, übermitteln und die Sprachsignale an diese Arbeitsplätze (11, 12, 13) übertragen.

24. Verfahren nach Anspruch 23, **dadurch gekennzeichnet,**
- **dass** die Kontrolleinheiten im Signalweg zwischen den Arbeitsplätzen (11, 12, 13) und den Funksendeeinrichtungen (51, 52, 53) und zwischen den Arbeitsplätzen (11, 12, 13) und den Funkempfangseinrichtungen (61, 62, 63) angeordnet werden, wobei jede Kontrolleinheit (31, 32, 33) mit zumindest einer Funksendeeinrichtung und zumindest einer Funkempfangseinrichtung (61, 62, 63) in Kommunikationsverbindung gebracht wird,
wobei die derselben Kontrolleinheit (31, 32, 33) zugeordneten Funksendeeinrichtungen (51, 52, 53) und Funkempfangseinrichtungen (61, 62, 63) vorzugsweise dieselbe Funkfrequenz nutzen, und wobei insbesondere jede Funksendeeinrichtung (51, 52, 53) und Funkempfangseinrichtung (61, 62, 63) vorzugsweise nur einer einzigen Kontrolleinheit (31, 32, 33) zugeordnet wird, und
- **dass** mehrere Arbeitsplätze (11, 12, 13) mit derselben Kontrolleinheit (31, 32, 33), insbesondere alle Arbeitsplätze (11, 12, 13) mit allen Kontrolleinheiten (31, 32, 33), verbunden werden.

25. Verfahren nach Anspruch 23 oder 24, wobei zumindest eine Kontrolleinheit (31, 32, 33) mit einer Mehrzahl von Funksendeeinrichtungen (51, 52, 53) verbunden ist, **dadurch gekennzeichnet,**
- **dass** von der Kontrolleinheit (31, 32, 33) die bei ihr von einem Arbeitsplatz (11, 12, 13) einlangenden Sprachsignale nur an eine der Funksendeeinrichtungen (51, 52, 53) oder an alle mit ihr in Verbindung stehenden Funksendeeinrichtungen (51, 52, 53) zur Übertragung übermittelt werden, und/oder
- **dass** von der Kontrolleinheit (31, 32, 33) die bei ihr von den Funkempfangseinrichtungen (61, 62, 63) einlangenden Sprachsignale an die mit ihr in Sprachverbindung stehenden Arbeitsplätze (11, 12, 13) übermittelt werden.

26. Verfahren nach einem der Ansprüche 23bis 25, **dadurch gekennzeichnet,**
- **dass** die Kontrolleinheit (31, 32, 33) die Sprachsignale bei Funktionieren der Funksendeeinrichtung (51, 52, 53) an diese überträgt und die Sprachsignale andernfalls an eine mit ihr in Verbindung stehende Backup-Funksendeeinrichtung (52a, 53a) überträgt, und/oder
- **dass** die Kontrolleinheit (31, 32, 33) bei Funktionieren der mit ihr verbundenen Funkempfangseinrichtung (61, 62, 63) die ihr von der Funkempfangseinrichtung (61, 62, 63) einlangenden Sprachsignale an die Arbeitsplätze (11, 12, 13) verteilt und andernfalls die ihr von einer mit ihr in Verbindung stehenden Backup-Funkempfangseinrichtung (62a, 63a) einlangenden Sprachsignale an die Arbeitsplätze (11, 12, 13) verteilt.

27. Verfahren nach einem der Ansprüche 23 bis 26, **dadurch gekennzeichnet,**
- **dass** im Signalweg zwischen einer Kontrolleinheit (31, 32, 33) und der Funksendeeinrichtung (51, 52, 53) zumindest eine übergeordnete Kontrolleinheit (41, 42, 43) vorhanden ist, die übergeordnete Kontrolleinheit (41, 42, 43) mit einer Anzahl von Kontrolleinheiten (31a-33a, 31b-33b) verbunden ist, wobei insbesondere jede dieser Kontrolleinheiten (31a-33a, 31b-33b) mit Gruppen von Arbeitsplätzen (11-16) verbunden ist,
- **dass** die von den Kontrolleinheiten (31a-33a, 31b-33b) abgegebenen Sprachsignale und Bediensignale, PTT, an die übergeordnete Kontrolleinheit (41, 42, 43) übertragen werden,
wobei die übergeordnete Kontrolleinheit (41, 42, 43) bei gleichzeitiger Abgabe von Bediensignalen, PTT, mehrerer mit ihr verbundener Kontrolleinheiten (31a-33a, 31b-33b) eine der Kontrolleinheiten (31a-33a, 31b-33b) nach vorgegebenen oder vorgebbaren Kriterien auswählt und die Sprachsignale der ausgewählten Kontrolleinheit an die Funksendeeinrichtung (51, 52, 53) weiterleitet, und
- **dass** die übergeordnete Kontrolleinheit (41, 42, 43) bei Empfang von Sprachsignale von der Funkempfangseinrichtung (61, 62, 63) diese Sprachsignale an die mit der übergeordneten Kontrolleinheit (41, 42, 43) verbundenen Kontrolleinheiten (31a-33a, 31b-33b) weiterleitet und ein Empfangssignal, SQU, an diese Kontrolleinheiten (31a-33a, 31b-33b) überträgt.

28. Verfahren nach einem der Ansprüche 23 bis 27, **dadurch gekennzeichnet, dass** die Kontrolleinheiten (31, 32, 33) oder die übergeordneten Kontrolleinheiten (41, 42, 43) die bei ihnen einlangenden Sprachsignale sowie die jeweils zugehörigen Empfangssignale, SQU, lediglich an eine Auswahl von Arbeitsplätzen (11, 12, 13) oder Kontrolleinheiten (31, 32, 33) übermitteln, wobei vorzugsweise die Kontrolleinheiten (31, 32, 33) oder die übergeordneten Kontrolleinheiten (41, 42, 43) diese Auswahl aufgrund von zuvor erfolgten Anforderungen durch die Arbeitsplätze (11, 12, 13) oder die Kontrolleinheiten (31, 32, 33) treffen.

29. Verfahren nach einem der Ansprüche 23 bis 28, **dadurch gekennzeichnet, dass** die unmittelbar mit den Funkempfangseinrichtungen (61, 62, 63) verbundenen Kontrolleinheiten (31, 32, 33) oder übergeordneten Kontrolleinheiten (41, 42, 43) jeweils Sprachdaten von einer Mehrzahl von Funkempfangseinrichtungen (61, 62, 63) der selben Frequenz erhalten und die bei ihnen von den Funkempfangseinrichtungen (61, 62, 63) gleichzeitig einlangenden Sprachsignale bewerten und ein Bewertungssignal (B) erstellen, das insbesondere
a) eine Reihung der einlangenden Sprachsignale nach der Signalqualität oder
b) das beste der einlangenden Sprachsignale
angibt,
und die unmittelbar mit den Funkempfangseinrichtungen (61, 62, 63) verbundenen Kontrolleinheiten (31, 32, 33) oder übergeordneten Kontrolleinheiten (41, 42, 43) das Bewertungssignal (B) sowie die einzelnen Sprachsignale aller Funkempfangseinrichtungen (61, 62, 63) oder das beste Sprachsignal an die Arbeitsplätze (11, 12, 13) oder die Kontrolleinheiten (31, 32, 33) weiterleiten.

30. Verfahren nach einem der Ansprüche 23 bis 29, **dadurch gekennzeichnet, dass** eine Verkopplungsgruppe vorgegeben wird, die zwei oder mehreren Kontrolleinheiten (31, 32, 33) und/oder übergeordneten Kontrolleinheiten (41, 42, 43) umfasst,
wobei bei Einlangen von Sprachsignalen sowie eines Empfangssignals, SQU, von einer Kontrolleinheit (31, 32, 33) oder übergeordneten Kontrolleinheit (41, 42, 43) der Verkopplungsgruppe diese Sprachsignale sowie ein Bediensignal, PTT, an die anderen Kontrolleinheiten (31, 32, 33) und/oder übergeordneten Kontrolleinheiten (41, 42, 43) der Verkopplungsgruppe weitergeleitet werden

31. Verfahren nach Anspruch 30, **dadurch gekennzeichnet, dass** bei gleichzeitigem Einlangen von Sprachsignalen von zwei Kontrolleinheiten (31, 32, 33) oder übergeordneten Kontrolleinheiten (41, 42, 43) der Verkopplungsgruppe eine der Kontrolleinheiten (31, 32, 33) oder übergeordneten Kontrolleinheiten (41, 42, 43) nach vorgegebenen oder vorgebbaren Kriterien ausgewählt wird und nur die Sprachsignale dieser ausgewählten Kontrolleinheit (31, 32, 33) oder übergeordneten Kontrolleinheit (41, 42, 43) an die übrigen Kontrolleinheiten (31, 32, 33) oder übergeordneten Kontrolleinheiten (41, 42, 43) der Verkopplungsgruppe weitergeleitet werden.

32. Verfahren nach Anspruch 30 oder 31, **dadurch gekennzeichnet,**
- **dass** Kriterien für die Weiterleitung von Daten einzelner Kontrolleinheiten (31, 32, 33) oder übergeordneter Kontrolleinheiten (41, 42, 43) an andere Kontrolleinheiten (31, 32, 33) oder übergeordnete Kontrolleinheiten (41, 42, 43) der Verkopplungsgruppe, insbesondere von einem der Arbeitsplätze, vorgegeben werden, und
- **dass** bei Einlangen von Sprachsignale von einer Kontrolleinheit (31, 32, 33) oder übergeordneten Kontrolleinheit (41, 42, 43) dieser Verkopplungsgruppe nach diesen vorgegebenen Kriterien Sprachdaten an die Kontrolleinheiten (31, 32, 33) oder übergeordneten Kontrolleinheiten (41, 42, 43) der Verkopplungsgruppe übertragen werden.

33. Verfahren nach einem der Ansprüche 23 bis 32, **dadurch gekennzeichnet,**
- **dass** für die Arbeitsplätze (11, 12, 13) auf von den Arbeitsplätzen entfernt angeordneten Rechnern, insbesondere auf einer Verteileinheit (21, 22, 23), jeweils ein Arbeitsplatz-Service ausgeführt wird, wobei jedem Arbeitsplatz (11, 12, 13) zumindest ein Arbeitsplatz-Service zugeordnet wird, und
- **dass** zwischen dem Arbeitsplatz-Service und dem diesem Arbeitsplatz-Service zugeordneten Arbeitsplatz (11, 12, 13) jeweils eine logische oder physische Datenverbindung mit einer vorgegebenen Bandbreite erstellt wird, über die Sprachsignale von der Spracheingabeeinheit (111, 121, 131) und Sprachsignale zu der Sprachausgabeeinheit (112, 122, 132) des Arbeitsplatzes (11, 12, 13) sowie auch Bediensignale, PTT, und Empfangssignale, SQU, übertragen werden,
- **dass** das Arbeitsplatz-Service die ihm von Funkempfangseinrichtungen (61, 62, 63), insbesondere mittels der Kontrolleinheiten (31, 32, 33), zugehenden Sprachsignale nach einer aufgrund von Steuersignalen vorgegebenen Vorschrift konferiert oder überlagert und die daraus ermittelten Sprachsignale an den Arbeitsplatz (11, 12, 13) übermittelt oder die von einer ausgewählten Funkempfangseinrichtung (61, 62, 63), insbesondere mittels einer der Kontrolleinheiten (31, 32, 33), einlangenden Sprachsignale an den Arbeitsplatz (11, 12, 13) weiterleitet und für den Fall, dass überhaupt Sprachsignale vorliegen, ein Empfangssignal, SQU, an den Arbeitsplatz (11, 12, 13) weiterleitet, und
- **dass** das Arbeitsplatz-Service die Sprachsignale und Bediensignale, PTT, die ihm vom Arbeitsplatz (11, 12, 13) übermittelt wurden, an Funksendeeinrichtungen (51, 52, 53), insbesondere mittels einer der Kontrolleinheiten (31, 32, 33), übermittelt, die vorab mittels Steuersignalen ausgewählt wurden, wobei insbesondere die Arbeitsplatz-Services auf Proxy-Rechnern, insbesondere auf Verteileinheiten (21, 22, 23), in einem Rechenzentrum (8; 8a, 8b) ablaufen und mit den ebenfalls in diesem Rechenzentrum angeordneten Kontrolleinheiten (31, 32, 33) über ein lokales Netzwerk (81; 81a, 81b) miteinander kommunizieren, insbesondere Sprachsignale austauschen.

34. Verfahren nach einem der Ansprüche 23 bis 33, **dadurch gekennzeichnet, dass** ein Arbeitsplatz (11, 12, 13) mehrere Spracheingabeeinheiten (111, 121, 131) und/oder mehrere Sprachausgabeeinheiten (112, 122, 132) aufweist,
- wobei von jeder Spracheingabeeinheit (111, 121, 131) jeweils Sprachsignale über eine gesonderte Datenverbindung an das jeweilige Arbeitsplatz-Service übertragen werden, und
- wobei an jede Sprachausgabeeinheit (112, 122, 132) jeweils Sprachsignale über eine gesonderte Datenverbindung von dem jeweiligen Arbeitsplatz-Service übertragen werden.

35. Verfahren nach einem der Ansprüche 29 und 33 oder 34, **dadurch gekennzeichnet, dass** die Kontrolleinheit (31, 32, 33) das Bewertungssignal (B) an die Verteileinheit (21, 22, 23) übermittelt und das Arbeitsplatz-Service aufgrund des Bewertungssignals (B) eines der von der jeweiligen Kontrolleinheit (31, 32, 33) übermittelten Sprachsignale auswählt oder aufgrund des Bewertungssignals (B) mehrere der von der jeweiligen Kontrolleinheit (31, 32, 33) übermittelten Sprachsignale miteinander überlagert und das ausgewählte oder überlagerte Signal an den Arbeitsplatz (11, 12, 13) übermittelt.

36. Verfahren zur Übertragung von Sprachdaten von einer Anzahl von Arbeitsplätzen (11, 12, 13), insbesondere für Fluglotsen, umfassend jeweils:
- zumindest eine Spracheingabeeinheit (111, 121, 131), insbesondere ein Mikrofon,
- zumindest eine Sprachausgabeeinheit (112, 122, 132), insbesondere einen Lautsprecher oder Kopfhörer,
- zumindest eine Bedieneinheit (113, 123, 133) zum Erstellen eines Bediensignals, PTT, das angibt, dass vom jeweiligen Arbeitsplatz (11, 12, 13) mittels der Spracheingabeeinheit (111, 121, 131) Sprachsignale an eine Funksendeeinrichtung einer Anzahl von Funksendeeinrichtungen (51, 52, 53) übertragen werden sollen,
- zumindest eine Anzeigeeinheit (114, 124, 134) zur Anzeige eines Empfangssignals, SQU, das angibt, ob an der Sprachausgabeeinheit (112, 122, 132) Sprachsignale von einer Funkempfangseinrichtung einer Anzahl von Funkempfangseinrichtungen (61, 62, 63) ausgegeben werden, sowie
- zumindest eine Auswahleinheit zur Auswahl der Funksendeeinrichtungen (51, 52, 53) und Funkempfangseinrichtungen (61, 62, 63), mit denen die Arbeitsplätze aufgrund von Steuersignalen eine Sprachverbindung aufbauen,
mittels einer Anzahl von Funksendeeinrichtungen (51, 52, 53) und Funkempfangseinrichtungen (61, 62, 63)
- wobei die von den Spracheingabeeinheiten (111, 121, 131) erstellten Sprachsignale sowie die von den Bedieneinheiten (113, 123, 133) erstellten Bediensignale, PTT, an die Funksendeeinrichtungen (51, 52, 53) übertragen werden, und die von einem Arbeitsplatz (11, 12, 13) abgegebenen Sprachsignale an die Funksendeeinrichtung (51, 52, 53) weitergeleitet werden und bei gleichzeitiger Übermittlung eines Bediensignals, PTT, vom Arbeitsplatz (11, 12, 13) von dieser mittels Funk abgesendet werden,
- wobei die Funkempfangseinrichtungen (61, 62, 63) Sprachsignale mittels Funk empfangen und diese Sprachsignale an die Arbeitsplätze weitergeleitet werden und mit den Sprachausgabeeinheiten (112, 122, 132) ausgegeben werden, wobei während des Empfangs von Sprachsignale sowie während der Weiterleitung der Sprachsignale an die Arbeitsplätze (11, 12, 13) jeweils ein Empfangssignal, SQU, an den jeweiligen Arbeitsplatz (11, 12, 13) übermittelt wird und von der Anzeigeeinheit angezeigt wird,
- wobei für die Arbeitsplätze (11, 12, 13) auf von den Arbeitsplätzen entfernt angeordneten Rechnern, insbesondere auf einer Verteileinheit (21, 22, 23), jeweils ein Arbeitsplatz-Service ausgeführt wird, wobei jedem Arbeitsplatz (11, 12, 13) zumindest ein Arbeitsplatz-Service zugeordnet wird,
- wobei zwischen dem Arbeitsplatz-Service und dem diesem Arbeitsplatz-Service zugeordneten Arbeitsplatz (11, 12, 13) jeweils eine logische oder physische Datenverbindung mit einer vorgegebenen Bandbreite erstellt wird, über die Sprachsignale von der Spracheingabeeinheit (111, 121, 131) und Sprachsignale zu der Sprachausgabeeinheit (112, 122, 132) des Arbeitsplatzes (11, 12, 13) sowie auch Bediensignale, PTT, und Empfangssignale, SQU, übertragen werden,
- wobei das Arbeitsplatz-Service die ihm von Funkempfangseinrichtungen (61, 62, 63), insbesondere mittels der Kontrolleinheiten (31, 32, 33), zugehenden Sprachsignale nach einer aufgrund von Steuersignalen vorgegebenen Vorschrift konferiert oder überlagert und die daraus ermittelten Sprachsignale an den Arbeitsplatz (11, 12, 13) übermittelt oder die von einer ausgewählten Funkempfangseinrichtung (61, 62, 63), insbesondere mittels einer der Kontrolleinheiten (31, 32, 33), einlangenden Sprachsignale an den Arbeitsplatz (11, 12, 13) weiterleitet und für den Fall, dass überhaupt Sprachsignale vorliegen, ein Empfangssignal, SQU, an den Arbeitsplatz (11, 12, 13) weiterleitet, und
- das Arbeitsplatz-Service die Sprachsignale und Bediensignale, PTT, die ihm vom Arbeitsplatz (11, 12, 13) übermittelt wurden, an Funksendeeinrichtungen (51, 52, 53), insbesondere mittels einer der Kontrolleinheiten (31, 32, 33), übermittelt, die vorab mittels Steuersignalen ausgewählt wurden.

37. Verfahren nach Anspruch 36, **dadurch gekennzeichnet,**
- **dass** im Signalweg zwischen den Verteileinheiten (21, 22, 23) und den Funksendeeinrichtungen (51, 52, 53) und zwischen den Arbeitsplätzen (11, 12, 13) und den Funkempfangseinrichtungen (61, 62, 63) eine Anzahl von Kontrolleinheiten (31, 32, 33) angeordnet wird, wobei jeder Kontrolleinheit (31, 32, 33) zumindest eine Funksendeeinrichtung (51, 52, 53) und zumindest eine Funkempfangseinrichtung (61, 62, 63) zugeordnet wird,
- **dass** mehrere Verteileinheiten (21, 22, 23) mit derselben Kontrolleinheit (31, 32, 33), insbesondere alle Verteileinheiten (21, 22, 23) mit allen Kontrolleinheiten (31, 32, 33), verbunden werden,
- **dass** die Kontrolleinheiten (31, 32, 33) bei gleichzeitigem Vorliegen einer Vielzahl von Bediensignalen, PTT, mehrerer Verteileinheiten (21, 22, 23) die Sprachsignale einer der Verteileinheiten (21, 22, 23) nach vorgegebenen oder vorgebbaren Kriterien auswählen und an die Funksendeeinrichtung (51, 52, 53) zum Senden übertragen, und
- **dass** die Kontrolleinheiten (31, 32, 33) bei Vorliegen eines von der Funkempfangseinrichtung (61, 62, 63) übermittelten Sprachsignals an die mit ihr verbundenen Verteileinheiten (21, 22, 23) ein Empfangssignal, SQU, übermitteln und die Sprachsignale an diese Verteileinheiten (21, 22, 23) übertragen.

38. Verfahren nach Anspruch 37, **dadurch gekennzeichnet,**
- **dass** die Kontrolleinheiten (31, 32, 33) im Signalweg zwischen den Arbeitsplatz-Services und den Funksendeeinrichtungen (51, 52, 53) und zwischen den Arbeitsplatz-Services (11, 12, 13) und den Funkempfangseinrichtungen (61, 62, 63) angeordnet werden, wobei jede Kontrolleinheit (31, 32, 33) mit zumindest einer Funksendeeinrichtung (51, 52, 53) und zumindest einer Funkempfangseinrichtung (61, 62, 63) in Kommunikationsverbindung gebracht wird,
wobei die derselben Kontrolleinheit (31, 32, 33) zugeordneten Funksendeeinrichtungen (51, 52, 53) und Funkempfangseinrichtungen (61, 62, 63), vorzugsweise dieselbe Funkfrequenz nutzen, und wobei insbesondere jede Funksendeeinrichtung (51, 52, 53) und Funkempfangseinrichtung (61, 62, 63) vorzugsweise nur einer einzigen Kontrolleinheit (31, 32, 33) zugeordnet wird, und
- **dass** mehrere Arbeitsplätze (11, 12, 13) mit derselben Kontrolleinheit (31, 32, 33), insbesondere alle Arbeitsplätze (11, 12, 13) mit allen Kontrolleinheiten (31, 32, 33), verbunden werden.

39. Verfahren nach Anspruch 37 oder 38, **dadurch gekennzeichnet,**
- **dass** zumindest eine Kontrolleinheit (31, 32, 33) mit einer Mehrzahl von Funksendeeinrichtungen (51, 52, 53) verbunden wird,
- **dass** die Kontrolleinheit (21, 22, 23) die bei ihr von einer Verteileinheit (21, 22, 23) einlangenden Sprachsignale nur an eine der Funksendeeinrichtungen (51, 52, 53) oder an alle mit ihr in Verbindung stehenden Funksendeeinrichtungen (51, 52, 53) zur Übertragung übermittelt, und
- **dass** die Kontrolleinheit (31, 32, 33) die bei ihr von den Funkempfangseinrichtungen (61, 62, 63) einlangenden Sprachsignale an die mit ihr in Sprachverbindung stehenden Verteileinheiten (21, 22, 23) übermittelt.

40. Verfahren nach einem der Ansprüche 37 bis 39, **dadurch gekennzeichnet,**
- **dass** die Kontrolleinheit (31, 32, 33) mit zumindest einer Funksendeeinrichtung (51, 52, 53) und zumindest einer Backup-Funksendeeinrichtung (52a, 53a) verbunden ist und dass die Kontrolleinheit (31, 32, 33) die Sprachsignale bei Funktionieren der Funksendeeinrichtung (51, 52, 53) an diese überträgt und die Sprachsignale andernfalls an die Backup-Funksendeeinrichtung (51b, 51c) überträgt, und/oder
- **dass** die Kontrolleinheit (31, 32, 33) mit zumindest einer Backup-Funkempfangseinrichtung (62a, 63a) verbunden ist und dass die Kontrolleinheit (31, 32, 33) bei Funktionieren der mit ihr verbundenen Funkempfangseinrichtung (61, 62, 63) die ihr von der Funkempfangseinrichtung (61, 62, 63) einlangenden Sprachsignale an die Verteileinheiten (21, 22, 23) verteilt und andernfalls die ihr von der Backup-Funkempfangseinrichtung (61, 62, 63) einlangenden Sprachsignale an die Verteileinheiten (21, 22, 23) verteilt.

41. Verfahren nach einem der Ansprüche 37 bis 40, **dadurch gekennzeichnet,**
- **dass** im Signalweg zwischen einer Kontrolleinheit (31, 32, 33) und der Funksendeeinrichtung (51, 52, 53) zumindest eine übergeordnete Kontrolleinheit (41, 42, 43) vorhanden ist, die übergeordnete Kontrolleinheit (41, 42, 43) mit einer Anzahl von Kontrolleinheiten (31a-33a, 31b-33b) verbunden ist, wobei insbesondere jede dieser Kontrolleinheiten (31a-33a, 31b-33b) mit Gruppen von Arbeitsplätzen (11-16) verbunden ist,
- **dass** die von den Kontrolleinheiten (31a-33a, 31b-33b) abgegebenen Sprachsignale und Bediensignale, PTT, an die übergeordnete Kontrolleinheit (41, 42, 43) übertragen werden,
wobei die übergeordnete Kontrolleinheit (41, 42, 43) bei gleichzeitiger Abgabe von Bediensignalen, PTT, mehrerer mit ihr verbundener Kontrolleinheiten (31a-33a, 31b-33b) eine der Kontrolleinheiten (31a-33a, 31b-33b) nach vorgegebenen oder vorgebbaren Kriterien auswählt und die Sprachsignale der ausgewählten Kontrolleinheit an die Funksendeeinrichtung (51, 52, 53) weiterleitet, und
- **dass** die übergeordnete Kontrolleinheit (41, 42, 43) bei Empfang von Sprachsignale von der Funkempfangseinrichtung (61, 62, 63) diese Sprachsignale an die mit der übergeordnete Kontrolleinheit (41, 42, 43) verbundenen Kontrolleinheiten (31a-33a, 31b-33b) weiterleitet und ein Empfangssignal, SQU, an diese Kontrolleinheiten (31a-33a, 31b-33b) überträgt.

42. Verfahren nach einem der Ansprüche 37 bis 41, **dadurch gekennzeichnet, dass** die Kontrolleinheiten (31, 32, 33) oder die übergeordneten Kontrolleinheiten (41, 42, 43) die bei ihnen einlangenden Sprachsignale sowie das jeweils zugehörige Empfangssignal, SQU, lediglich an eine Auswahl von Arbeitsplatz-Services, Verteileinheiten (21, 22, 23) oder Kontrolleinheiten (31, 32, 33) übermitteln, wobei vorzugsweise die Kontrolleinheiten (31, 32, 33) oder die übergeordneten Kontrolleinheiten (41, 42, 43) diese Auswahl aufgrund von zuvor erfolgten Anforderungen durch die Arbeitsplätze (11, 12, 13) oder die Kontrolleinheiten (31, 32, 33) treffen.

43. Verfahren nach einem der Ansprüche 37 bis 42, **dadurch gekennzeichnet, dass** die unmittelbar mit den Funkempfangseinrichtungen (61, 62, 63) verbundenen Kontrolleinheiten (31, 32, 33) oder übergeordneten Kontrolleinheiten (41, 42, 43) jeweils mit einer Mehrzahl von Funkempfangseinrichtungen (61, 62, 63) verbunden sind und die bei ihnen von den Funkempfangseinrichtungen (61, 62, 63) einlangenden Sprachsignale bewerten und ein Bewertungssignal (B) erstellen,
das insbesondere
a) eine Reihung der einlangenden Sprachsignale nach der Signalqualität oder
b) das beste der einlangenden Sprachsignale
angibt,
und die unmittelbar mit den Funkempfangseinrichtungen (61, 62, 63) verbundenen Kontrolleinheiten (31, 32, 33) oder übergeordneten Kontrolleinheiten (41, 42, 43) das Bewertungssignal (B) sowie die einzelnen Sprachsignale aller Funkempfangseinrichtungen an die Verteileinheit (21, 22, 23) oder die Kontrolleinheiten (31, 32, 33) weiterleiten.

44. Verfahren nach Anspruch 43, **dadurch gekennzeichnet, dass** die Kontrolleinheit (31, 32, 33) das Bewertungssignal (B) an die Verteileinheit (21, 22, 23) übermittelt und die Verteileinheit (21, 22, 23) aufgrund des Bewertungssignals (B) eines der von der jeweiligen Kontrolleinheit (31, 32, 33) übermittelten Sprachsignale auswählt oder aufgrund des Bewertungssignals (B) mehrere der von der jeweiligen Kontrolleinheit (31, 32, 33) übermittelten Sprachsignale miteinander überlagert und das ausgewählte oder überlagerte Signal an den jeweiligen Arbeitsplatz (11, 12, 13) übermittelt.

45. Verfahren nach einem der Ansprüche 37 bis 44, **dadurch gekennzeichnet, dass** eine Verkopplungsgruppe vorgegeben wird, die zwei oder mehrere Kontrolleinheiten (31, 32, 33) und/oder übergeordneten Kontrolleinheiten (41, 42, 43) umfasst,
wobei bei Einlangen von Sprachsignalen sowie eines Empfangssignals, SQU, von einer Kontrolleinheit (31, 32, 33) oder übergeordneten Kontrolleinheit (41, 42, 43) der Verkopplungsgruppe diese Sprachsignale sowie ein Bediensignal, PTT, an die anderen Kontrolleinheiten (31, 32, 33) und/oder übergeordneten Kontrolleinheiten (41, 42, 43) der Verkopplungsgruppe weitergeleitet werden, wobei insbesondere bei gleichzeitigem Einlangen von Sprachsignalen von zwei Kontrolleinheiten (31, 32, 33) oder übergeordneten Kontrolleinheiten (41, 42, 43) der Verkopplungsgruppe eine der Kontrolleinheiten (31, 32, 33) oder übergeordneten Kontrolleinheiten (41, 42, 43) nach vorgegebenen oder vorgebbaren Kriterien ausgewählt wird und nur die Sprachsignale dieser ausgewählten Kontrolleinheit (31, 32, 33) oder übergeordneten Kontrolleinheit (41, 42, 43) an die übrigen Kontrolleinheiten (31, 32, 33) oder übergeordneten Kontrolleinheiten (41, 42, 43) der Verkopplungsgruppe weitergeleitet werden.

46. Verfahren nach Anspruch 45, **dadurch gekennzeichnet,**
- **dass** Kriterien für die Weiterleitung von Daten einzelner Kontrolleinheiten (31, 32, 33) oder übergeordneter Kontrolleinheiten (41, 42, 43) an andere Kontrolleinheiten (31, 32, 33) oder übergeordnete Kontrolleinheiten (41, 42, 43) der Verkopplungsgruppe, insbesondere von einem der Arbeitsplätze, vorgegeben werden, und
- **dass** bei Einlangen von Sprachsignale von einer Kontrolleinheit (31, 32, 33) oder übergeordneten Kontrolleinheit (41, 42, 43) dieser Verkopplungsgruppe nach diesen vorgegebenen Kriterien Sprachdaten an die Kontrolleinheiten (31, 32, 33) oder übergeordneten Kontrolleinheiten (41, 42, 43) der Verkopplungsgruppe übertragen werden.

47. Verfahren nach einem der Ansprüche 36bis 46, **dadurch gekennzeichnet, dass** die Arbeitsplatz-Services auf Proxy-Rechnern, insbesondere auf Verteileinheiten (21, 22, 23), in einem Rechenzentrum (8; 8a, 8b) ablaufen und mit den ebenfalls in diesem Rechenzentrum angeordneten Kontrolleinheiten (31, 32, 33) über ein lokales Netzwerk (81; 81a, 81b) miteinander kommunizieren, insbesondere Sprachsignale austauschen.

48. Verfahren nach einem der Ansprüche 36 bis 47, **dadurch gekennzeichnet, dass** ein Arbeitsplatz (11, 12, 13) mehrere Spracheingabeeinheiten (111, 121, 131) und/oder mehrere Sprachausgabeeinheiten (112, 122, 132) aufweist,
- wobei von jeder Spracheingabeeinheit (111, 121, 131) jeweils Sprachsignale über eine gesonderte Datenverbindung an das jeweilige Arbeitsplatz-Service übertragen werden, und
- wobei an jede Sprachausgabeeinheit (112, 122, 132) jeweils Sprachsignale über eine gesonderte Datenverbindung von dem jeweiligen Arbeitsplatz-Service übertragen werden.

## Claims

1. Communications system for speech communication by means of a number of workstations (11, 12, 13), in particular for air traffic controllers, and a number of radio transmission devices (51, 52, 53) and radio reception devices (61, 62, 63)
- wherein each of the workstations (11, 12, 13) in each case has at least the following:
• at least one speech input unit (111, 121, 131), in particular a microphone,
• at least one speech output unit (112, 122, 132), in particular a loudspeaker or headset,
• at least one operating unit (113, 123, 133) for generating an operating signal, PTT, which specifies that from the respective workstation (11, 12, 13) by means of a speech input unit (111, 121, 131) speech signals are to be transmitted to one of the radio transmission devices (51, 52, 53),
• at least one display unit (114, 124, 134) for displaying a reception signal, SQU, which specifies whether at the speech output unit (112, 122, 132) speech signals are outputted from one of the radio reception devices (61, 62, 63), and
• at least one selection unit for selecting the radio transmission devices (51, 52, 53) and radio reception devices (61, 62, 63), with which the workstations on the basis of control signals establish a speech connection,
- wherein the speech signals generated by the speech input units (111, 121, 131) and the operating signals, PTT, generated by the operating units (113, 123, 133) are supplied to the radio transmission devices (51, 52, 53) and the radio transmission device (51, 52, 53) is configured for outputting the speech signals transmitted from a workstation (11, 12, 13) with the simultaneous wireless communication of an operating signal, PTT, and
- wherein the radio reception devices (61, 62, 63) are configured to receive speech signals wirelessly, the speech signals received by the radio reception devices (61, 62, 63) are supplied to the individual workstations (11, 12, 13) for outputting via the speech output units (112, 122, 132), and the radio reception devices (61, 62, 63) during the reception of speech signals and their forwarding communicate in each case a reception signal, SQU, to the workstations (11, 12, 13),
- wherein in the signal path between the workstations (11, 12, 13) and the radio transmission devices (51, 52, 53) and between the workstations (11, 12, 13) and the radio reception devices (61, 62, 63) is provided a number of control units (31, 32, 33), wherein each control unit (31, 32, 33) is in communication connection with at least one radio transmission device and at least one radio reception device (61, 62, 63) and is assigned thereto,
wherein the radio transmission devices (51, 52, 53) and radio reception devices (61, 62, 63) assigned to the same control unit (31, 32, 33) preferably use the same radio frequency, and wherein in particular each radio transmission device (51, 52, 53) and radio reception device (61, 62, 63) is assigned preferably to only one single control unit (31, 32, 33),
- wherein several workstations (11, 12, 13) are connected with the same control unit (31, 32, 33), in particular all workstations (11, 12, 13) are connected with all control units (31, 32, 33),
- wherein the control units (31, 32, 33) at the simultaneous presence of a plurality of operating signals, PTT, of several distribution units (21, 22, 23) select according to predetermined or predeterminable criteria the speech signals of one of the distribution units (21, 22, 23) or superimpose the speech signals of several workstations according to predetermined criteria and transmit the thus obtained selected or superimposed speech signal to the radio transmission device for sending, and
- wherein the control units (31, 32, 33) at the presence of a speech signal communicated from the radio reception device (61, 62, 63) communicate a reception signal, SQU, to the workstations (11, 12, 13) connected with them and transmit the speech signals to these workstations (11, 12, 13).

2. Communications system according to claim 1, **characterised in**
- **that** at least one control unit (31, 32, 33) is connected with a plurality of radio transmission devices (51, 52, 53),
- **that** the control unit (31, 32, 33) communicates the speech signals reaching it from a workstation (11, 12, 13) only to one of the radio transmission devices (51, 52, 53) or to all radio transmission devices (51, 52, 53) being in connection with it for transmission, and/or
- **that** the control unit (31, 32, 33) communicates the speech signals reaching it from the radio reception devices (61, 62, 63) to the workstations (11, 12, 13) being in speech connection with it.

3. Communications system according to claim 1 or 2, **characterised in**
- **that** the control unit (31, 32, 33) is connected with at least one radio transmission device (51, 52, 53) and at least one backup radio transmission device (52a, 53a) and that the control unit (31, 32, 33) transmits the speech signals to the radio transmission device (51, 52, 53) when this is functioning, and when this is not the case transmits the speech signals to the backup radio transmission device (52a, 53a), and/or
- **that** the control unit (31, 32, 33) is connected with at least one radio reception device (61, 62, 63) and at least one backup radio reception device (62a, 63a) and that the control unit (31, 32, 33), when the radio reception device (61, 62, 63) connected with said control unit is functioning, distributes the speech signals reaching it from the radio reception device (61, 62, 63) to the workstations (11, 12, 13), and when this is not the case distributes the speech signals reaching it from the backup radio reception device (62a, 63a) to the workstations (11, 12, 13).

4. Communications system according to any of the preceding claims, **characterised in**
- **that** in the signal path between a control unit (31, 32, 33) and the radio transmission device (51, 52, 53) at least one superordinate control unit (41, 42, 43) is present,
- **that** the superordinate control unit (41, 42, 43) is connected with a number of control units (31a-33a, 31b-33b), wherein in particular each of these control units (31a-33a, 31b-33b) is connected with groups of workstations (11-16),
- **that** the speech signals and operating signals, PTT, outputted from the control units (31a-33a, 31b-33b) are supplied to the superordinate control unit (41, 42, 43),
wherein the superordinate control unit (41, 42, 43) at the simultaneous output of operating signals, PTT, to several control units (31a-33a, 31b-33b) connected with it selects one of the control units (31a-33a, 31b-33b) according to predetermined or predeterminable criteria and forwards the speech signals of the selected control unit to the radio transmission device (51, 52, 53), and
- **that** the superordinate control unit (41, 42, 43) at the reception of speech signals from the radio reception device (61, 62, 63) forwards these speech signals to the control units (31a-33a, 31b-33b) connected with the superordinate control unit (41, 42, 43) and transmits a reception signal, SQU, to these control units (31a-33a, 31b-33b).

5. Communications system according to any of the preceding claims, **characterised in that** the control units (31, 32, 33) or the superordinate control units (41, 42, 43) communicate the speech signals reaching them and the respectively associated reception signals, SQU, only to a selection of workstations (11, 12, 13) or control units (31, 32, 33), wherein preferably the control units (31, 32, 33) or the superordinate control units (41, 42, 43) make this selection on the basis of requests previously made by the workstations (11, 12, 13) or the control units (31, 32, 33).

6. Communications system according to any of the preceding claims, **characterised in that** the control units (31, 32, 33) or superordinate control units (41, 42, 43) connected directly with the radio reception devices (61, 62, 63) are connected respectively with a plurality of radio reception devices (61, 62, 63) of the same frequency and evaluate the speech signals reaching them simultaneously from the radio reception devices (61, 62, 63) and generate an evaluation signal (B),
that in particular specifies
a) a sequence of the incoming speech signals according to the signal quality or
b) the best of the incoming speech signals
and the control units (31, 32, 33) or superordinate control units (41, 42, 43) connected directly with the radio reception devices (61, 62, 63) forward the evaluation signal (B) and the individual speech signals of all radio reception devices (61, 62, 63) or the best speech signal to the workstations (11, 12, 13) or the control units (31, 32, 33).

7. Communications system according to any of the preceding claims, **characterised in that** a coupling unit (7) is present, which is connected with two or more control units (31, 32, 33) and/or superordinate control units (41, 42, 43),
wherein the coupling unit (7) at the arrival of speech signals and of a reception signal, SQU, from a control unit (31, 32, 33) or superordinate control unit (41, 42, 43) connected with it forwards these speech signals and an operating signal, PTT, to the other control units (31, 32, 33) and/or superordinate control units (41, 42, 43) connected with it, wherein in particular the coupling unit (7) at the simultaneous arrival of speech signals from two control units (31, 32, 33) or superordinate control units (41, 42, 43) connected with it selects one of the control units (31, 32, 33) or superordinate control units (41, 42, 43) according to predetermined or predeterminable criteria and forwards only the speech signals of the selected control unit (31, 32, 33) or superordinate control unit (41, 42, 43) to the remaining control units (31, 32, 33) or superordinate control units (41, 42, 43) connected with the coupling unit (7).

8. Communications system according to claim 7, **characterised in**
- **that** in the coupling unit (7) are stored criteria for the forwarding of data of individual control units (31, 32, 33) or superordinate control units (41, 42, 43) to other control units (31, 32, 33) or superordinate control units (41, 42, 43), and
- **that** the coupling unit (7) transmits the speech signals reaching it according to these criteria to the control units (31, 32, 33) or superordinate control units (41, 42, 43) connected with it.

9. Communications system according to any of the preceding claims, **characterised in**
- **that** the communications system comprises a number of distribution units (21, 22, 23) which are assigned in each case to one workstation (11, 12, 13), wherein at least one distribution unit (21, 22, 23) is assigned to each workstation (11, 12, 13),
- **that** between each of the distribution units (21, 22, 23) and the workstation (11, 12, 13) assigned to this distribution unit (21, 22, 23) in each case one logical or physical data connection exists with a predetermined bandwidth, with which speech signals from each speech input unit (111, 121, 131) and speech signals to each speech output unit (112, 122, 132) of the workstation (11, 12, 13) as well as also operating signals, PTT, and reception signals, SQU, can be transmitted,
- **that** the distribution unit (21, 22, 23) conferences or superimposes, according to a rule predetermined on the basis of control signals, the speech signals reaching it from radio reception devices (61, 62, 63), in particular by means of the control units (31, 32, 33), and communicates the speech signals derived therefrom to the workstation (11, 12, 13) or forwards to the workstation (11, 12, 13) the speech signals incoming from a selected radio reception device (61, 62, 63), in particular by means of one of the control units (31, 32, 33), and in the case that speech signals are actually present forwards a reception signal (SQU) to the workstation (11, 12, 13), and
- **that** the distribution unit (21, 22, 23) communicates speech signals and operating signals, PTT, communicated to it from the workstation (11, 12, 13) to radio transmission devices (51, 52, 53) selected in advance by means of control signals, in particular by means of one of the control units (31, 32, 33), wherein in particular
the distribution units (21, 22, 23) are disposed as proxy computers in a computing centre (8; 8a, 8b) and also the control units (31, 32, 33) are disposed in this computing centre (8; 8a, 8b), wherein the control units (31, 32, 33) and the distribution units (21, 22, 23) are respectively connected with one another via a local network (81; 81a, 81b).

10. Communications system according to claim 9, **characterised in**
- **that** a workstation (11, 12, 13) has several speech input units (111, 121, 131) and/or several speech output units (112, 122, 132),
- wherein the communications system has for each speech input unit (111, 121, 131) respectively one discrete data connection to a distribution unit (21, 22, 23) assigned to the workstation (11, 12, 13), and
- wherein the communications system has for each speech output unit (112, 122, 132) respectively one discrete data connection to a distribution unit (21, 22, 23) assigned to the workstation (11, 12, 13).

11. Communications system according to any of claims 6 and 9 or 10, **characterised in that** the control unit (31, 32, 33) communicates the evaluation signal (B) to the distribution unit (21, 22, 23) and the distribution unit (21, 22, 23) selects on the basis of the evaluation signal (B) one of the speech signals communicated from the respective control unit (31, 32, 33) or on the basis of the evaluation signal (B) superimposes on one another several of the speech signals communicated from the respective control unit (31, 32, 33) and communicates the selected or superimposed signal to the workstation (11, 12, 13).

12. Communications system for speech communication by means of a number of workstations (11, 12, 13), in particular for air traffic controllers, and a number of radio transmission devices (51, 52, 13) and radio reception devices (61, 64, 63)
- wherein each of the workstations (11, 12, 13) in each case has at least the following:
• at least one speech input unit (111, 121, 131), in particular a microphone,
• at least one speech output unit (112, 122, 132), in particular a loudspeaker,
• at least one operating unit (113, 123, 133) for generating an operating signal, PTT, which specifies that from the respective workstation (11, 12, 13) by means of a speech input unit (111, 121, 131) speech signals are to be transmitted to one of the radio transmission devices (51, 52, 53),
• at least one display unit (114, 124, 134) for displaying a reception signal, SQU, which specifies whether at the speech output unit (112, 122, 132) speech signals are outputted from one of the radio reception devices (61, 62, 63), and
• at least one selection unit for selecting the radio transmission devices (51, 52, 53) and radio reception devices (61, 62, 63), with which the workstations on the basis of control signals establish a speech connection,
- wherein the speech signals generated by the speech input units (111, 121, 131) and the operating signals, PTT, generated by the operating units (113, 123, 133) are supplied to the radio transmission devices (51, 52, 53) and the radio transmission device (51, 52, 53) is configured for outputting the speech signals transmitted from one workstation (11, 12, 13) with the simultaneous communication of an operating signal, PTT, wirelessly, and
- wherein the radio reception devices (61, 62, 63) are configured to receive speech signals wirelessly, the speech signals received by the radio reception devices (61, 62, 63) are supplied to the individual workstations (11, 12, 13) for outputting via the speech output units (112, 122, 132), and the radio reception devices (61, 62, 63) during the reception of speech signals and their forwarding communicate in each case a reception signal, SQU, to the workstations (11, 12, 13),
- wherein the communications system comprises a number of distribution units (21, 22, 23), which are respectively assigned to one workstation (11, 12, 13), wherein at least one distribution unit (21, 22, 23) is assigned to each workstation (11, 12, 13),
- that between each of the distribution units (21, 22, 23) and the workstation (11, 12, 13) assigned to this distribution unit (21, 22, 23) respectively a logical or physical data connection exists with a predetermined bandwidth, with which speech signals from each speech input unit (111, 121, 131) and speech signals to each speech output unit (112, 122, 132) of the workstation (11, 12, 13) as well as also operating signals, PTT, and reception signals, SQU, can be transmitted,
- wherein the distribution unit (21, 22, 23) conferences or superimposes, according to a rule predetermined on the basis of control signals, the speech signals reaching it from radio reception devices (61, 62, 63), in particular by means of the control units (31, 32, 33), and communicates to the workstation (11, 12, 13) the speech signals derived therefrom or forwards to the workstation (11, 12, 13) the speech signals incoming from a selected radio reception device (61, 62, 63), in particular by means of one of the control units (31, 32, 33), and in the case that speech signals are actually present, forwards a reception signal (SQU) to the workstation (11, 12, 13), and
- wherein the distribution unit (21, 22, 23) communicates speech signals and operating signals, PTT, communicated to it from the workstation (11, 12, 13) to radio transmission devices (51, 52, 53) selected in advance by means of control signals, in particular by means of one of the control units (31, 32, 33).

13. Communications system according to claim 12, **characterised in**
- **that** in the signal path between the distribution units (21, 22, 23) and the radio transmission devices (51, 52, 53) and between the workstations (11, 12, 13) and the radio reception devices (61, 62, 63) is provided a number of control units (31, 32, 33), wherein each control unit (31, 32, 33) is in connection with at least one radio transmission device (51, 52, 53) and at least one radio reception device (61, 62, 63) and is assigned thereto,
wherein the radio transmission devices (51, 52, 53) and radio reception devices (61, 62, 63) assigned to the same control unit (31, 32, 33) preferably use the same radio frequency, and wherein in particular each radio transmission device (51, 52, 53) and radio reception device (61, 62, 63) is assigned to only one single control unit (31, 32, 33),
- **that** several distribution units (21, 22, 23) are connected with the same control unit (31, 32, 33), in particular all distribution units (21, 22, 23) are connected with all control units (31, 32, 33),
- **that** the control units (31, 32, 33) at the simultaneous presence of a multiplicity of operating signals, PTT, of several distribution units (21, 22, 23) select the speech signals of one of the distribution units (21, 22, 23) according to predetermined or predeterminable criteria or superimpose the speech signals of several workstations according to predetermined criteria and transmit the thus obtained selected or superimposed speech signal to the radio transmission device for sending, and
- **that** the control units (31, 32, 33) at the presence of a speech signal communicated from the radio reception device (61, 62, 63) communicate a reception signal, SQU, to the distribution units (21, 22, 23) connected with it and transmit the speech signals to these distribution units (21, 22, 23).

14. Communications system according to claim 13, **characterised in**
- **that** at least one control unit (31, 32, 33) is connected with a plurality of radio transmission devices (51, 52, 53),
- **that** the control unit (21, 22, 23) communicates the speech signals reaching it from a distribution unit (21, 22, 23) only to one of the radio transmission devices (51, 52, 53) or to all radio transmission devices (51, 52, 53) being in connection with it, and
- **that** the control unit (31, 32, 33) communicates the speech signals reaching it from the radio reception devices (61, 62, 63) to the distribution units (21, 22, 23) being in speech connection with it.

15. Communications system according to claim 13 or 14, **characterised in**
- **that** the control unit (31, 32, 33) is connected with at least one radio transmission device (51, 52, 53) and at least one backup radio transmission device (52a, 53a) and that the control unit (31, 32, 33) transmits the speech signals, when the radio transmission device (51, 52, 53) is functioning, to it and otherwise transmits the speech signals to the backup radio transmission device (51b, 51c), and/or
- **that** the control unit (31, 32, 33) is connected with at least one backup radio reception device (62a, 63a) and that the control unit (31, 32, 33), when the radio reception device (61, 62, 63) connected with it is functioning, distributes the speech signals reaching it from the radio reception device (61, 62, 63) to the distribution units (21, 22, 23) and otherwise distributes the speech signals reaching it from the backup radio reception device (61, 62, 63) to the distribution units (21, 22, 23).

16. Communications system according to any of claims 13 to 15, **characterised in**
- **that** in the signal path between one control unit (31, 32, 33) and the radio transmission device (51, 52, 53) at least one superordinate control unit (41, 42, 43) is present,
- **that** the superordinate control unit (41, 42, 43) is connected with a number of control units (31a-33a, 31b-33b), wherein in particular each of these control units (31a-33a, 31b-33b) is connected with groups of control units (21-26) and workstations (11-16) which are respectively different from one another,
- **that** the speech signals and operating signals, PTT, outputted from the control units (31a-33a, 31b-33b) are supplied to the superordinate control unit (41, 42, 43),
wherein the superordinate control unit (41, 42, 43), at the simultaneous outputting of operating signals, PTT, from several control units (31a-33a, 31b-33b) connected with it, selects one of the control units (31a-33a, 31b-33b) according to predetermined or predeterminable criteria and forwards the speech signals of the selected control unit to the radio transmission device (51, 52, 53), and
- **that** the superordinate control unit (41, 42, 43), at the reception of speech signals from the radio reception device (61, 62, 63), forwards these speech signals to the control units (31a-33a, 31b-33b) connected with the superordinate control unit (41, 42, 43) and transmits a reception signal, SQU, to these control units (31a-33a, 31b-33b).

17. Communications system according to any of claims 13 to 16, **characterised in that** the control units (31, 32, 33) or the superordinate control units (41, 42, 43) communicate the speech signals reaching them and the respectively associated reception signal, SQU, only to a selection of distribution units (21, 22, 23) or control units (31, 32, 33), wherein preferably the control units (31, 32, 33) or the superordinate control units (41, 42, 43) make this selection on the basis of requests previously made by the workstations (11, 12, 13) or the control units (31, 32, 33).

18. Communications system according to any of claims 13 to 17, **characterised in that** the control units (31, 32, 33) or superordinate control units (41, 42, 43) directly connected with the radio reception devices (61, 62, 63) are connected respectively with a plurality of radio reception devices (61, 62, 63) and evaluate the speech signals reaching them from the radio reception devices (61, 62, 63) and generate an evaluation signal (B),
that in particular specifies
a) a sequence of the incoming speech signals according to the signal quality or
b) the best of the incoming speech signals
and the control units (31, 32, 33) or superordinate control units (41, 42, 43) connected directly with the radio reception devices (61, 62, 63) forward the evaluation signal (B) and the individual speech signals of all radio reception devices to the distribution unit (21, 22, 23) or the control units (31, 32, 33), wherein in particular
- the control unit (31, 32, 33) communicates the evaluation signal (B) to the distribution unit (21, 22, 23) and the distribution unit (21, 22, 23) on the basis of the evaluation signal (B) selects one of the speech signals communicated from the respective control unit (31, 32, 33) or on the basis of the evaluation signal (B) superimposes several of the speech signals communicated from the respective control unit (31, 32, 33) on one another and communicates the selected or superimposed signal to the respective workstation (11, 12, 13) connected with the distribution unit (21, 22, 23).

19. Communications system according to any of claims 13 to 18, **characterised in that** one coupling unit (7) is present, which is connected with two or more control units (31, 32, 33) and/or superordinate control units (41, 42, 43),
wherein the coupling unit (7), at the arrival of speech signals and of a reception signal, SQU, from a control unit (31, 32, 33) or superordinate control unit (41, 42, 43) connected with it forwards these speech signals and an operating signal, PTT, to the other control units (31, 32, 33) and/or superordinate control units (41, 42, 43) connected with it, wherein in particular the coupling unit (7), at the simultaneous reception of speech signals from two control units (31, 32, 33) or superordinate control units (41, 42, 43) connected with it, selects one of the control units (31, 32, 33) or superordinate control units (41, 42, 43) according to predetermined or predeterminable criteria and forwards only the speech signals of the selected control unit (31, 32, 33) or superordinate control unit (41, 42, 43) to the remaining control units (31, 32, 33) or superordinate control units (41, 42, 43) connected with the coupling unit (7).

20. Communications system according to claim 19, **characterised in**
- **that** in the coupling unit (7) are stored criteria for the forwarding of data of individual control units (31, 32, 33) or superordinate control units (41, 42, 43) to other control units (31, 32, 33) or superordinate control units (41, 42, 43), and
- **that** the coupling unit (7) transmits the speech signals reaching it according to these criteria to the control units (31, 32, 33) or superordinate control units (41, 42, 43) connected with it.

21. Communications system according to any of claims 12 to 20, **characterised in that** the distribution units (21, 22, 23) are disposed as proxy computers in a computing centre (8; 8a, 8b) and also the control units (31, 32, 33) are disposed in this computing centre (8; 8a, 8b), wherein the control units (31, 32, 33) and the distribution units (21, 22, 23) are respectively connected with one another via a local network (81; 81a, 81b).

22. Communications system according to any of claims 12 to 21, **characterised in that** a workstation (11, 12, 13) has several speech input units (111, 121, 131) and/or several speech output units (112, 122, 132),
- wherein the communications system has for each speech input unit (111, 121, 131) in each case a discrete data connection to a distribution unit (21, 22, 23) assigned to the workstation (11, 12, 13), and
- wherein the communications system has for each speech output unit (112, 122, 132) in each case a discrete data connection to a distribution unit (21, 22, 23) assigned to the workstation (11, 12, 13).

23. Method for transmitting speech data from a number of workstations (11, 12, 13), in particular for air traffic controllers, comprising in each case:
• at least one speech input unit (111, 121, 131), in particular a microphone,
• at least one speech output unit (112, 122, 132), in particular a loudspeaker or headset,
• at least one operating unit (113, 123, 133) for generating an operating signal, PTT, which specifies that from the respective workstation (11, 12, 13) by means of a speech input unit (111, 121, 131) speech signals are to be transmitted to one radio transmission device of a number of radio transmission devices (51, 52, 53),
• at least one display unit (114, 124, 134) for displaying a reception signal, SQU, which specifies whether speech signals from one radio reception device of a number of radio reception devices (61, 62, 63) are outputted at the speech output unit (112, 122, 132), and
• at least one selection unit for selecting the radio transmission devices (51, 52, 53) and radio reception devices (61, 62, 63), with which the workstations on the basis of control signals establish a speech connection, by means of a number of radio transmission devices (51, 52, 53) and radio reception devices (61, 62, 63),
- wherein the speech signals generated by the speech input units (111, 121, 131) and the operating signals, PTT, generated by the operating units (113, 123, 133) are transmitted to the radio transmission devices (51, 52, 53), and the speech signals outputted from a workstation (11, 12, 13) are forwarded to the radio transmission device (51, 52, 53) and at the simultaneous communication of an operating signal, PTT, from the workstation (11, 12, 13) are sent from this wirelessly,
- wherein the radio reception devices (61, 62, 63) receive speech signals wirelessly and these speech signals are forwarded to the workstations and are outputted with the speech output units (112, 122, 132), wherein during the reception of speech signals and during the forwarding of the speech signals to the workstations (11, 12, 13) in each case one reception signal, SQU, is communicated to the respective workstation (11, 12, 13) and is displayed by the display unit,
- wherein speech data are transmitted from the workstations (11, 12, 13) to the radio transmission devices (51, 52, 53) and radio reception devices (61, 62, 63) via control units (31, 32, 33),
- wherein control units (31, 32, 33), at the simultaneous presence of a multiplicity of operating signals, PTT, of several workstations (11, 12, 13), select the speech signals of one of the workstations (11, 12, 13) according to predetermined or predeterminable criteria or superimpose the speech signals of several workstations according to predetermined criteria and transmit the thus obtained selected or superimposed speech signal to the radio transmission device for sending, and
- wherein the control units (31, 32, 33), at the presence of a speech signal communicated from the radio reception device (61, 62, 63), communicate a reception signal, SQU, to the workstations (11, 12, 13) connected with them and transmit the speech signals to these workstations (11, 12, 13).

24. Method according to claim 23, **characterised in**
- **that** the control units are disposed in the signal path between the workstations (11, 12, 13) and the radio transmission devices (51, 52, 53) and between the workstations (11, 12, 13) and the radio reception devices (61, 62, 63), wherein each control unit (31, 32, 33) is brought into communication connection with at least one radio transmission device and at least one radio reception device (61, 62, 63), wherein the radio transmission devices (51, 52, 53) and radio reception devices (61, 62, 63) assigned to the same control unit (31, 32, 33) preferably use the same radio frequency, and wherein in particular each radio transmission device (51, 52, 53) and radio reception device (61, 62, 63) is assigned preferably to only one single control unit (31, 32, 33), and
- **that** several workstations (11, 12, 13) are connected with the same control unit (31, 32, 33), in particular all workstations (11, 12, 13) are connected with all control units (31, 32, 33).

25. Method according to claim 23 or 24, wherein at least one control unit (31, 32, 33) is connected with a plurality of radio transmission devices (51, 52, 53), **characterised in**
- **that** from the control unit (31, 32, 33) the speech signals reaching it from a workstation (11, 12, 13) are communicated for transmission only to one of the radio transmission devices (51, 52, 53) or to all radio transmission devices (51, 52, 53) being in connection with it, and/or
- **that** from the control unit (31, 32, 33) the speech signals reaching it from the radio reception devices (61, 62, 63) are communicated to the workstations (11, 12, 13) being in speech connection with it.

26. Method according to any of claims 23 to 25, **characterised in**
- **that** the control unit (31, 32, 33) transmits the speech signals to the radio transmission device (51, 52, 53), when said radio transmission device is functioning, and otherwise transmits the speech signals to a backup radio transmission device (52a, 53a) being in connection with it, and/or
- **that** the control unit (31, 32, 33), when the radio reception device (61, 62, 63) connected with it is functioning, distributes the speech signals reaching it from the radio reception device (61, 62, 63) to the workstations (11, 12, 13) and otherwise distributes the speech signals reaching it from a backup radio reception device (62a, 63a) being in connection with it to the workstations (11, 12, 13).

27. Method according to any of claims 23 to 26, **characterised in**
- **that** in the signal path between a control unit (31, 32, 33) and the radio transmission device (51, 52, 53) at least one superordinate control unit (41, 42, 43) is present, the superordinate control unit (41, 42, 43) is connected with a number of control units (31a-33a, 31b-33b), wherein in particular each of these control units (31a-33a, 31b-33b) is connected with groups of workstations (11-16),
- **that** the speech signals outputted by the control units (31a-33a, 31b-33b) and operating signals, PTT, are transmitted to the superordinate control unit (41, 42, 43), wherein the superordinate control unit (41, 42, 43), at the simultaneous outputting of operating signals, PTT, of several control units (31a-33a, 31b-33b) connected with it, selects one of the control units (31a-33a, 31b-33b) according to predetermined or predeterminable criteria and forwards the speech signals of the selected control unit to the radio transmission device (51, 52, 53), and
- **that** the superordinate control unit (41, 42, 43) at the reception of speech signals from the radio reception device (61, 62, 63) forwards these speech signals to the control units (31a-33a, 31b-33b) connected with the superordinate control unit (41, 42, 43) and transmits a reception signal, SQU, to these control units (31a-33a, 31b-33b).

28. Method according to any of claims 23 to 27, **characterised in that** the control units (31, 32, 33) or the superordinate control units (41, 42, 43) communicate the speech signals reaching them and the respectively associated reception signals, SQU, only to a selection of workstations (11, 12, 13) or control units (31, 32, 33), wherein preferably the control units (31, 32, 33) or the superordinate control units (41, 42, 43) make this selection on the basis of requests previously made by the workstations (11, 12, 13) or the control units (31, 32, 33).

29. Method according to any of claims 23 to 28, **characterised in that** the control units (31, 32, 33) or superordinate control units (41, 42, 43) directly connected with the radio reception devices (61, 62, 63) obtain respectively speech data from a plurality of radio reception devices (61, 62, 63) of the same frequency and evaluate the speech signals reaching them simultaneously from the radio reception devices (61, 62, 63) and generate an evaluation signal (B), which in particular specifies
a) a sequence of the incoming speech signals according to the signal quality or
b) the best of the incoming speech signals
and the control units (31, 32, 33) or superordinate control units (41, 42, 43) directly connected with the radio reception devices (61, 62, 63) forward the evaluation signal (B) and the individual speech signals of all radio reception devices (61, 62, 63) or the best speech signal to the workstations (11, 12, 13) or the control units (31, 32, 33).

30. Method according to any of claims 23 to 29, **characterised in that** a coupling group is specified which comprises two or more control units (31, 32, 33) and/or superordinate control units (41, 42, 43),
wherein at the arrival of speech signals and a reception signal, SQU, from a control unit (31, 32, 33) or superordinate control unit (41, 42, 43) of the coupling group these speech signals and an operating signal, PTT, are forwarded to the other control units (31, 32, 33) and/or superordinate control units (41, 42, 43) of the coupling group.

31. Method according to claim 30, **characterised in that** at the simultaneous arrival of speech signals from two control units (31, 32, 33) or superordinate control units (41, 42, 43) of the coupling group, one of the control units (31, 32, 33) or superordinate control units (41, 42, 43) is selected according to predetermined or predeterminable criteria and only the speech signals of this selected control unit (31, 32, 33) or superordinate control unit (41, 42, 43) are forwarded to the remaining control units (31, 32, 33) or superordinate control units (41, 42, 43) of the coupling group.

32. Method according to claim 30 or 31, **characterised in**
- **that** criteria for the forwarding of data of individual control units (31, 32, 33) or superordinate control units (41, 42, 43) to other control units (31, 32, 33) or superordinate control units (41, 42, 43) of the coupling group, in particular from one of the workstations, are predetermined, and
- **that**, at the arrival of speech signals from a control unit (31, 32, 33) or superordinate control unit (41, 42, 43) of this coupling group according to these predetermined criteria, speech data are transmitted to the control units (31, 32, 33) or superordinate control units (41, 42, 43) of the coupling group.

33. Method according to any of claims 23 to 32, **characterised in**
- **that** for the workstations (11, 12, 13) respectively one workstation service is executed on computers disposed distanced from the workstations, in particular on a distribution unit (21, 22, 23), wherein at least one workstation service is assigned to each workstation (11, 12, 13), and
- **that** between the workstation service and the workstation (11, 12, 13) assigned to this workstation service respectively one logical or physical data connection having a predetermined bandwidth is established, via which speech signals from the speech input unit (111, 121, 131) and speech signals to the speech output unit (112, 122, 132) of the workstation (11, 12, 13) as well as also operating signals, PTT, and reception signals, SQU, are transmitted,
- **that** the workstation service conferences or superimposes, according to a rule predetermined on the basis of control signals, the speech signals reaching it from radio reception devices (61, 62, 63), in particular by means of the control units (31, 32, 33), and communicates the speech signals derived therefrom to the workstation (11, 12, 13) or forwards the speech signals incoming from a selected radio reception device (61, 62, 63), in particular by means of one of the control units (31, 32, 33), to the workstation (11, 12, 13) and in the case that speech signals are actually present forwards a reception signal, SQU, to the workstation (11, 12, 13), and
- **that** the workstation service communicates the speech signals and operating signals, PTT, which were communicated to it from the workstation (11, 12, 13) to radio transmission devices (51, 52, 53), in particular by means of one of the control units (31, 32, 33), which were selected in advance by means of control signals, wherein in particular the workstation services run on proxy computers, in particular on distribution units (21, 22, 23) in a computing centre (8; 8a, 8b) and with the control units (31, 32, 33), disposed in the same way in this computing centre, communicate via a local network (81; 81a, 81b) with one another, in particular exchange speech signals.

34. Method according to any of claims 23 to 33, **characterised in that** a workstation (11, 12, 13) has several speech input units (111, 121, 131) and/or several speech output units (112, 122, 132),
- wherein from each speech input unit (111, 121, 131) respectively speech signals are transmitted via a discrete data connection to the respective workstation service, and
- wherein in each case speech signals are transmitted via a discrete data connection from the respective workstation service to each speech output unit (112, 122, 132).

35. Method according to any of claims 29 and 33 or 34, **characterised in that** the control unit (31, 32, 33) communicates the evaluation signal (B) to the distribution unit (21, 22, 23) and the workstation service on the basis of the evaluation signal (B) selects one of the speech signals communicated from the respective control unit (31, 32, 33) or on the basis of the evaluation signal (B) superimposes on one another several of the speech signals communicated from the respective control unit (31, 32, 33) and communicates the selected or superimposed signal to the workstation (11, 12, 13).

36. Method for transmitting speech data from a number of workstations (11, 12, 13), in particular for air-traffic controllers, comprising in each case:
• at least one speech input unit (111, 121, 131), in particular a microphone,
• at least one speech output unit (112, 122, 132), in particular a loudspeaker or headset,
• at least one operating unit (113, 123, 133) for generating an operating signal, PTT, which specifies that from the respective workstation (11, 12, 13) by means of the speech input unit (111, 121, 131) speech signals are to be transmitted to one radio transmission device of a number of radio transmission devices (51, 52, 53),
• at least one display unit (114, 124, 134) for displaying a reception signal, SQU, which specifies whether speech signals from one radio reception device of a number of radio reception devices (61, 62, 63) are outputted at the speech output unit (112, 122, 132), and
• at least one selection unit for selecting the radio transmission devices (51, 52, 53) and radio reception devices (61, 62, 63), with which the workstations on the basis of control signals establish a speech connection, by means of a number of radio transmission devices (51, 52, 53) and radio reception devices (61, 62, 63)
- wherein the speech signals generated by the speech input units (111, 121, 131) and the operating signals, PTT, generated by the operating units (113, 123, 133) are transmitted to the radio transmission devices (51, 52, 53), and the speech signals outputted from a workstation (11, 12, 13) are forwarded to the radio transmission device (51, 52, 53) and with the simultaneous communication of an operating signal, PTT, from the workstation (11, 12, 13) are transmitted wirelessly from said radio transmission device,
- wherein the radio reception devices (61, 62, 63) receive speech signals wirelessly and these speech signals are forwarded to the workstations and outputted with the speech output units (112, 122, 132), wherein during the reception of speech signals and during the forwarding of the speech signals to the workstations (11, 12, 13) respectively one reception signal, SQU, is communicated to the respective workstation (11, 12, 13) and is displayed by the display unit,
- wherein for the workstations (11, 12, 13) on computers disposed distanced from the workstations, in particular on a distribution unit (21, 22, 23), respectively one workstation service is executed, wherein at least one workstation service is assigned to each workstation (11, 12, 13),
- wherein between the workstation service and the workstation (11, 12, 13) assigned to this workstation service respectively one logical or physical data connection is generated with a predetermined bandwidth, via which speech signals from the speech input unit (111, 121, 131) and speech signals to the speech output unit (112, 122, 132) of the workstation (11, 12, 13) as well as also operating signals, PTT, and reception signals, SQU, are transmitted,
- wherein the workstation service conferences or superimposes, according to a rule predetermined on the basis of control signals, the speech signals reaching it from radio reception devices (61, 62, 63), in particular by means of the control units (31, 32, 33), and communicates the speech signals derived therefrom to the workstation (11, 12, 13) or forwards to the workstation (11, 12, 13) the speech signals incoming from a selected radio reception device (61, 62, 63), in particular by means of one of the control units (31, 32, 33), and in the case that speech signals are actually present, forwards a reception signal, SQU, to the workstation (11, 12, 13), and
- the workstation service communicates the speech signals and operating signals, PTT, which were communicated to it from the workstation (11, 12, 13) to radio transmission devices (51, 52, 53), in particular by means of one of the control units (31, 32, 33), which were selected in advance by means of control signals.

37. Method according to claim 36, **characterised in**
- **that** in the signal path between the distribution units (21, 22, 23) and the radio transmission devices (51, 52, 53) and between the workstations (11, 12, 13) and the radio reception devices (61, 62, 63) is disposed a number of control units (31, 32, 33), wherein to each control unit (31, 32, 33) is assigned at least one radio transmission device (51, 52, 53) and at least one radio reception device (61, 62, 63),
- **that** several distribution units (21, 22, 23) are connected with the same control unit (31, 32, 33), in particular all distribution units (21, 22, 23) are connected with all control units (31, 32, 33),
- **that** the control units (31, 32, 33), at the simultaneous presence of a multiplicity of operating signals, PTT, of several distribution units (21, 22, 23), select the speech signals of one of the distribution units (21, 22, 23) according to predetermined or predeterminable criteria and transmit them to the radio transmission device (51, 52, 53) for sending, and
- **that** the control units (31, 32, 33), at the presence of a speech signal communicated from the radio reception device (61, 62, 63), communicate a reception signal, SQU, to the distribution units (21, 22, 23) connected with said radio reception device and transmit the speech signals to these distribution units (21, 22, 23).

38. Method according to claim 37, **characterised in**
- **that** the control units (31, 32, 33) are disposed in the signal path between the workstation services and the radio transmission devices (51, 52, 53) and between the workstation services (11, 12, 13) and the radio reception devices (61, 62, 63), wherein each control unit (31, 32, 33) is brought into communication connection with a least one radio transmission device (51, 52, 53) and at least one radio reception device (61, 62, 63),
wherein the radio transmission devices (51, 52, 53) and radio reception devices (61, 62, 63) assigned to the same control unit (31, 32, 33) preferably use the same radio frequency, and wherein in particular each radio transmission device (51, 52, 53) and radio reception device (61, 62, 63) is assigned preferably to only one single control unit (31, 32, 33), and
- **that** several workstations (11, 12, 13) are connected with the same control unit (31, 32, 33), in particular all workstations (11, 12, 13) are connected with all control units (31, 32, 33).

39. Method according to claim 37 or 38, **characterised in**
- **that** at least one control unit (31, 32, 33) is connected with a plurality of radio transmission devices (51, 52, 53),
- **that** the control unit (21, 22, 23) communicates the speech signals reaching it from a distribution unit (21, 22, 23) only to one of the radio transmission devices (51, 52, 53) or to all radio transmission devices (51, 52, 53) being in connection with it, for sending, and
- **that** the control unit (31, 32, 33) communicates the speech signals reaching it from the radio reception devices (61, 62, 63) to the distribution units (21, 22, 23) being in speech connection with it.

40. Method according to any of claims 37 to 39, **characterised in**
- **that** the control unit (31, 32, 33) is connected with at least one radio transmission device (51, 52, 53) and at least one backup radio transmission device (52a, 53a) and that the control unit (31, 32, 33) transmits the speech signals to the radio transmission device (51, 52, 53) when this is functioning and otherwise transmits the speech signals to the backup radio transmission device (51b, 51c), and/or
- **that** the control unit (31, 32, 33) is connected with at least one backup radio reception device (62a, 63a) and that the control unit (31, 32, 33), when the radio reception device (61, 62, 63) connected with it is functioning, distributes the speech signals reaching it from the radio reception device (61, 62, 63) to the distribution units (21, 22, 23) and otherwise distributes the speech signals reaching it from the backup radio reception device (61, 62, 63) to the distribution units (21, 22, 23).

41. Method according to any of claims 37 to 40, **characterised in**
- **that** in the signal path between a control unit (31, 32, 33) and the radio transmission device (51, 52, 53) at least one superordinate control unit (41, 42, 43) is present, which superordinate control unit (41, 42, 43) is connected with a number of control units (31a-33a, 31b-33b), wherein in particular each of these control units (31a-33a, 31b-33b) is connected with groups of workstations (11-16),
- **that** the speech signals and operating signals, PTT, outputted from the control units (31a-33a, 31b-33b) are transmitted to the superordinate control unit (41, 42, 43),
wherein the superordinate control unit (41, 42, 43) at the simultaneous output of operating signals, PTT, of several control units (31a-33a, 31b-33b) connected with it, selects one of the control units (31a-33a, 31b-33b) according to predetermined or predeterminable criteria and forwards the speech signals of the selected control unit to the radio transmission device (51, 52, 53), and
- **that** the superordinate control unit (41, 42, 43), at the reception of speech signals from the radio reception device (61, 62, 63), forwards these speech signals to the control units (31a-33a, 31b-33b) connected with the superordinate control unit (41, 42, 43) and transmits a reception signal, SQU, to these control units (31a-33a, 31b-33b).

42. Method according to any of claims 37 to 41, **characterised in that** the control units (31, 32, 33) or the superordinate control units (41, 42, 43) communicate the speech signals reaching them and the respectively associated reception signal, SQU, only to a selection of workstation services, distribution units (21, 22, 23) or control units (31, 32, 33), wherein preferably the control units (31, 32, 33) or the superordinate control units (41, 42, 43) make this selection on the basis of requests previously made by the workstations (11, 12, 13) or the control units (31, 32, 33).

43. Method according to any of claims 37 to 42, **characterised in that** the control units (31, 32, 33) or superordinate control units (41, 42, 43) directly connected with the radio reception devices (61, 62, 63) are connected respectively with a plurality of radio reception devices (61, 62, 63) and evaluate the speech signals reaching them from the radio reception devices (61, 62, 63) and generate an evaluation signal (B),
that in particular specifies
a) a sequence of the incoming speech signals according to the signal quality or
b) the best of the incoming speech signals
and the control units (31, 32, 33) or superordinate control units (41, 42, 43) directly connected with the radio reception devices (61, 62, 63) forward the evaluation signal (B) and the individual speech signals of all radio reception devices to the distribution unit (21, 22, 23) or the control units (31, 32, 33).

44. Method according to claim 43, **characterised in that** the control unit (31, 32, 33) communicates the evaluation signal (B) to the distribution unit (21, 22, 23) and the distribution unit (21, 22, 23) on the basis of the evaluation signal (B) selects one of the speech signals communicated from the respective control unit (31, 32, 33) or on the basis of the evaluation signal (B) superimposes on one another several of the speech signals communicated from the respective control unit (31, 32, 33) and communicates the selected or superimposed signal to the respective workstation (11, 12, 13).

45. Method according to any of claims 37 to 44, **characterised in that** a coupling group is specified which comprises two or more control units (31, 32, 33) and/or superordinate control units (41, 42, 43),
wherein at the arrival of speech signals and a reception signal, SQU, from a control unit (31, 32, 33) or superordinate control unit (41, 42, 43) of the coupling group, these speech signals and an operating signal, PTT, are forwarded to the other control units (31, 32, 33) and/or superordinate control units (41, 42, 43) of the coupling group, wherein in particular at the simultaneous arrival of speech signals from two control units (31, 32, 33) or superordinate control units (41, 42, 43) of the coupling group, one of the control units (31, 32, 33) or superordinate control units (41, 42, 43) is selected according to predetermined or predeterminable criteria and only the speech signals of this selected control unit (31, 32, 33) or superordinate control unit (41, 42, 43) are forwarded to the remaining control units (31, 32, 33) or superordinate control units (41, 42, 43) of the coupling group.

46. Method according to claim 45, **characterised in**
- **that** criteria for the forwarding of data of individual control units (31, 32, 33) or superordinate control units (41, 42, 43) to other control units (31, 32, 33) or superordinate control units (41, 42, 43) of the coupling group, in particular from one of the workstations, are predetermined, and
- **that** at the arrival of speech signals from a control unit (31, 32, 33) or superordinate control unit (41, 42, 43) of this coupling group according to these predetermined criteria, speech data are transmitted to the control units (31, 32, 33) or superordinate control units (41, 42, 43) of the coupling group.

47. Method according to any of claims 36 to 46, **characterised in that** the workstation services run on proxy computers, in particular on distribution units (21, 22, 23), in a computing centre (8; 8a, 8b) and communicate with one another via a local network (81; 81a, 81b) with the control units (31, 32, 33) disposed also in this computing centre, in particular exchange speech signals.

48. Method according to any of claims 36 to 47, **characterised in that** a workstation (11, 12, 13) has several speech input units (111, 121, 131) and/or several speech output units (112, 122, 132),
- wherein from each speech input unit (111, 121, 131) in each case speech signals are transmitted via a discrete data connection to the respective workstation service, and
- wherein in each case speech signals are transmitted via a discrete data connection from the respective workstation service to each speech output unit (112, 122, 132).

## Revendications

1. Système de communication pour la communication vocale au moyen de plusieurs postes de travail (11, 12, 13), en particulier pour des contrôleurs de trafic aérien, ainsi qu'au moyen de plusieurs dispositifs émetteurs radio (51, 52, 53) et dispositifs récepteurs radio (61, 62, 63),
- dans lequel chacun des postes de travail (11, 12, 13) comporte au moins ce qui suit :
• au moins une unité d'entrée vocale (111, 121, 131), en particulier un microphone,
• au moins une unité de sortie vocale (112, 122, 132), en particulier un haut-parleur ou un casque à écouteur,
• au moins une unité de commande (113, 123, 133) destinée à élaborer un signal de commande PTT qui indique que des signaux vocaux doivent être transmis par le poste de travail respectif (11, 12, 13) à l'un des dispositifs émetteurs radio (51, 52, 53) au moyen d'une unité d'entrée vocale (111, 121, 131),
• au moins une unité d'affichage (114, 124, 134) destinée à afficher un signal de réception SQU qui indique si des signaux vocaux sont fournis par l'un des dispositifs récepteurs radio (61, 62, 63) à l'unité de sortie vocale (112, 122, 132), ainsi que
• au moins une unité de sélection destinée à sélectionner les dispositifs émetteurs radio (51, 52, 53) et dispositifs récepteurs radio (61, 62, 63) avec lesquels les postes de travail établissent une liaison vocale sur la base de signaux de commande,
- dans lequel les signaux vocaux élaborés par les unités d'entrée vocale (111, 121, 131) ainsi que les signaux de commande PTT élaborés par les unités de commande (113, 123, 133) sont envoyés aux dispositifs émetteurs radio (51, 52, 53) et le dispositif émetteur radio (51, 52, 53) est conçu pour la délivrance des signaux vocaux transmis par un poste de travail (11, 12, 13) avec communication simultanée d'un signal de commande PTT par radio,
- dans lequel les dispositifs récepteurs radio (61, 62, 63) sont conçus pour la réception de signaux vocaux par radio, les signaux vocaux reçus par les dispositifs récepteurs radio (61, 62, 63) sont envoyés aux postes de travail (11, 12, 13) individuels en vue de la délivrance par les unités de sortie vocale (112, 122, 132) et les dispositifs récepteurs radio (61, 62, 63) communiquent, pendant la réception de signaux vocaux et leur retransmission, à chaque fois un signal de réception SQU aux postes de travail (11, 12, 13),
- dans lequel plusieurs unités de contrôle (31, 32, 33) sont prévues dans le trajet du signal entre les postes de travail (11, 12, 13) et les dispositifs émetteurs radio (51, 52, 53) et entre les postes de travail (11, 12, 13) et les dispositifs récepteurs radio (61, 62, 63), dans lequel chaque unité de contrôle (31, 32, 33) est en liaison de communication avec au moins un dispositif émetteur radio et au moins un dispositif récepteur radio (61, 62, 63) et est associée à ceux-ci, dans lequel les dispositifs émetteurs radio (51, 52, 53) et dispositifs récepteurs radio (61, 62, 63) associés à la même unité de contrôle (31, 32, 33) utilisent de préférence la même fréquence radio et dans lequel en particulier chaque dispositif émetteur radio (51, 52, 53) et dispositif récepteur radio (61, 62, 63) est associé de préférence à une seule unité de contrôle (31, 32, 33),
- dans lequel plusieurs postes de travail (11, 12, 13) sont reliés à la même unité de contrôle (31, 32, 33), en particulier tous les postes de travail (11, 12, 13) sont reliés à toutes les unités de contrôle (31, 32, 33),
- dans lequel, lors de la présence simultanée de plusieurs signaux de commande PTT de plusieurs unités de distribution (21, 22, 23), les unités de contrôle (31, 32, 33) sélectionnent les signaux vocaux d'une des unités de distribution (21, 22, 23) selon des critères prescrits ou pouvant être prescrits ou superposent les signaux vocaux de plusieurs postes de travail selon des critères prescrits et transmettent le signal vocal sélectionné ou superposé ainsi obtenu au dispositif émetteur radio en vue de son émission, et
- dans lequel, en présence d'un signal vocal communiqué par le dispositif récepteur radio (61, 62, 63), les unités de contrôle (31, 32, 33) communiquent un signal de réception SQU aux postes de travail (11, 12, 13) qui leur sont reliés et transmettent les signaux vocaux à ces postes de travail (11, 12, 13).

2. Système de communication selon la revendication 1, **caractérisé en ce que**
- au moins une unité de contrôle (31, 32, 33) est reliée à plusieurs dispositifs émetteurs radio (51, 52, 53),
- l'unité de contrôle (31, 32, 33) communique les signaux vocaux lui arrivant d'un poste de travail (11, 12, 13) à un seul des dispositifs émetteurs radio (51, 52, 53) ou à tous les dispositifs émetteurs radio (51, 52, 53) en liaison avec elle en vue de leur transmission, et/ou
- l'unité de contrôle (31, 32, 33) communique les signaux vocaux lui arrivant des dispositifs récepteurs radio (61, 62, 63) aux postes de travail (11, 12, 13) en liaison vocale avec elle.

3. Système de communication selon la revendication 1 ou 2, **caractérisé en ce que**
- l'unité de contrôle (31, 32, 33) est reliée à au moins un dispositif émetteur radio (51, 52, 53) et à au moins un dispositif émetteur radio de sauvegarde (52a, 53a) et
l'unité de contrôle (31, 32, 33) transmet les signaux vocaux, lorsque le dispositif émetteur radio (51, 52, 53) fonctionne, à celui-ci et transmet sinon les signaux vocaux au dispositif émetteur radio de sauvegarde (52a, 53a), et/ou
- l'unité de contrôle (31, 32, 33) est reliée à au moins un dispositif récepteur radio (61, 62, 63) et à au moins un dispositif récepteur radio de sauvegarde (62a, 63a) et
l'unité de contrôle (31, 32, 33) distribue aux postes de travail (11, 12, 13), lorsque le dispositif récepteur radio (61, 62, 63) qui lui est relié fonctionne, les signaux vocaux lui arrivant du dispositif récepteur radio (61, 62, 63) et distribue sinon aux postes de travail (11, 12, 13) les signaux vocaux lui arrivant du dispositif récepteur radio de sauvegarde (62a, 63a).

4. Système de communication selon l'une quelconque des revendications précédentes, **caractérisé en ce que**
- au moins une unité de contrôle de rang supérieur (41, 42, 43) est présente dans le trajet du signal entre une unité de contrôle (31, 32, 33) et le dispositif émetteur radio (51, 52, 53),
- l'unité de contrôle de rang supérieur (41, 42, 43) est reliée à plusieurs unités de contrôle (31a-33a, 31b-33b), chacune de ces unités de contrôle (31a-33a, 31b-33b) étant reliée en particulier à des groupes de postes de travail (11-16),
- des signaux vocaux et signaux de commande PTT fournis par les unités de contrôle (31a-33a, 31b-33b) sont envoyés à l'unité de contrôle de rang supérieur (41, 42, 43), laquelle unité de contrôle de rang supérieur (41, 42, 43) sélectionne lors de la fourniture simultanée de signaux de commande PTT de plusieurs unités de contrôle (31a-33a, 31b-33b) qui lui sont reliées, l'une des unités de contrôle (31a-33a, 31b-33b) selon des critères prescrits ou pouvant être prescrits et retransmet les signaux vocaux de l'unité de contrôle sélectionnée au dispositif émetteur radio (51, 52, 53), et
- l'unité de contrôle de rang supérieur (41, 42, 43) retransmet, lors de la réception de signaux vocaux du dispositif récepteur radio (61, 62, 63), ces signaux vocaux aux unités de contrôle (31a-33a, 31b-33b) reliées à l'unité de contrôle de rang supérieur (41, 42, 43) et transmet un signal de réception SQU à ces unités de contrôle (31a-33a, 31b-33b).

5. Système de communication selon l'une quelconque des revendications précédentes, **caractérisé en ce que** les unités de contrôle (31, 32, 33) ou les unités de contrôle de rang supérieur (41, 42, 43) communiquent les signaux vocaux leur arrivant ainsi que les signaux de réception SQU associés simplement à une sélection de postes de travail (11, 12, 13) ou d'unités de contrôle (31, 32, 33), les unités de contrôle (31, 32, 33) ou les unités de contrôle de rang supérieur (41, 42, 43) effectuant de préférence cette sélection sur la base de demandes faites préalablement par les postes de travail (11, 12, 13) ou par les unités de contrôle (31, 32, 33).

6. Système de communication selon l'une quelconque des revendications précédentes, **caractérisé en ce que** les unités de contrôle (31, 32, 33) ou unités de contrôle de rang supérieur (41, 42, 43) reliées directement aux dispositifs récepteurs radio (61, 62, 63) sont reliées à chaque fois à plusieurs dispositifs récepteurs radio (61, 62, 63) de la même fréquence et évaluent les signaux vocaux leur arrivant simultanément des dispositifs récepteurs radio (61, 62, 63) et élaborent un signal d'évaluation (B) qui indique en particulier
a) un classement des signaux vocaux arrivant selon la qualité du signal ou
b) le meilleur des signaux vocaux arrivant,
et les unités de contrôle (31, 32, 33) ou unités de contrôle de rang supérieur (41, 42, 43) reliées directement aux dispositifs récepteurs radio (61, 62, 63) retransmettent le signal d'évaluation (B) ainsi que les signaux vocaux individuels de tous les dispositifs récepteurs radio (61, 62, 63) ou le meilleur signal vocal aux postes de travail (11, 12, 13) ou aux unités de contrôle (31, 32, 33).

7. Système de communication selon l'une quelconque des revendications précédentes, **caractérisé en ce qu'**il est prévu une unité de couplage (7) qui est reliée à deux ou plusieurs unités de contrôle (31, 32, 33) et/ou unités de contrôle de rang supérieur (41, 42, 43),
dans lequel l'unité de couplage (7), à l'arrivée de signaux vocaux ainsi que d'un signal de réception SQU d'une unité de contrôle (31, 32, 33) ou unité de contrôle de rang supérieur (41, 42, 43) qui lui est reliée, retransmet ces signaux vocaux ainsi qu'un signal de commande PTT aux autres unités de contrôle (31, 32, 33) et/ou unités de contrôle de rang supérieur (41, 42, 43) qui lui sont reliées, dans lequel en particulier l'unité de couplage (7), à l'arrivée simultanée de signaux vocaux de deux unités de contrôle (31, 32, 33) ou unités de contrôle de rang supérieur (41, 42, 43) qui lui sont reliées, sélectionne l'une des unités de contrôle (31, 32, 33) ou unités de contrôle de rang supérieur (41, 42, 43) selon des critères prescrits ou pouvant être prescrits et ne retransmet que les signaux vocaux de l'unité de contrôle (31, 32, 33) ou unité de contrôle de rang supérieur (41, 42, 43) sélectionnée aux autres unités de contrôle (31, 32, 33) ou unités de contrôle de rang supérieur (41, 42, 43) reliées à l'unité de couplage (7).

8. Système de communication selon la revendication 7, **caractérisé en ce que**
- dans l'unité de couplage (7) sont mémorisés des critères pour la retransmission de données d'unités de contrôle (31, 32, 33) ou unités de contrôle de rang supérieur (41, 42, 43) individuelles à d'autres unités de contrôle (31, 32, 33) ou unités de contrôle de rang supérieur (41, 42, 43), et
- l'unité de couplage (7) transmet les signaux vocaux lui arrivant selon ces critères aux unités de contrôle (31, 32, 33) ou unités de contrôle de rang supérieur (41, 42, 43) qui lui sont reliées.

9. Système de communication selon l'une quelconque des revendications précédentes, **caractérisé en ce que**
- le système de communication comprend plusieurs unités de distribution (21, 22, 23) qui sont associées chacune à un poste de travail (11, 12, 13), au moins une unité de distribution (21, 22, 23) étant associée respectivement à chaque poste de travail (11, 12, 13),
- entre chacune des unités de distribution (21, 22, 23) et le poste de travail (11, 12, 13) associé à cette unité de distribution (21, 22, 23), il existe à chaque fois une liaison de données logique ou physique avec une largeur de bande prescrite par l'intermédiaire de laquelle peuvent être transmis des signaux vocaux à partir de chaque unité d'entrée vocale (111, 121, 131) et des signaux vocaux vers chaque unité de sortie vocale (112, 122, 132) du poste de travail (11, 12, 13) ainsi que des signaux de commande PTT et des signaux de réception SQU,
- l'unité de distribution (21, 22, 23) confère ou superpose les signaux vocaux, lui arrivant des dispositifs récepteurs radio (61, 62, 63), en particulier au moyen des unités de contrôle (31, 32, 33), selon une règle prescrite sur la base de signaux de commande et communique les signaux vocaux déterminés à partir de là au poste de travail (11, 12, 13) ou retransmet les signaux vocaux, arrivant d'un dispositif récepteur radio (61, 62, 63) sélectionné, en particulier au moyen d'une des unités de contrôle (31, 32, 33), au poste de travail (11, 12, 13) et, dans le cas dans lequel des signaux vocaux sont effectivement présents, retransmet un signal de réception SQU au poste de travail (11, 12, 13), et
- l'unité de distribution (21, 22, 23) communique les signaux de commande PTT et signaux vocaux qui lui sont communiqués par le poste de travail (11, 12, 13) à des dispositifs émetteurs radio (51, 52, 53) préalablement sélectionnés au moyen de signaux de commande, et ce en particulier au moyen d'une des unités de contrôle (31, 32, 33), les unités de distribution (21, 22, 23) étant agencées comme serveur Proxy dans un centre informatique (8 ; 8a, 8b) et les unités de contrôle (31, 32, 33) étant aussi agencées dans ce centre informatique (8 ; 8a, 8b), les unités de contrôle (31, 32, 33) et les unités de distribution (21, 22, 23) étant reliées entre elles à chaque fois par l'intermédiaire d'un réseau local (81 ; 81a, 81b).

10. Système de communication selon la revendication 9, **caractérisé en ce que**
- un poste de travail (11, 12, 13) comporte plusieurs unités d'entrée vocale (111, 121, 131) et/ou plusieurs unités de sortie vocale (112, 122, 132),
- lequel système de communication comporte pour chaque unité d'entrée vocale (111, 121, 131) une liaison de données particulière vers une unité de distribution (21, 22, 23) associée au poste de travail (11, 12, 13), et
- lequel système de communication comporte pour chaque unité de sortie vocale (112, 122, 132) une liaison de données particulière vers une unité de distribution (21, 22, 23) associée au poste de travail (11, 12, 13).

11. Système de communication selon l'une quelconque des revendications 6 ainsi que 9 ou 10, **caractérisé en ce que** l'unité de contrôle (31, 32, 33) communique le signal d'évaluation (B) à l'unité de distribution (21, 22, 23) et l'unité de distribution (21, 22, 23) sélectionne un des signaux vocaux communiqués par l'unité de contrôle respective (31, 32, 33) sur la base du signal d'évaluation (B) ou superpose plusieurs signaux vocaux communiqués par l'unité de contrôle respective (31, 32, 33) sur la base du signal d'évaluation (B) et communique le signal sélectionné ou superposé au poste de travail (11, 12, 13).

12. Système de communication pour la communication vocale au moyen de plusieurs postes de travail (11, 12, 13), en particulier pour des contrôleurs de trafic aérien, ainsi qu'au moyen de plusieurs dispositifs émetteurs radio (51, 52, 13) et dispositifs récepteurs radio (61, 64, 63),
- dans lequel chacun des postes de travail (11, 12, 13) comporte au moins ce qui suit :
• au moins une unité d'entrée vocale (111, 121, 131), en particulier un microphone,
• au moins une unité de sortie vocale (112, 122, 132), en particulier un haut-parleur,
• au moins une unité de commande (113, 123, 133) destinée à élaborer un signal de commande PTT qui indique que des signaux vocaux doivent être transmis par le poste de travail respectif (11, 12, 13) à l'un des dispositifs émetteurs radio (51, 52, 53) au moyen d'une unité d'entrée vocale (111, 121, 131),
• au moins une unité d'affichage (114, 124, 134) destinée à recevoir un signal de réception SQU qui indique si des signaux vocaux sont fournis par l'un des dispositifs récepteurs radio (61, 62, 63) à l'unité de sortie vocale (112, 122, 132), ainsi que
• au moins une unité de sélection destinée à sélectionner les dispositifs émetteurs radio (51, 52, 53) et dispositifs récepteurs radio (61, 62, 63) avec lesquels les postes de travail établissent une liaison vocale sur la base de signaux de commande,
- dans lequel les signaux vocaux élaborés par les unités d'entrée vocale (111, 121, 131) ainsi que les signaux de commande PTT élaborés par les unités de commande (113, 123, 133) sont envoyés aux dispositifs émetteurs radio (51, 52, 53) et le dispositif émetteur radio (51, 52, 53) est conçu pour la délivrance des signaux vocaux transmis par un poste de travail (11, 12, 13) avec communication simultanée d'un signal de commande PTT par radio,
- dans lequel les dispositifs récepteurs radio (61, 62, 63) sont conçus pour la réception de signaux vocaux par radio, les signaux vocaux reçus par les dispositifs récepteurs radio (61, 62, 63) sont envoyés aux postes de travail (11, 12, 13) individuels en vue de la délivrance par les unités de sortie vocale (112, 122, 132) et les dispositifs récepteurs radio (61, 62, 63) communiquent, pendant la réception de signaux vocaux et leur retransmission, à chaque fois un signal de réception SQU aux postes de travail (11, 12, 13),
- dans lequel le système de communication comprend plusieurs unités de distribution (21, 22, 23) qui sont associées chacune à un poste de travail (11, 12, 13), au moins une unité de distribution (21, 22, 23) étant associée à chaque poste de travail (11, 12, 13),
- dans lequel, entre chacune des unités de distribution (21, 22, 23) et le poste de travail (11, 12, 13) associé à cette unité de distribution (21, 22, 23), il existe à chaque fois une liaison de données logique ou physique avec une largeur de bande prescrite avec laquelle peuvent être transmis des signaux vocaux par chaque unité d'entrée vocale (111, 121, 131) et des signaux vocaux vers chaque unité de sortie vocale (112, 122, 132) du poste de travail (11, 12, 13) ainsi que des signaux de commande PTT et des signaux de réception SQU,
- dans lequel l'unité de distribution (21, 22, 23) confère ou superpose les signaux vocaux, lui arrivant des dispositifs récepteurs radio (61, 62, 63), en particulier au moyen des unités de contrôle (31, 32, 33), selon une règle prescrite sur la base de signaux de commande et communique les signaux vocaux déterminés à partir de là au poste de travail (11, 12, 13) ou retransmet les signaux vocaux, arrivant d'un dispositif récepteur radio (61, 62, 63) sélectionné, en particulier au moyen d'une des unités de contrôle (31, 32, 33), au poste de travail (11, 12, 13) et, dans le cas dans lequel des signaux vocaux sont effectivement présents, retransmet un signal de réception SQU au poste de travail (11, 12, 13), et
- dans lequel l'unité de distribution (21, 22, 23) communique des signaux de commande PTT et signaux vocaux qui lui sont communiqués par le poste de travail (11, 12, 13) à des dispositifs émetteurs radio (51, 52, 53) préalablement sélectionnés au moyen de signaux de commande, et ce en particulier au moyen d'une des unités de contrôle (31, 32, 33).

13. Système de communication selon la revendication 12, **caractérisé en ce que**
- plusieurs unités de contrôle (31, 32, 33) sont prévues dans le trajet du signal entre les unités de distribution (21, 22, 23) et les dispositifs émetteurs radio (51, 52, 53) et entre les postes de travail (11, 12, 13) et les dispositifs récepteurs radio (61, 62, 63), dans lequel chaque unité de contrôle (31, 32, 33) est en liaison avec au moins un dispositif émetteur radio (51, 52, 53) et au moins un dispositif récepteur radio (61, 62, 63) et est associée à ceux-ci, dans lequel les dispositifs émetteurs radio (51, 52, 53) et dispositifs récepteurs radio (61, 62, 63) associés à la même unité de contrôle (31, 32, 33) utilisent de préférence la même fréquence radio et en particulier chaque dispositif émetteur radio (51, 52, 53) et dispositif récepteur radio (61, 62, 63) n'est associé qu'à une seule unité de contrôle (31, 32, 33),
- dans lequel plusieurs unités de distribution (21, 22, 23) sont reliées à la même unité de contrôle (31, 32, 33), en particulier toutes les unités de distribution (21, 22, 23) sont reliées à toutes les unités de contrôle (31, 32, 33),
- dans lequel, lors de la présence simultanée de plusieurs signaux de commande PTT de plusieurs unités de distribution (21, 22, 23), les unités de contrôle (31, 32, 33) sélectionnent les signaux vocaux d'une des unités de distribution (21, 22, 23) selon des critères prescrits ou pouvant être prescrits ou superposent les signaux vocaux de plusieurs postes de travail selon des critères prescrits et transmettent le signal vocal sélectionné ou superposé ainsi obtenu au dispositif émetteur radio en vue de son émission,
- dans lequel, en présence d'un signal vocal communiqué par le dispositif récepteur radio (61, 62, 63), les unités de contrôle (31, 32, 33) communiquent un signal de réception SQU aux unités de distribution (21, 22, 23) qui leur sont reliées et transmettent les signaux vocaux à ces unités de distribution (21, 22, 23).

14. Système de communication selon la revendication 13, **caractérisé en ce que**
- au moins une unité de contrôle (31, 32, 33) est reliée à plusieurs dispositifs émetteurs radio (51, 52, 53),
- l'unité de contrôle (21, 22, 23) communique les signaux vocaux lui arrivant d'une unité de distribution (21, 22, 23) à un seul des dispositifs émetteurs radio (51, 52, 53) ou à tous les dispositifs émetteurs radio (51, 52, 53) en vue de leur transmission, et
- l'unité de contrôle (31, 32, 33) communique les signaux vocaux lui arrivant des dispositifs récepteurs radio (61, 62, 63) aux unités de distribution (21, 22, 23) en liaison vocale avec elle.

15. Système de communication selon la revendication 13 ou 14, **caractérisé en ce que**
- l'unité de contrôle (31, 32, 33) est reliée à au moins un dispositif émetteur radio (51, 52, 53) et à au moins un dispositif émetteur radio de sauvegarde (52a, 53a) et
l'unité de contrôle (31, 32, 33) transmet les signaux vocaux, lorsque le dispositif émetteur radio (51, 52, 53) fonctionne, à celui-ci et transmet sinon les signaux vocaux au dispositif émetteur radio de sauvegarde (51b, 51c), et/ou
- l'unité de contrôle (31, 32, 33) est reliée à au moins un dispositif récepteur radio de sauvegarde (62a, 63a) et
l'unité de contrôle (31, 32, 33) distribue aux unités de distribution (21, 22, 23), lorsque le dispositif récepteur radio (61, 62, 63) qui lui est relié fonctionne, les signaux vocaux lui arrivant du dispositif récepteur radio (61, 62, 63) et distribue sinon aux unités de distribution (21, 22, 23) les signaux vocaux lui arrivant du dispositif récepteur radio de sauvegarde (61, 62, 63).

16. Système de communication selon l'une quelconque des revendications 13 à 15, **caractérisé en ce que**
- au moins une unité de contrôle de rang supérieur (41, 42, 43) est présente dans le trajet du signal entre une unité de contrôle (31, 32, 33) et le dispositif émetteur radio (51, 52, 53),
- l'unité de contrôle de rang supérieur (41, 42, 43) est reliée à plusieurs unités de contrôle (31a-33a, 31b-33b), chacune de ces unités de contrôle (31a-33a, 31b-33b) étant reliée en particulier à des groupes d'unités de distribution (21-26) ainsi que de postes de travail (11-16) différents les uns des autres,
- des signaux vocaux et signaux de commande PTT fournis par les unités de contrôle (31a-33a, 31b-33b) sont envoyés à l'unité de contrôle de rang supérieur (41, 42, 43), laquelle unité de contrôle de rang supérieur (41, 42, 43) sélectionne lors de la fourniture simultanée de signaux de commande PTT de plusieurs unités de contrôle (31a-33a, 31b-33b) qui lui sont reliées, l'une des unités de contrôle (31a-33a, 31b-33b) selon des critères prescrits ou pouvant être prescrits et retransmet les signaux vocaux de l'unité de contrôle sélectionnée au dispositif émetteur radio (51, 52, 53), et
- l'unité de contrôle de rang supérieur (41, 42, 43) retransmet, lors de la réception de signaux vocaux du dispositif récepteur radio (61, 62, 63), ces signaux vocaux aux unités de contrôle (31a-33a, 31b-33b) reliées à l'unité de contrôle de rang supérieur (41, 42, 43) et transmet un signal de réception SQU à ces unités de contrôle (31a-33a, 31b-33b).

17. Système de communication selon l'une quelconque des revendications 13 à 16, **caractérisé en ce que** les unités de contrôle (31, 32, 33) ou les unités de contrôle de rang supérieur (41, 42, 43) communiquent les signaux vocaux leur arrivant ainsi que le signal de réception SQU associé simplement à une sélection d'unités de distribution (21, 22, 23) ou d'unités de contrôle (31, 32, 33), les unités de contrôle (31, 32, 33) ou les unités de contrôle de rang supérieur (41, 42, 43) effectuant de préférence cette sélection sur la base de demandes faites préalablement par les postes de travail (11, 12, 13) ou par les unités de contrôle (31, 32, 33).

18. Système de communication selon l'une quelconque des revendications 13 à 17, **caractérisé en ce que** les unités de contrôle (31, 32, 33) ou unités de contrôle de rang supérieur (41, 42, 43) reliées directement aux dispositifs récepteurs radio (61, 62, 63) sont reliées à chaque fois à plusieurs dispositifs récepteurs radio (61, 62, 63) et évaluent les signaux vocaux leur arrivant des dispositifs récepteurs radio (61, 62, 63) et élaborent un signal d'évaluation (B) qui indique en particulier
a) un classement des signaux vocaux arrivant selon la qualité du signal ou
b) le meilleur des signaux vocaux arrivant,
et les unités de contrôle (31, 32, 33) ou unités de contrôle de rang supérieur (41, 42, 43) reliées directement aux dispositifs récepteurs radio (61, 62, 63) retransmettent le signal d'évaluation (B) ainsi que les signaux vocaux individuels de tous les dispositifs récepteurs radio à l'unité de distribution (21, 22, 23) ou aux unités de contrôle (31, 32, 33),
dans lequel en particulier l'unité de contrôle (31, 32, 33) communique le signal d'évaluation (B) à l'unité de distribution (21, 22, 23) et l'unité de distribution (21, 22, 23) sélectionne un des signaux vocaux communiqués par l'unité de contrôle respective (31, 32, 33) sur la base du signal d'évaluation (B) ou superpose plusieurs signaux vocaux communiqués par l'unité de contrôle respective (31, 32, 33) sur la base du signal d'évaluation (B) et communique le signal sélectionné ou superposé au poste de travail (11, 12, 13) respectif relié à l'unité de distribution (21, 22, 23).

19. Système de communication selon l'une quelconque des revendications 13 à 18, **caractérisé en ce qu'**il est prévu une unité de couplage (7) qui est reliée à deux ou plusieurs unités de contrôle (31, 32, 33) et/ou unités de contrôle de rang supérieur (41, 42, 43),
dans lequel l'unité de couplage (7), à l'arrivée de signaux vocaux ainsi que d'un signal de réception SQU d'une unité de contrôle (31, 32, 33) ou unité de contrôle de rang supérieur (41, 42, 43) qui lui est reliée, retransmet ces signaux vocaux ainsi qu'un signal de commande PTT aux autres unités de contrôle (31, 32, 33) ou unités de contrôle de rang supérieur (41, 42, 43) qui lui sont reliées, dans lequel en particulier l'unité de couplage (7), à la réception simultanée de signaux vocaux de deux unités de contrôle (31, 32, 33) ou unités de contrôle de rang supérieur (41, 42, 43) qui lui sont reliées, sélectionne l'une des unités de contrôle (31, 32, 33) ou unités de contrôle de rang supérieur (41, 42, 43) selon des critères prescrits ou pouvant être prescrits et ne retransmet que les signaux vocaux de l'unité de contrôle (31, 32, 33) ou unité de contrôle de rang supérieur (41, 42, 43) sélectionnée aux autres unités de contrôle (31, 32, 33) ou unités de contrôle de rang supérieur (41, 42, 43) reliées à l'unité de couplage (7).

20. Système de communication selon la revendication 19, **caractérisé en ce que**
- dans l'unité de couplage (7) sont mémorisés des critères pour la retransmission de données d'unités de contrôle (31, 32, 33) ou unités de contrôle de rang supérieur (41, 42, 43) individuelles à d'autres unités de contrôle (31, 32, 33) ou unités de contrôle de rang supérieur (41, 42, 43), et
- l'unité de couplage (7) transmet les signaux vocaux lui arrivant selon ces critères aux unités de contrôle (31, 32, 33) ou unités de contrôle de rang supérieur (41, 42, 43) qui lui sont reliées.

21. Système de communication selon l'une quelconque des revendications 12 à 20, **caractérisé en ce que** les unités de distribution (21, 22, 23) sont agencées comme serveur Proxy dans un centre informatique (8 ; 8a, 8b) et les unités de contrôle (31, 32, 33) sont aussi agencées dans ce centre informatique (8 ; 8a, 8b), les unités de contrôle (31, 32, 33) et les unités de distribution (21, 22, 23) étant reliées entre elles à chaque fois par l'intermédiaire d'un réseau local (81 ; 81a, 81b).

22. Système de communication selon l'une quelconque des revendications 12 à 21, **caractérisé en ce qu'**un poste de travail (11, 12, 13) comporte plusieurs unités d'entrée vocale (111, 121, 131) et/ou plusieurs unités de sortie vocale (112, 122, 132),
- lequel système de communication comporte pour chaque unité d'entrée vocale (111, 121, 131) une liaison de données particulière vers une unité de distribution (21, 22, 23) associée au poste de travail (11, 12, 13), et
- lequel système de communication comporte pour chaque unité de sortie vocale (112, 122, 132) une liaison de données particulière vers une unité de distribution (21, 22, 23) associée au poste de travail (11, 12, 13).

23. Procédé de transmission de données vocales de plusieurs postes de travail (11, 12, 13), en particulier pour des contrôleurs de trafic aérien, comprenant à chaque fois :
• au moins une unité d'entrée vocale (111, 121, 131), en particulier un microphone,
• au moins une unité de sortie vocale (112, 122, 132), en particulier un haut-parleur ou un casque à écouteur,
• au moins une unité de commande (113, 123, 133) destinée à élaborer un signal de commande PTT qui indique que des signaux vocaux doivent être transmis par le poste de travail respectif (11, 12, 13) à un dispositif émetteur radio parmi plusieurs dispositifs émetteurs radio (51, 52, 53) au moyen d'une unité d'entrée vocale (111, 121, 131),
• au moins une unité d'affichage (114, 124, 134) destinée à afficher un signal de réception SQU qui indique si des signaux vocaux sont fournis par un dispositif récepteur radio parmi plusieurs dispositifs récepteurs radio (61, 62, 63) à l'unité de sortie vocale (112, 122, 132), ainsi que
• au moins une unité de sélection destinée à sélectionner les dispositifs émetteurs radio (51, 52, 53) et dispositifs récepteurs radio (61, 62, 63) avec lesquels les postes de travail établissent une liaison vocale sur la base de signaux de commande,
au moyen de plusieurs dispositifs émetteurs radio (51, 52, 53) et dispositifs récepteurs radio (61, 62, 63),
- dans lequel les signaux vocaux élaborés par les unités d'entrée vocale (111, 121, 131) ainsi que les signaux de commande PTT élaborés par les unités de commande (113, 123, 133) sont envoyés aux dispositifs émetteurs radio (51, 52, 53) et les signaux vocaux fournis par un poste de travail (11, 12, 13) sont retransmis au dispositif émetteur radio (51, 52, 53) et, lors de la communication simultanée d'un signal de commande PTT par le poste de travail (11, 12, 13), sont émis par radio par ledit dispositif émetteur radio,
- dans lequel les dispositifs récepteurs radio (61, 62, 63) reçoivent par radio des signaux vocaux et ces signaux vocaux sont retransmis aux postes de travail et sont délivrés en sortie avec les unités de sortie vocale (112, 122, 132) et, pendant la réception de signaux vocaux ainsi que pendant la retransmission des signaux vocaux aux postes de travail (11, 12, 13), un signal de réception SQU est communiqué à chaque fois au poste de travail (11, 12, 13) respectif et est affiché par l'unité d'affichage,
- dans lequel des données vocales sont transmises par les postes de travail (11, 12, 13) aux dispositifs émetteurs radio (51, 52, 53) et dispositifs récepteurs radio (61, 62, 63) par l'intermédiaire d'unités de contrôle (31, 32, 33),
- dans lequel, lors de la présence simultanée de plusieurs signaux de commande PTT de plusieurs postes de travail (11, 12, 13), les unités de contrôle (31, 32, 33) sélectionnent les signaux vocaux d'un des postes de travail (11, 12, 13) selon des critères prescrits ou pouvant être prescrits ou superposent les signaux vocaux de plusieurs postes de travail selon des critères prescrits et transmettent le signal vocal sélectionné ou superposé ainsi obtenu au dispositif émetteur radio en vue de son émission,
- dans lequel, en présence d'un signal vocal communiqué par le dispositif récepteur radio (61, 62, 63), les unités de contrôle (31, 32, 33) communiquent un signal de réception SQU aux postes de travail (11, 12, 13) qui leur sont reliés et transmettent les signaux vocaux à ces postes de travail (11, 12, 13).

24. Procédé selon la revendication 23, **caractérisé en ce que**
- les unités de contrôle sont agencées dans le trajet du signal entre les postes de travail (11, 12, 13) et les dispositifs émetteurs radio (51, 52, 53) et entre les postes de travail (11, 12, 13) et les dispositifs récepteurs radio (61, 62, 63), dans lequel chaque unité de contrôle (31, 32, 33) est mise en liaison de communication avec au moins un dispositif émetteur radio et au moins un dispositif récepteur radio (61, 62, 63), dans lequel les dispositifs émetteurs radio (51, 52, 53) et dispositifs récepteurs radio (61, 62, 63) associés à la même unité de contrôle (31, 32, 33) utilisent de préférence la même fréquence radio et dans lequel en particulier chaque dispositif émetteur radio (51, 52, 53) et dispositif récepteur radio (61, 62, 63) est associé de préférence à une seule unité de contrôle (31, 32, 33), et
- plusieurs postes de travail (11, 12, 13) sont reliés à la même unité de contrôle (31, 32, 33), en particulier tous les postes de travail (11, 12, 13) sont reliés à toutes les unités de contrôle (31, 32, 33).

25. Procédé selon la revendication 23 ou 24, dans lequel au moins une unité de contrôle (31, 32, 33) est reliée à plusieurs dispositifs émetteurs radio (51, 52, 53), **caractérisé en ce que**
- par l'unité de contrôle (31, 32, 33) sont communiqués les signaux vocaux lui arrivant d'un poste de travail (11, 12, 13) à un seul des dispositifs émetteurs radio (51, 52, 53) ou à tous les dispositifs émetteurs radio (51, 52, 53) en liaison avec elle en vue de leur transmission, et/ou
- par l'unité de contrôle (31, 32, 33) sont communiqués les signaux vocaux lui arrivant des dispositifs récepteurs radio (61, 62, 63) aux postes de travail (11, 12, 13) en liaison vocale avec elle.

26. Procédé selon l'une quelconque des revendications 23 à 25, **caractérisé en ce que**
- l'unité de contrôle (31, 32, 33) transmet les signaux vocaux, lorsque le dispositif émetteur radio (51, 52, 53) fonctionne, à celui-ci et transmet sinon les signaux vocaux à un dispositif émetteur radio de sauvegarde (52a, 53a) en liaison avec elle, et/ou
- l'unité de contrôle (31, 32, 33) distribue aux postes de travail (11, 12, 13), lorsque le dispositif récepteur radio (61, 62, 63) qui lui est relié fonctionne, les signaux vocaux lui arrivant du dispositif récepteur radio (61, 62, 63) et distribue sinon aux postes de travail (11, 12, 13) les signaux vocaux lui arrivant d'un dispositif récepteur radio de sauvegarde (62a, 63a) en liaison avec elle.

27. Procédé selon l'une quelconque des revendications 23 à 26, **caractérisé en ce que**
- au moins une unité de contrôle de rang supérieur (41, 42, 43) est présente dans le trajet du signal entre une unité de contrôle (31, 32, 33) et le dispositif émetteur radio (51, 52, 53), laquelle unité de contrôle de rang supérieur (41, 42, 43) est reliée à plusieurs unités de contrôle (31a-33a, 31b-33b), chacune de ces unités de contrôle (31a-33a, 31b-33b) étant reliée en particulier à des groupes de postes de travail (11-16),
- les signaux vocaux et signaux de commande PTT fournis par les unités de contrôle (31a-33a, 31b-33b) sont transmis à l'unité de contrôle de rang supérieur (41, 42, 43), laquelle unité de contrôle de rang supérieur (41, 42, 43) sélectionne lors de la fourniture simultanée de signaux de commande PTT de plusieurs unités de contrôle (31a-33a, 31b-33b) qui lui sont reliées, l'une des unités de contrôle (31a-33a, 31b-33b) selon des critères prescrits ou pouvant être prescrits et retransmet les signaux vocaux de l'unité de contrôle sélectionnée au dispositif émetteur radio (51, 52, 53), et
- l'unité de contrôle de rang supérieur (41, 42, 43) retransmet, lors de la réception de signaux vocaux du dispositif récepteur radio (61, 62, 63), ces signaux vocaux aux unités de contrôle (31a-33a, 31b-33b) reliées à l'unité de contrôle de rang supérieur (41, 42, 43) et transmet un signal de réception SQU à ces unités de contrôle (31a-33a, 31b-33b).

28. Procédé selon l'une quelconque des revendications 23 à 27, **caractérisé en ce que** les unités de contrôle (31, 32, 33) ou les unités de contrôle de rang supérieur (41, 42, 43) communiquent les signaux vocaux leur arrivant ainsi que les signaux de réception SQU respectivement associés simplement à une sélection de postes de travail (11, 12, 13) ou d'unités de contrôle (31, 32, 33), les unités de contrôle (31, 32, 33) ou les unités de contrôle de rang supérieur (41, 42, 43) effectuant de préférence cette sélection sur la base de demandes faites préalablement par les postes de travail (11, 12, 13) ou par les unités de contrôle (31, 32, 33).

29. Procédé selon l'une quelconque des revendications 23 à 28, **caractérisé en ce que** les unités de contrôle (31, 32, 33) ou unités de contrôle de rang supérieur (41, 42, 43) reliées directement aux dispositifs récepteurs radio (61, 62, 63) obtiennent à chaque fois des données vocales de plusieurs dispositifs récepteurs radio (61, 62, 63) de la même fréquence et évaluent les signaux vocaux leur arrivant simultanément des dispositifs récepteurs radio (61, 62, 63) et élaborent un signal d'évaluation (B) qui indique en particulier
a) un classement des signaux vocaux arrivant selon la qualité du signal ou
b) le meilleur des signaux vocaux arrivant,
et les unités de contrôle (31, 32, 33) ou unités de contrôle de rang supérieur (41, 42, 43) reliées directement aux dispositifs récepteurs radio (61, 62, 63) retransmettent le signal d'évaluation (B) ainsi que les signaux vocaux individuels de tous les dispositifs récepteurs radio (61, 62, 63) ou le meilleur signal vocal aux postes de travail (11, 12, 13) ou aux unités de contrôle (31, 32, 33).

30. Procédé selon l'une quelconque des revendications 23 à 29, **caractérisé en ce qu'**un groupe de couplage est prescrit, lequel comprend deux ou plusieurs unités de contrôle (31, 32, 33) et/ou unités de contrôle de rang supérieur (41, 42, 43),
dans lequel, à l'arrivée de signaux vocaux ainsi que d'un signal de réception SQU d'une unité de contrôle (31, 32, 33) ou unité de contrôle de rang supérieur (41, 42, 43) du groupe de couplage, ces signaux vocaux ainsi qu'un signal de commande PTT sont retransmis aux autres unités de contrôle (31, 32, 33) et/ou unités de contrôle de rang supérieur (41, 42, 43) du groupe de couplage.

31. Procédé selon la revendication 30, **caractérisé en ce que**, à l'arrivée simultanée de signaux vocaux de deux unités de contrôle (31, 32, 33) ou unités de contrôle de rang supérieur (41, 42, 43) du groupe de couplage, l'une des unités de contrôle (31, 32, 33) ou unités de contrôle de rang supérieur (41, 42, 43) est sélectionnée selon des critères prescrits ou pouvant être prescrits et seuls les signaux vocaux de cette unité de contrôle (31, 32, 33) ou unité de contrôle de rang supérieur (41, 42, 43) sélectionnée sont retransmis aux autres unités de contrôle (31, 32, 33) ou unités de contrôle de rang supérieur (41, 42, 43) du groupe de couplage.

32. Procédé selon la revendication 30 ou 31, **caractérisé en ce que** des critères pour la retransmission de données d'unités de contrôle (31, 32, 33) ou unités de contrôle de rang supérieur (41, 42, 43) individuelles à d'autres unités de contrôle (31, 32, 33) ou unités de contrôle de rang supérieur (41, 42, 43) du groupe de couplage sont prescrits, en particulier par l'un des postes de travail,
- à l'arrivée de signaux vocaux d'une unité de contrôle (31, 32, 33) ou unité de contrôle de rang supérieur (41, 42, 43) de ce groupe de couplage, des données vocales sont transmises aux unités de contrôle (31, 32, 33) ou unités de contrôle de rang supérieur (41, 42, 43) du groupe de couplage selon ces critères prescrits.

33. Procédé selon l'une quelconque des revendications 23 à 32, **caractérisé en ce que**
- pour les postes de travail (11, 12, 13) sur des ordinateurs agencés à distance des postes de travail, en particulier sur une unité de distribution (21, 22, 23), est réalisé à chaque fois un service de poste de travail, au moins un service de poste de travail étant associé à chaque poste de travail (11, 12, 13), et
- entre le service de poste de travail et le poste de travail (11, 12, 13) associé à ce service de poste de travail est établie à chaque fois une liaison de données logique ou physique avec une largeur de bande prescrite par l'intermédiaire de laquelle sont transmis des signaux vocaux à partir de l'unité d'entrée vocale (111, 121, 131) et des signaux vocaux vers l'unité de sortie vocale (112, 122, 132) du poste de travail (11, 12, 13) ainsi que des signaux de commande PTT et des signaux de réception SQU,
- le service de poste de travail confère ou superpose les signaux vocaux, lui arrivant des dispositifs récepteurs radio (61, 62, 63), en particulier au moyen des unités de contrôle (31, 32, 33), selon une règle prescrite sur la base de signaux de commande et communique les signaux vocaux déterminés à partir de là au poste de travail (11, 12, 13) ou retransmet les signaux vocaux, arrivant d'un dispositif récepteur radio (61, 62, 63) sélectionné, en particulier au moyen d'une des unités de contrôle (31, 32, 33), au poste de travail (11, 12, 13) et, dans le cas dans lequel des signaux vocaux sont effectivement présents, retransmet un signal de réception SQU au poste de travail (11, 12, 13),
- le service de poste de travail communique les signaux vocaux et signaux de commande PTT, qui lui ont été communiqués par le poste de travail (11, 12, 13), à des dispositifs émetteurs radio (51, 52, 53), en particulier au moyen d'une des unités de contrôle (31, 32, 33) qui ont été sélectionnées préalablement au moyen de signaux de commande,
dans lequel les services de poste de travail s'exécutent en particulier sur des serveurs Proxy, en particulier sur des unités de distribution (21, 22, 23), dans un centre informatique (8 ; 8a, 8b) et communiquent entre eux avec les unités de contrôle (31, 32, 33) également agencées dans ce centre informatique par l'intermédiaire d'un réseau local (81 ; 81a, 81b), en particulier échangent des signaux vocaux.

34. Procédé selon l'une quelconque des revendications 23 à 33, **caractérisé en ce qu'**un poste de travail (11, 12, 13) comporte plusieurs unités d'entrée vocale (111, 121, 131) et/ou plusieurs unités de sortie vocale (112, 122, 132),
- dans lequel des signaux vocaux sont transmis par chaque unité d'entrée vocale (111, 121, 131) au service de poste de travail respectif par l'intermédiaire d'une liaison de données particulière, et
- dans lequel des signaux vocaux sont transmis par le service de poste de travail respectif à chaque unité de sortie vocale (112, 122, 132) par l'intermédiaire d'une liaison de données particulière.

35. Procédé selon l'une quelconque des revendications 29 et 33 ou 34, **caractérisé en ce que** l'unité de contrôle (31, 32, 33) communique le signal d'évaluation (B) à l'unité de distribution (21, 22, 23) et le service de poste de travail sélectionne un des signaux vocaux communiqués par l'unité de contrôle (31, 32, 33) respective sur la base du signal d'évaluation (B) ou superpose plusieurs des signaux vocaux communiqués par l'unité de contrôle (31, 32, 33) respective sur la base du signal d'évaluation (B) et communique le signal sélectionné ou superposé au poste de travail (11, 12, 13).

36. Procédé de transmission de données vocales de plusieurs postes de travail (11, 12, 13), en particulier pour des contrôleurs de trafic aérien, comprenant à chaque fois
• au moins une unité d'entrée vocale (111, 121, 131), en particulier un microphone,
• au moins une unité de sortie vocale (112, 122, 132), en particulier un haut-parleur ou un casque à écouteur,
• au moins une unité de commande (113, 123, 133) destinée à élaborer un signal de commande PTT qui indique que des signaux vocaux doivent être transmis par le poste de travail respectif (11, 12, 13) à un dispositif émetteur radio parmi plusieurs dispositifs émetteurs radio (51, 52, 53) au moyen d'une unité d'entrée vocale (111, 121, 131),
• au moins une unité d'affichage (114, 124, 134) destinée à afficher un signal de réception SQU qui indique si des signaux vocaux sont fournis par un dispositif récepteur radio parmi plusieurs dispositifs récepteurs radio (61, 62, 63) à l'unité de sortie vocale (112, 122, 132), ainsi que
• au moins une unité de sélection destinée à sélectionner les dispositifs émetteurs radio (51, 52, 53) et dispositifs récepteurs radio (61, 62, 63) avec lesquels les postes de travail établissent une liaison vocale sur la base de signaux de commande, au moyen de plusieurs dispositifs émetteurs radio (51, 52, 53) et dispositifs récepteurs radio (61, 62, 63),
- dans lequel les signaux vocaux élaborés par les unités d'entrée vocale (111, 121, 131) ainsi que les signaux de commande PTT élaborés par les unités de commande (113, 123, 133) sont transmis aux dispositifs émetteurs radio (51, 52, 53) et les signaux vocaux fournis par un poste de travail (11, 12, 13) sont retransmis au dispositif émetteur radio (51, 52, 53) et, lors de la communication simultanée d'un signal de commande PTT par le poste de travail (11, 12, 13), sont émis par radio par ledit dispositif émetteur radio,
- dans lequel les dispositifs récepteurs radio (61, 62, 63) reçoivent par radio des signaux vocaux et ces signaux vocaux sont retransmis aux postes de travail et sont délivrés avec les unités de sortie vocale (112, 122, 132) et, pendant la réception de signaux vocaux ainsi que pendant la retransmission des signaux vocaux aux postes de travail (11, 12, 13), un signal de réception SQU est communiqué à chaque fois au poste de travail (11, 12, 13) respectif et est affiché par l'unité d'affichage,
- dans lequel, pour les postes de travail (11, 12, 13) sur des ordinateurs agencés à distance des postes de travail, en particulier sur une unité de distribution (21, 22, 23), un service de poste de travail est réalisé à chaque fois, au moins un service de poste de travail étant associé à chaque poste de travail (11, 12, 13),
- dans lequel, entre le service de poste de travail et le poste de travail (11, 12, 13) associé à ce service de poste de travail, est établie à chaque fois une liaison de données logique ou physique avec une largeur de bande prescrite par l'intermédiaire de laquelle sont transmis des signaux vocaux à partir de l'unité d'entrée vocale (111, 121, 131) et des signaux vocaux vers l'unité de sortie vocale (112, 122, 132) du poste de travail (11, 12, 13) ainsi que des signaux de commande PTT et des signaux de réception SQU,
- dans lequel le service de poste de travail confère ou superpose les signaux vocaux, lui arrivant des dispositifs récepteurs radio (61, 62, 63), en particulier au moyen des unités de contrôle (31, 32, 33), selon une règle prescrite sur la base de signaux de commande et communique les signaux vocaux déterminés à partir de là au poste de travail (11, 12, 13) ou retransmet les signaux vocaux, arrivant d'un dispositif récepteur radio (61, 62, 63) sélectionné, en particulier au moyen d'une des unités de contrôle (31, 32, 33), au poste de travail (11, 12, 13) et, dans le cas dans lequel des signaux vocaux sont effectivement présents, retransmet un signal de réception SQU au poste de travail (11, 12, 13), et
- dans lequel le service de poste de travail communique les signaux vocaux et signaux de commande PTT, qui lui ont été communiqués par le poste de travail (11, 12, 13), à des dispositifs émetteurs radio (51, 52, 53), en particulier au moyen d'une des unités de contrôle (31, 32, 33) qui ont été sélectionnées préalablement au moyen de signaux de commande.

37. Procédé selon la revendication 36, **caractérisé en ce que**
- plusieurs unités de contrôle (31, 32, 33) sont agencées dans le trajet du signal entre les unités de distribution (21, 22, 23) et les dispositifs émetteurs radio (51, 52, 53) et entre les postes de travail (11, 12, 13) et les dispositifs récepteurs radio (61, 62, 63), dans lequel au moins un dispositif émetteur radio (51, 52, 53) et au moins un dispositif récepteur radio (61, 62, 63) sont associés à chaque unité de contrôle (31, 32, 33),
- dans lequel plusieurs unités de distribution (21, 22, 23) sont reliées à la même unité de contrôle (31, 32, 33), en particulier toutes les unités de distribution (21, 22, 23) sont reliées à toutes les unités de contrôle (31, 32, 33),
- dans lequel, lors de la présence simultanée de plusieurs signaux de commande PTT de plusieurs unités de distribution (21, 22, 23), les unités de contrôle (31, 32, 33) sélectionnent les signaux vocaux d'une des unités de distribution (21, 22, 23) selon des critères prescrits ou pouvant être prescrits et les transmettent au dispositif émetteur radio (51, 52, 53) en vue de leur émission, et
- dans lequel, en présence d'un signal vocal communiqué par le dispositif récepteur radio (61, 62, 63), les unités de contrôle (31, 32, 33) communiquent un signal de réception SQU aux unités de distribution (21, 22, 23) qui leur sont reliées et transmettent les signaux vocaux à ces unités de distribution (21, 22, 23).

38. Procédé selon la revendication 37, **caractérisé en ce que**
- les unités de contrôle (31, 32, 33) sont agencées dans le trajet du signal entre les services de poste de travail et les dispositifs émetteurs radio (51, 52, 53) et entre les services de poste de travail (11, 12, 13) et les dispositifs récepteurs radio (61, 62, 63), dans lequel chaque unité de contrôle (31, 32, 33) est mise en liaison de communication avec au moins un dispositif émetteur radio (51, 52, 53) et au moins un dispositif récepteur radio (61, 62, 63),
dans lequel les dispositifs émetteurs radio (51, 52, 53) et les dispositifs récepteurs radio (61, 62, 63) associés à la même unité de contrôle (31, 32, 33) utilisent de préférence la même fréquence radio et en particulier chaque dispositif émetteur radio (51, 52, 53) et dispositif récepteur radio (61, 62, 63) n'est associé de préférence qu'à une seule unité de contrôle (31, 32, 33), et
- plusieurs postes de travail (11, 12, 13) sont reliés à la même unité de contrôle (31, 32, 33), en particulier tous les postes de travail (11, 12, 13) sont reliés à toutes les unités de contrôle (31, 32, 33).

39. Procédé selon la revendication 37 ou 38, **caractérisé en ce que**
- au moins une unité de contrôle (31, 32, 33) est reliée à plusieurs dispositifs émetteurs radio (51, 52, 53),
- l'unité de contrôle (21, 22, 23) communique les signaux vocaux lui arrivant d'une unité de distribution (21, 22, 23) à un seul des dispositifs émetteurs radio (51, 52, 53) ou à tous les dispositifs émetteurs radio (51, 52, 53) en liaison avec elle en vue de leur transmission, et
- l'unité de contrôle (31, 32, 33) communique les signaux vocaux lui arrivant des dispositifs récepteurs radio (61, 62, 63) aux unités de distribution (21, 22, 23) en liaison vocale avec elle.

40. Procédé selon l'une quelconque des revendications 37 à 39, **caractérisé en ce que**
- l'unité de contrôle (31, 32, 33) est reliée à au moins un dispositif émetteur radio (51, 52, 53) et à au moins un dispositif émetteur radio de sauvegarde (52a, 53a) et
l'unité de contrôle (31, 32, 33) transmet les signaux vocaux, lorsque le dispositif émetteur radio (51, 52, 53) fonctionne, à celui-ci et transmet sinon les signaux vocaux au dispositif émetteur radio de sauvegarde (51b, 51c), et/ou
- l'unité de contrôle (31, 32, 33) est reliée à au moins un dispositif récepteur radio de sauvegarde (62a, 63a) et
l'unité de contrôle (31, 32, 33) distribue aux unités de distribution (21, 22, 23), lorsque le dispositif récepteur radio (61, 62, 63) qui lui est relié fonctionne, les signaux vocaux lui arrivant du dispositif récepteur radio (61, 62, 63) et distribue sinon aux unités de distribution (21, 22, 23) les signaux vocaux lui arrivant du dispositif récepteur radio de sauvegarde (61, 62, 63).

41. Procédé selon l'une quelconque des revendications 37 à 40, **caractérisé en ce que**
- au moins une unité de contrôle de rang supérieur (41, 42, 43) est présente dans le trajet du signal entre une unité de contrôle (31, 32, 33) et le dispositif émetteur radio (51, 52, 53), laquelle unité de contrôle de rang supérieur (41, 42, 43) est reliée à plusieurs unités de contrôle (31a-33a, 31b-33b), chacune de ces unités de contrôle (31a-33a, 31b-33b) étant reliée en particulier à des groupes de postes de travail (11-16),
- les signaux vocaux et signaux de commande PTT fournis par les unités de contrôle (31a-33a, 31b-33b) sont transmis à l'unité de contrôle de rang supérieur (41, 42, 43), laquelle unité de contrôle de rang supérieur (41, 42, 43) sélectionne, lors de la fourniture simultanée de signaux de commande PTT de plusieurs unités de contrôle (31a-33a, 31b-33b) qui lui sont reliées, l'une des unités de contrôle (31a-33a, 31b-33b) selon des critères prescrits ou pouvant être prescrits et retransmet les signaux vocaux de l'unité de contrôle sélectionnée au dispositif émetteur radio (51, 52, 53), et
- l'unité de contrôle de rang supérieur (41, 42, 43) retransmet, lors de la réception de signaux vocaux du dispositif récepteur radio (61, 62, 63), ces signaux vocaux aux unités de contrôle (31a-33a, 31b-33b) reliées à l'unité de contrôle de rang supérieur (41, 42, 43) et transmet un signal de réception SQU à ces unités de contrôle (31a-33a, 31b-33b).

42. Procédé selon l'une quelconque des revendications 37 à 41, **caractérisé en ce que** les unités de contrôle (31, 32, 33) ou les unités de contrôle de rang supérieur (41, 42, 43) communiquent les signaux vocaux leur arrivant ainsi que le signal de réception SQU respectivement associé simplement à une sélection de services de poste de travail, unités de distribution (21, 22, 23) ou unités de contrôle (31, 32, 33), les unités de contrôle (31, 32, 33) ou les unités de contrôle de rang supérieur (41, 42, 43) effectuant de préférence cette sélection sur la base de demandes faites préalablement par les postes de travail (11, 12, 13) ou par les unités de contrôle (31, 32, 33).

43. Procédé selon l'une quelconque des revendications 37 à 42, **caractérisé en ce que** les unités de contrôle (31, 32, 33) ou unités de contrôle de rang supérieur (41, 42, 43) reliées directement aux dispositifs récepteurs radio (61, 62, 63) sont reliées à chaque fois à plusieurs dispositifs récepteurs radio (61, 62, 63) et évaluent les signaux vocaux leur arrivant simultanément des dispositifs récepteurs radio (61, 62, 63) et élaborent un signal d'évaluation (B) qui indique en particulier
a) un classement des signaux vocaux arrivant selon la qualité du signal ou
b) le meilleur des signaux vocaux arrivant,
et les unités de contrôle de rang supérieur (41, 42, 43) ou unités de contrôle (31, 32, 33) reliées directement aux dispositifs récepteurs radio (61, 62, 63) retransmettent le signal d'évaluation (B) ainsi que les signaux vocaux individuels de tous les dispositifs récepteurs radio à l'unité de distribution (21, 22, 23) ou aux unités de contrôle (31, 32, 33).

44. Procédé selon la revendication 43, **caractérisé en ce que** l'unité de contrôle (31, 32, 33) communique le signal d'évaluation (B) à l'unité de distribution (21, 22, 23) et l'unité de distribution (21, 22, 23) sélectionne un des signaux vocaux communiqués par l'unité de contrôle respective (31, 32, 33) sur la base du signal d'évaluation (B) ou superpose plusieurs des signaux vocaux communiqués par l'unité de contrôle respective (31, 32, 33) sur la base du signal d'évaluation (B) et communique le signal sélectionné ou superposé au poste de travail (11, 12, 13) respectif.

45. Procédé selon l'une quelconque des revendications 37 à 44, **caractérisé en ce qu'**un groupe de couplage est prescrit, lequel comprend deux ou plusieurs unités de contrôle (31, 32, 33) et/ou unités de contrôle de rang supérieur (41, 42, 43),
dans lequel, à l'arrivée de signaux vocaux ainsi que d'un signal de réception SQU d'une unité de contrôle (31, 32, 33) ou unité de contrôle de rang supérieur (41, 42, 43) du groupe de couplage, ces signaux vocaux ainsi qu'un signal de commande PTT sont retransmis aux autres unités de contrôle (31, 32, 33) et/ou unités de contrôle de rang supérieur (41, 42, 43) du groupe de couplage,
dans lequel en particulier, à l'arrivée simultanée de signaux vocaux de deux unités de contrôle (31, 32, 33) ou unités de contrôle de rang supérieur (41, 42, 43) du groupe de couplage, l'une des unités de contrôle (31, 32, 33) ou unités de contrôle de rang supérieur (41, 42, 43) est sélectionnée selon des critères prescrits ou pouvant être prescrits et seuls les signaux vocaux de cette unité de contrôle (31, 32, 33) ou unité de contrôle de rang supérieur (41, 42, 43) sélectionnée sont retransmis aux autres unités de contrôle (31, 32, 33) ou unités de contrôle de rang supérieur (41, 42, 43) du groupe de couplage.

46. Procédé selon la revendication 45, **caractérisé en ce que**
- des critères pour la retransmission de données d'unités de contrôle (31, 32, 33) ou unités de contrôle de rang supérieur (41, 42, 43) individuelles sont prescrits à d'autres unités de contrôle (31, 32, 33) ou unités de contrôle de rang supérieur (41, 42, 43) du groupe de couplage, en particulier par l'un des postes de travail,
- à l'arrivée de signaux vocaux d'une unité de contrôle (31, 32, 33) ou unité de contrôle de rang supérieur (41, 42, 43) de ce groupe de couplage, des données vocales sont transmises selon ces critères prescrits aux unités de contrôle (31, 32, 33) ou unités de contrôle de rang supérieur (41, 42, 43) du groupe de couplage.

47. Procédé selon l'une quelconque des revendications 36 à 46, **caractérisé en ce que** les services de poste de travail s'exécutent sur des serveurs Proxy, en particulier sur des unités de distribution (21, 22, 23), dans un centre informatique (8 ; 8a, 8b) et communiquent entre eux avec les unités de contrôle (31, 32, 33) également agencées dans ce centre informatique par l'intermédiaire d'un réseau local (81; 81a, 81b), en particulier échangent des signaux vocaux.

48. Procédé selon l'une quelconque des revendications 36 à 47, **caractérisé en ce qu'**un poste de travail (11, 12, 13) comporte plusieurs unités d'entrée vocale (111, 121, 131) et/ou plusieurs unités de sortie vocale (112, 122, 132),
- dans lequel des signaux vocaux sont transmis par chaque unité d'entrée vocale (111, 121, 131) au service de poste de travail respectif par l'intermédiaire d'une liaison de données particulière, et
- dans lequel des signaux vocaux sont transmis par le service de poste de travail respectif à chaque unité de sortie vocale (112, 122, 132) par l'intermédiaire d'une liaison de données particulière.
